(19) Europäisches Patentamt
European Patent Office
Office européen des brevets

(11) Veröffentlichungsnummer: **0 125 650**
**B1**

(12) **EUROPÄISCHE PATENTSCHRIFT**

(45) Veröffentlichungstag der Patentschrift: **01.04.87**

(51) Int. Cl.⁴: **C 09 B 62/20,** D 06 P 1/38, C 07 D 239/30

(21) Anmeldenummer: **84105331.7**

(22) Anmeldetag: **11.05.84**

(54) **Reaktivfarbstoffe, Verfahren zu ihrer Herstellung und ihre Verwendung zum Färben und Bedrucken von Substraten.**

(30) Priorität: **14.05.83 DE 3317651**

(43) Veröffentlichungstag der Anmeldung: **21.11.84 Patentblatt 84/47**

(45) Bekanntmachung des Hinweises auf die Patenterteilung: **01.04.87 Patentblatt 87/14**

(84) Benannte Vertragsstaaten: **CH DE FR GB IT LI**

(56) Entgegenhaltungen:
**EP - A - 0 065 479**
**EP - A - 0 065 480**
**FR - A - 1 570 565**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Schündehütte, Karl Heinz, Prof. Dr., Klief 75, D-5090 Leverkusen 3 (DE)**
Erfinder: **Klauke, Erich, Dr., Eichendorffweg 8, D-5068 Odenthal (DE)**

**EP 0 125 650 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft neue Reaktivfarbstoffe der Formel

$$D\left[W-\underset{R}{N}-A\right]_n \qquad (I)$$

worin

D = Rest eines organischen Farbstoffs der Mono- oder Polyazo-, Metallkomplexazo-, Phthalocyanin-, Formazan-, Azomethin-, Dioxazin-, Phenazin-, Stilben-, Triphenylmethan-, Xanthen-, Thioxanthon- oder Nitroaryl-Reihe,
W = direkte Bindung oder Brückenglied,
R = Wasserstoff oder Alkyl,
A = Rest der Formel

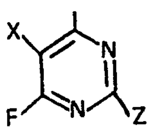

(II)

worin

X = Wasserstoff oder Chlor,
Z = $CCl_3$, $CHCl_2$ oder $CH_2Cl$ und
n = 1 oder 2.
Bevorzugt sind die folgenden Reste A:

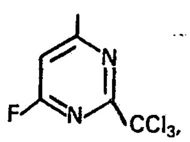

a

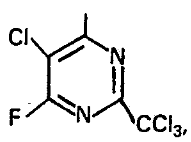

b

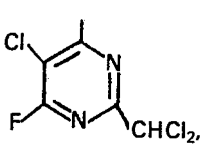

c

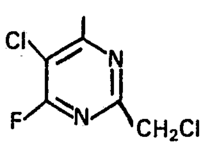

d

(III)

Für die im vorliegenden Anmeldungstext und insbesondere unter den Formeln I bis XXXIV aufgeführten Alkyl-, Aryl-, Aralkyl- und Hetarylreste gilt:

Unter Alkylgruppen werden dabei insbesondere solche mit 1–4 C-Atomen verstanden, die gegebenenfalls Substituenten aufweisen können, beispielsweise Halogen wie Cl und Br, OH, CN.

Unter Arylgruppen werden insbesondere Phenylreste verstanden, die gegebenenfalls Substituenten aufweisen, beispielsweise Halogen wie Cl und Br, $C_1$–$C_4$-Alkyl, $C_1$–$C_4$-Alkoxy, $C_1$–$C_4$-Alkylsulfonyl, $NO_2$, CN, $CF_3$, $SO_3H$, COOH.

Unter Aralkylresten werden insbesondere Benzylreste verstanden, die gegebenenfalls die für die Phenylreste genannten Substituenten aufweisen können.

Geeignete Hetarylreste sind beispielsweise Thienyl, Benzthienyl, Benzthiazolyl, Benzimidazolyl, Pyridyl, Pyrimidyl, Benzofuranyl, Indolyl, Chinolyl, Carbazyl, Chinoxalyl, Benztriazolyl.

Unter Alkoxyresten werden insbesondere solche mit 1–4 C-Atomen verstanden.

Unter Halogen wird insbesondere Chlor oder Fluor verstanden.

Geeignete Brückenglieder W sind beispielsweise:

$-\underset{R_1}{N}-Alkylen-$,

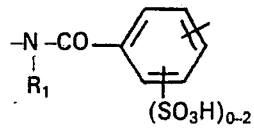

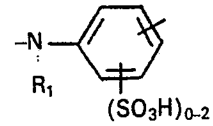

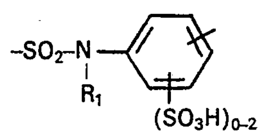

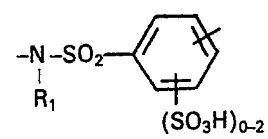

-O-Alkylen-,

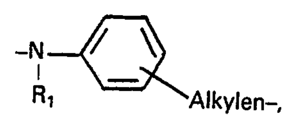

-S-Alkylen-, -Alkylen-, -Alkylen-CO-, -Alkylen-$SO_2$-.

Als Alkylenreste seien aufgeführt:

$-CH_2-$, $-CH_2-CH_2-$, $-\underset{CH_3}{C}H-CH_2-$, $-(CH_2)_3-$, $-(CH_2)_4-$.

Die vorliegende Erfindung betrifft weiterhin die Herstellung der Reaktivfarbstoffe der Formel (I) nach an sich bekannten Methoden:

a) entweder durch Kondensation von Farbstoffen der Formel

$$D-[-W-\underset{R}{N}-H]_n \qquad (IV)$$

wobei D, W, R und n die oben angegebene Bedeutung besitzen, mit n Mol des Halogenpyrimidins der Formel

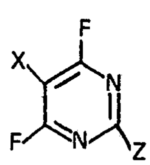

(V)

worin X und Z die oben angegebene Bedeutung haben.

Die Kondensationen der Ausgangskomponenten mit den substituierten Pyrimidinen der Formel V erfolgt in wässrigen oder organisch wässrigen Medien bei 0–70 °C in Anwesenheit von säurebindenden Mitteln wie Natriumcarbonat, Natriumbicarbonat oder verdünnter Natronlauge. Soll die Kondensation bzw. die Farbstoffsynthese direkt zu einer Farbstofflösung bzw. zu einer flüssigen Farbstoffpräparation führen, kann die Verwendung von Lithiumcarbonaten oder Lithiumhydroxyd vorteilhaft sein, gegebenenfalls zusammen mit Lösungsvermittlern und/oder stabilisierenden Puffersystemen. Andere Umwandlungsreaktionen der Farbstoffe oder deren Vorprodukte wie Metallisierungsreaktionen, Sulfierungen oder Einführung von Acylaminogruppierungen können im allgemeinen in beliebigen Stufen der Farbstoffsynthesen vorgenommen werden.

Die Reaktivfarbstoffe der Formel I eignen sich zum Färben und Bedrucken der verschiedensten Substrate wie Seide, Leder, Wolle, synthetischen Polyamidfasern, insbesondere aber cellulosehaltiger Materialien faseriger Struktur wie Leinen, Zellstoff, regenerierte Zellulose und vor allem Baumwolle. Sie eignen sich sowohl für das Ausziehverfahren als auch zum Färben nach den üblichen Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Die Reaktivfarbstoffe der Formel I zeichnen sich durch hohe Reaktivität und gutes Fixiervermögen aus. Sie können daher nach dem Ausziehverfahren bei niedrigen Färbetemperaturen eingesetzt werden und erfordern beim Klotz-Dämpf-Verfahren nur kurze Dämpfzeiten. Sie ergeben Färbungen mit guten Nass- und Lichtechtheiten und hoher Farbstärke und bemerkenswert hoher Faser-Farbstoff-Bindungsstabilität, sowohl im sauren und alkalischen Bereich als auch unter oxidativen Einflüssen.

Die Herstellung der Monoazo- oder Disazozwischenverbindungen ist in den nachfolgenden Ausführungs-Beispielen nicht in allen Fällen beschrieben, die Produkte sind jedoch nach üblichen, bekannten Verfahren leicht zugänglich.

Als Halogenpyrimidin-Ausgangsstoffe der Formel V kommen für die Herstellung der Reaktivfarbstoffe der Formel I vor allem die folgenden in Betracht:
2-Chlormethyl-4,6-difluor-5-chlorpyrimidin
2-Dichlormethyl-4,6-difluor-5-chlorpyridin
2-Trichlormethyl-4,6-difluor-5-chlorpyrimidin
2-Trichlormethyl-4,6-difluor-pyrimidin.

Die vorliegende Erfindung betrifft weiterhin neue Verbindungen der Formel

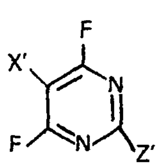

(IV)

worin
X' = Wasserstoff oder Chlor und
Z' = $CCl_3$, $CHCl_2$ oder $CH_2Cl$
mit der Massgabe, dass, falls X' für Chlor steht, Z' für $CHCl_2$ oder für $CH_2Cl$ stehen muss.

Die vorliegende Erfindung betrifft weiterhin ein Verfahren zur Herstellung von Verbindungen der Formel

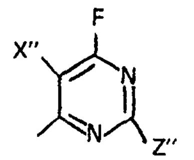

(IVa)

worin
X" = Wasserstoff oder Chlor und
Z" = $CCl_3$ oder $CH_2Cl$,
welches dadurch gekennzeichnet ist, dass man Chlorpyrimidine der Formel

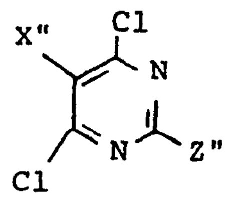

(V)

worin X" und Z" die oben angegebene Bedeutung besitzen, in einem inerten Lösungsmittel, insbesondere in Tetramethylensulfon mit mindestens der doppelt molaren Menge eines Alkalifluorids während 2 bis 10 Stunden bei 140 bis 210 °C, insbesondere bei 160 bis 200 °C umsetzt und die gewünschte Komponente vorzugsweise destillativ abtrennt.

Die vorliegende Erfindung betrifft weiterhin ein Verfahren zur Herstellung von 2-Dichlormethyl-4,6-difluor-5-chlor-pyrimidin, welches dadurch gekennzeichnet ist, dass man 2-Dichlormethyl-4,5,6-trichlorpyrimidin mit wasserfreier Fluorwasserstoffsäure bei erhöhtem Druck unter erhöhter Temperatur umsetzt und dabei die Temperatur auf 120 bis 160 °C und den Innendruck durch gelegentliches Entspannen der entstehenden Chlorwasserstoffsäure bei 20 bis 40 bar, insbesondere bei 25 bar hält. Das im Gemisch mit 2-Dichlormethyl-4-fluor-5,6-dichlor-pyrimidin entstehende 2-Dichlormethyl-4,6-difluor-5-chlorpyrimidin wird schliesslich durch fraktionierte Destillation abgetrennt.

Die Herstellung der Chlorpyrimidine V sowie von 2-Dichlormethyl-4,5,6-trichlorpyrimidin ist z.B. durch Umsetzung der entsprechenden 2-Methylpyrimidine mit Chlor oder chlorabgebenden Mitteln bei höherer Temperatur möglich.

2-Methyl-4, (5), 6-di- bzw. trichlorpyrimidin wird aus 2-Methyl-4-chlor-6-hydroxypyrimidin durch Chlorierung erhalten.

Bevorzugte Farbstoffe der Formel (I) sind solche mit 1 bis 6 Sulfogruppen.

Geeignete Farbstoffreste D bzw. den Farbstoffen (I) zugrunde liegende aminogruppenhaltige Farbstoffe sind in der Literatur in sehr grosser

Zahl beschrieben. Beispielhaft erwähnt seien hier:

Belgische Patentschriften: 606 947, 617 435; 567 435, 701 273, 683 734; 683 573; 693 749; 708 003; 707 307;

Deutsche Auslegeschriften: 1 242 553; 1 212 655, 1 225 322;

Deutsche Offenlegungsschriften: 2 633 255; 2 103 299; 2 305 206; 2 418 283; 2 623 224; 1 809 388; 1 912 178; 2 057 867; 1 769 205; 2 107 427; 2 303 601; 2 600 490.

Schweizer Patentschriften: 536 353; 521 403;

Britische Patentschriften: 1 299 881; 1 300 742 sowie Venkataraman: The Chemistry of Synthetic Dyes, Band VI, Kapitel II, Seite 211 bis 325, New York, London; 1972.

Besonders wertvolle Farbstoffe dieser Reihe sind wasserlösliche Azofarbstoffe, und insbesondere solche, die Sulfonsäure- und/oder Carbonsäuregruppen aufweisen. Dabei besitzen aber auch sulfon- und carbonsäuregruppen- freie reaktive Dispersionsfarbstoffe der Azoreihe Interesse. Die Azofarbstoffe können sowohl metallfrei als auch metallhaltig sein, wobei unter den Metallkomplexen die Kupfer-, Chrom- und Kobaltkomplexe bevorzugtes Interesse haben.

Wichtige Azofarbstoffe sind beispielsweise solche der Benzol-azo-naphthalinreihe, der Benzol-azo -1- phenyl -5- pyrazolonreihe, der Benzol-azo-benzolreihe, der Naphthalin-azo-benzolreihe, der Benzol-azo-aminonaphthalinreihe, der Naphthalin-azo-naphthalinreihe, der Naphthalin-azo -1- phenylpyrazolon -5- Reihe, der Benzol-azo-pyridonreihe, der Benzol-azo-aminopyridinreihe, der Napthalin-azo-pyridonreihe, der Naphthalin-azo-aminopyridinreihe, und der Stilbenazo-benzolreihe, wobei auch hier die sulfonsäuregruppenhaltigen Farbstoffe bevorzugt sind. Im Falle von Metallkomplexazofarbstoffen befinden sich die metallkomplexgebundenen Gruppen vorzugsweise in den o-Stellungen zur Azogruppe, z.B. in Form von o,o'-Dihydroxy-, o-Hydroxy-o'-carboxy-, o-Carboxy-o'-amino- und o-Hydroxy-o'-amino-azogruppierungen.

Folgende Farbstoffe der Struktur

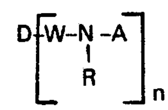

kommen insbesonders in Betracht, wobei W, R, n und A die in Formel (I) angegebene Bedeutung besitzen:

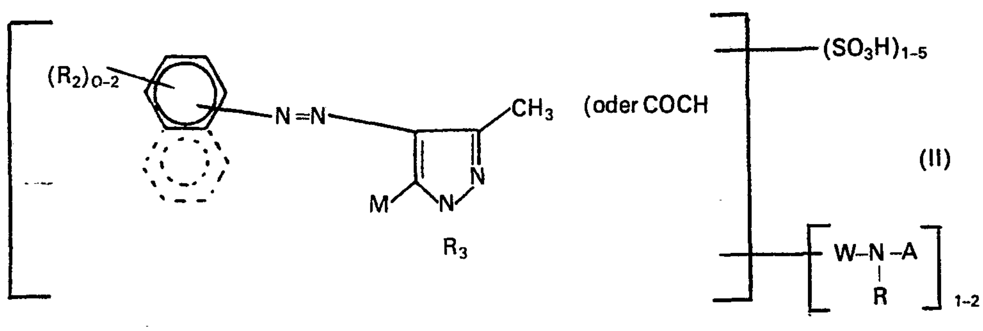

(II)

worin

M = OH, $NH_2$, $NR_3R_4$, $OR_3$

$R_2$ = Alkyl, Alkoxy, Halogen, insbesondere Cl,

$R_3$ und $R_4$ = Wasserstoff, Alkyl, Aryl, Hetaryl, Aralkyl, oder wobei $R_3$ und $R_4$ zusammen für gegebenenfalls durch NH oder O unterbrochenes $C_4$-$C_6$-Alkylen stehen.

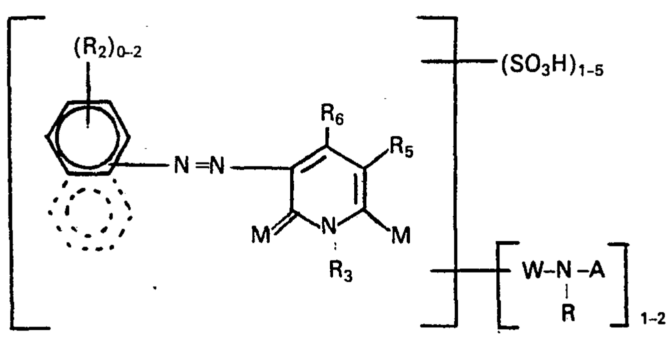

(III)

$R_5$ = $-COOR_3$, $-CONR_3R_4$, $-CN$, $-CH_2-SO_3H$, $SO_3H$ oder $-CH_2-NR_3R_4$

$R_6$ = $-M$, $-R_3$ oder $-R_5$

M' = O, $NR_3$

wobei $R_3$ und $R_4$ = Wasserstoff, Alkyl, Aryl, Hetaryl, Aralkyl oder wobei $R_3$ und $R_4$ zusammen für gegebenenfalls durch NH oder O unterbrochenes $C_4$-$C_6$-Alkylen stehen.

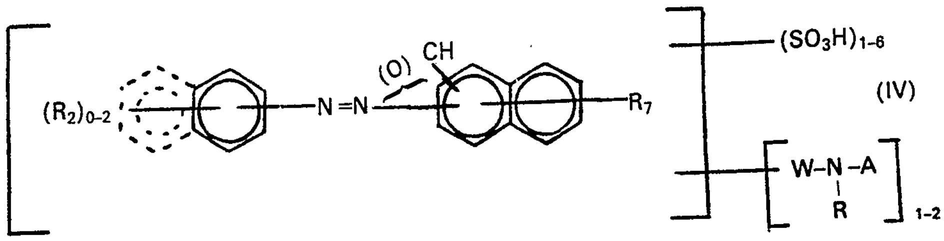

(IV)

$R_7$ = Wasserstoff, $-NR_3-CO-R_8$, $-NR_3-SO_2-R_8$
o = ortho-ständige Stellung der jeweiligen Reste wobei

$R_3$ = Wasserstoff, Alkyl, Aryl, Hetaryl, Aralkyl,
$R_8$ = Alkyl, Aryl, Hetaryl oder Aralkyl

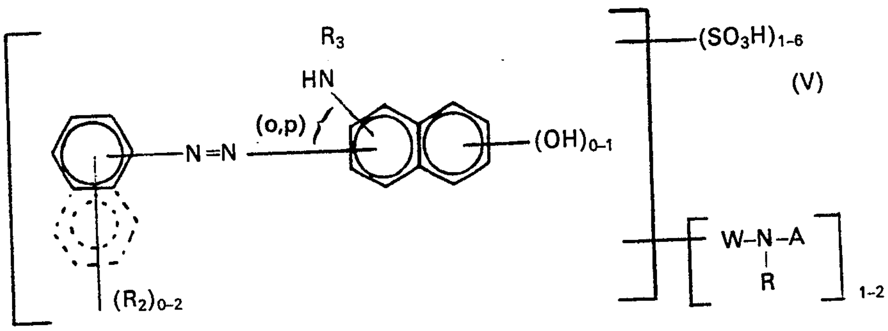

(V)

(o, p) = ortho- oder paraständige Stellung der jeweiligen Reste wobei
$R_2$ = Alkyl, Alkoxy, Halogen (insbesondere Cl)

$R_3$ = Wasserstoff, Alkyl, Aryl, Hetaryl oder Aralkyl.

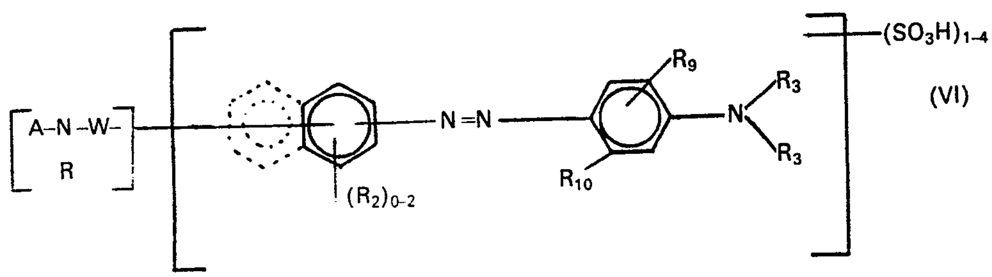

(VI)

$R_9$ und $R_{10}$ = Wasserstoff, $R_8$, $-OR_3$, Halogen, $-NR_3R_4$, $-COOR_3$, $-NR_3-CO-R_4$, $-O-CO-R_4$, $-NR_3-SO_2-R_4$, $-O-SO_2-R_4$, $-NR_3-CO-NR_3R_4$ wobei
$R_3$ und $R_4$ = Wasserstoff, Alkyl, Aryl, Hetaryl, Aralkyl oder wobei $R_3$ und $R_4$ zusammen für gegebenenfalls durch NH oder O unterbrochenes $C_4-C_6$-Alkylen stehen und
$R_8$ = Alkyl, Aryl, Hetaryl oder Aralkyl.

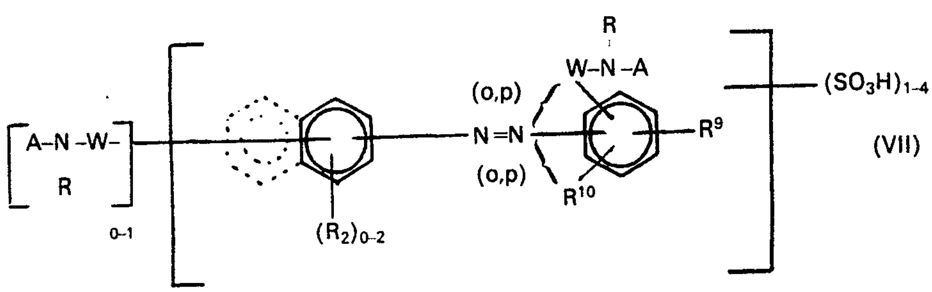

(VII)

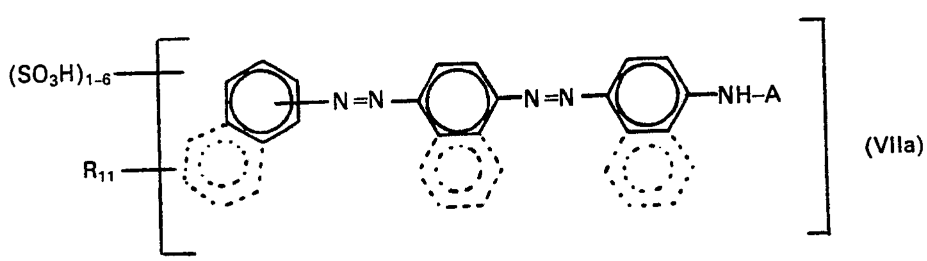

(VIIa)

$R_{11}$ = $R_9$, $C_1-C_4$-Alkyl

wobei
(o, p) = ortho- oder paraständige Stellung der jeweiligen Reste

$R_2$ = Alkyl, Alkoxy, Halogen, und wobei $R_9$ und $R_{10}$ die unter Formel VI angegebene Bedeutung haben.

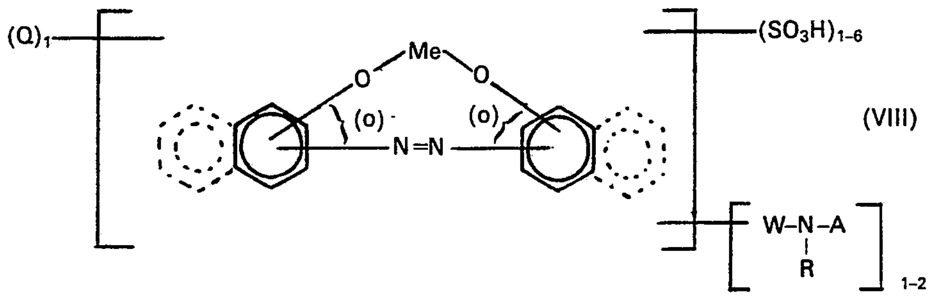

(VIII)

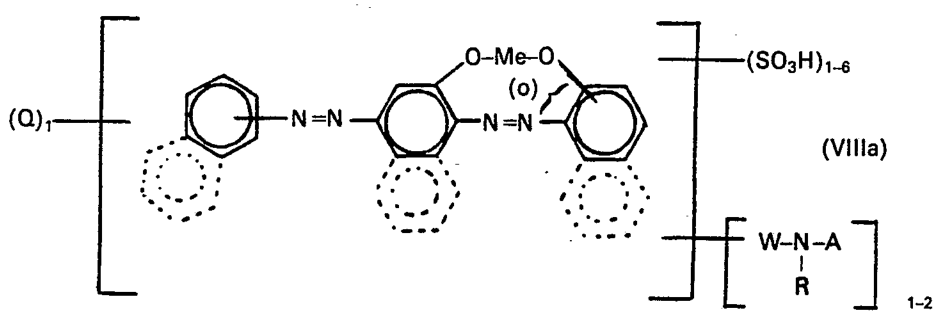

(VIIIa)

wobei
(o) = orthoständige Stellung der jeweiligen Reste
Me = Cu, Cr
Q = Alkyl, Alkoxy, Halogen, $-NO_2$, Acylamino

wie $CH_3-CO-NR_3-$, $-COOR_3$, $-CONR_3R_4$, $-SO_2-NR_3R_4$
l = 0–4
und wobei $R_3$ und $R_4$ die unter Formel (VI) angegebene Bedeutung haben

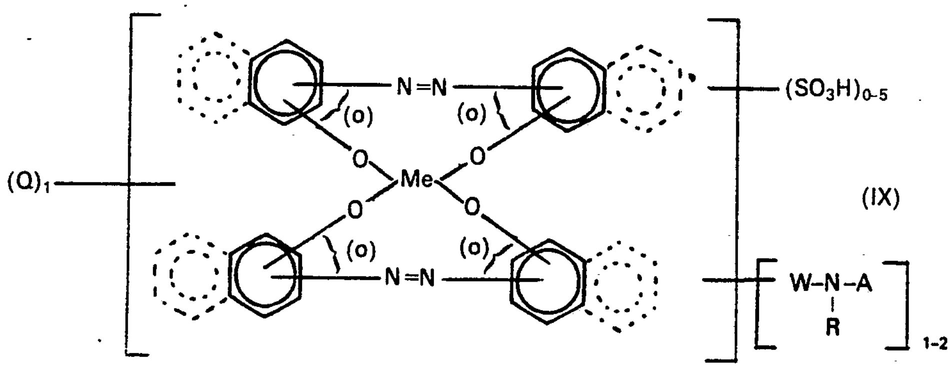

(IX)

Me = Co, Cr
l = 0–8
(o) = orthoständige Stellung der Substituenten
Q = Alkyl, Alkoxy, Halogen, $NO_2$, Acylamino

wie $CH_3-CO-NR_3-$, $-COOR_3$, $-CONR_3R_4$, $-SO_2-NR_3R_4$
und wobei $R_3$ und $R_4$ die unter Formel (VI) angegebene Bedeutung haben.

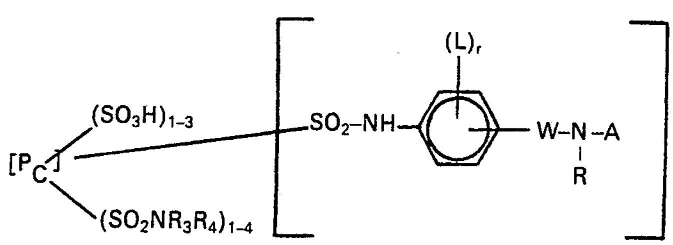

(X)

$P_C$ = Cu-/Ni-Phthalocyanin-Rest
L = Substituent, insbesondere Sulfo oder Carboxy
r = 0–4 und wobei
$R_3$ und $R_4$ die unter Formel (VI) angegebene Bedeutung haben.

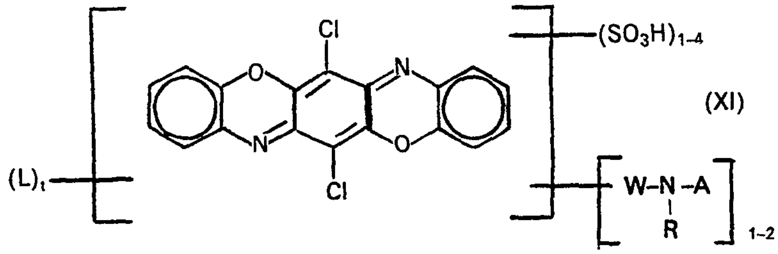

L = Substituent, insbesondere Halogen, $C_{1-4}$-Alkyl, $C_{1-4}$-Alkoxy oder Carboxy
t = 0 bis 3

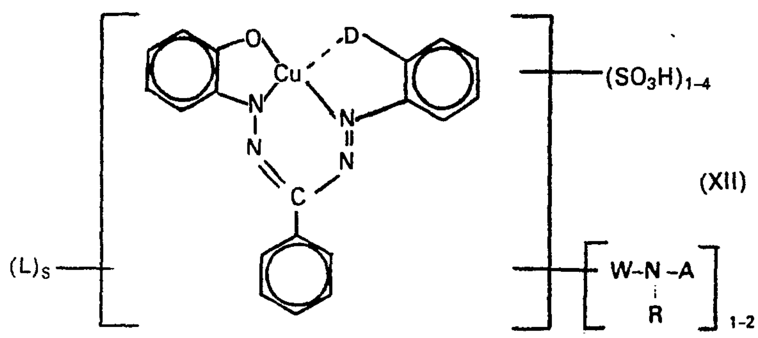

L = Substituent, insbesondere Halogen, $C_{1-4}$-Alkyl, $C_{1-4}$-Alkoxy, Alkylsulfonyl, Aminosulfonyl, unkondensierte Phenylreste oder Carboxy
S = 0–6
D = zur Komplexbildung befähigte Gruppe wie –OH, –COOH oder $-SO_3H$.

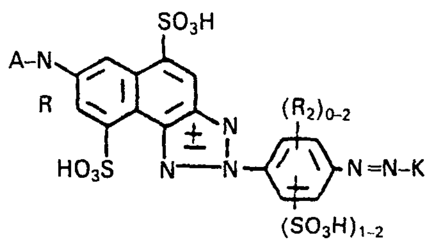

(XIII)

worin
K = Rest einer Kupplungskomponente, bevorzugt einer Kupplungskomponente der cyclischen Enolreihe, wie der Pyridon- oder der Pyrimidonreihe, $R_2$ = Alkyl, Alkoxy, Halogen (insbesondere Cl)

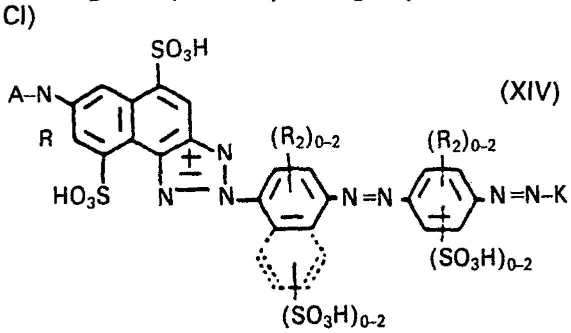

$R_2$ = Alkyl, Alkoxy, Halogen (insbesondere Cl)
K = Rest einer Kupplungskomponente

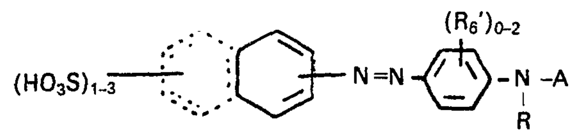

(XV)

$R'_6$ = Wasserstoff, Alkyl, Aryl, Hetaryl, Aralkyl, $-COOR_3$, $-CONR_3R_4$, $-SO_3H$, –OH, $-NH_2$, $-NR_3R_4$, $-OR_3$, wobei
$R_3$ und
$R_4$ = Wasserstoff, Alkyl, Aryl, Hetaryl, Aralkyl

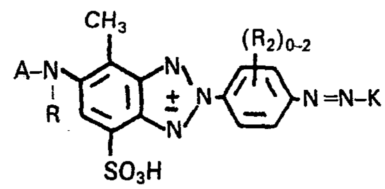

(XVI)

$R_2$ = Alkyl, Alkoxy, Halogen (insbesondere Cl)
K = Rest einer Kupplungskomponente

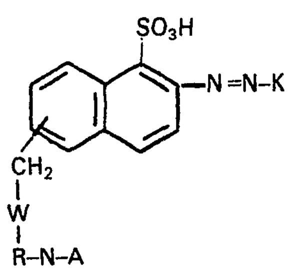

(XVII)

K = Rest einer Kupplungskomponente

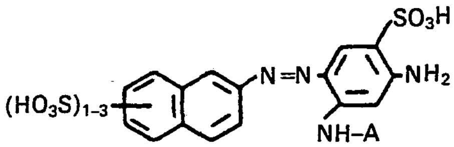

(XVIIa)

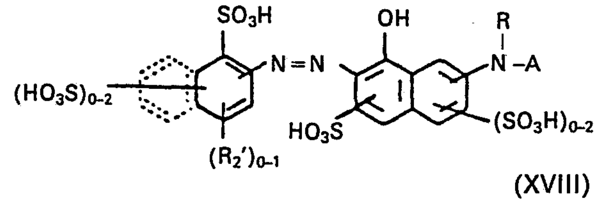

(XVIII)

worin

$R'_2$ = Alkyl, Alkoxy, Hydroxy, Halogen, ein Arylazorest oder ein Arylazomethinrest.

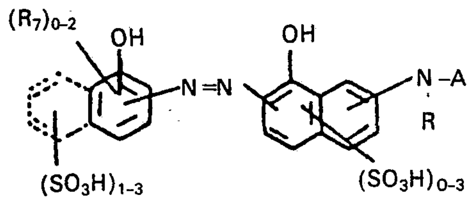

(XIX)

$R_7$ = Wasserstoff, $NR_3$–$COR_8$, $-NR_3SO_2$–$R_8$ wobei

$R_3$ = Wasserstoff, Alkyl, Aryl, Hetaryl, Aralkyl,
$R_8$ = Alkyl, Aryl, Hetaryl oder Aralkyl

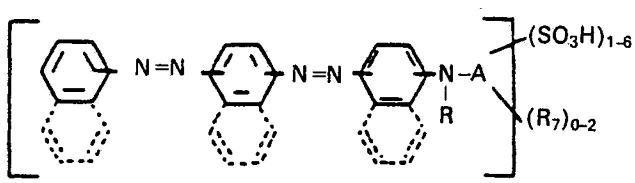

(XX)

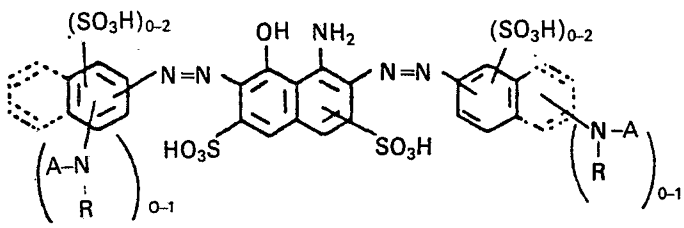

(XXI)

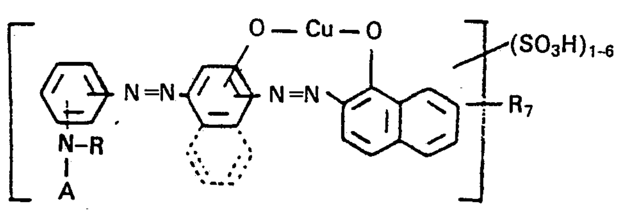

(XXII)

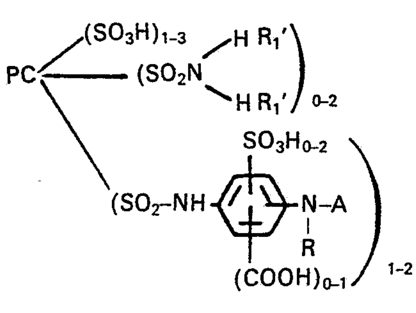

(XXIII)

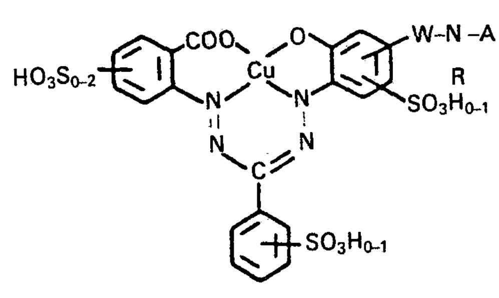

(XXIV)

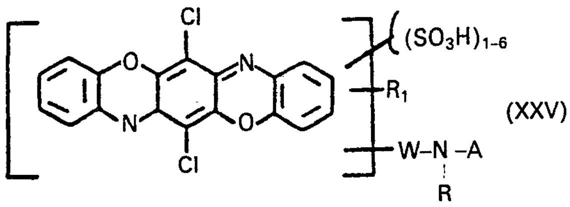

(XXV)

worin

$R_7$ = Wasserstoff, $-NR_3-COR_8$, $-NR_3-SO_2-R_8$

wobei

$R_3$ = Wasserstoff, Alkyl, Aryl, Hetaryl, Aralkyl

$R_8$ = Alkyl, Aryl, Hetaryl, Aralkyl und worin

$R_1$ = Wasserstoff oder Alkyl und

$R'_1$ = Alkyl.

Folgende Strukturen sind besonders bevorzugt:

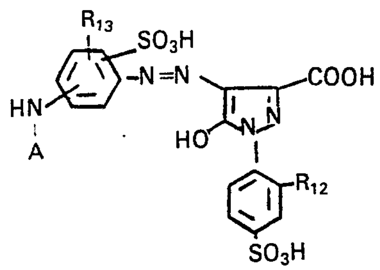

(XXVI)

wobei

$R_{12}$ = H, $CH_3$, Cl

$R_{13}$ = H, $CH_3$, Cl

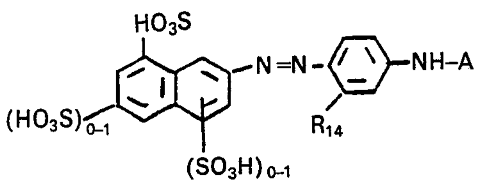

(XXVII)

wobei

$R_{14}$ = H, $CH_3$, $OCH_3$, $NHCOCH_3$, $NH-CO-NH_2$

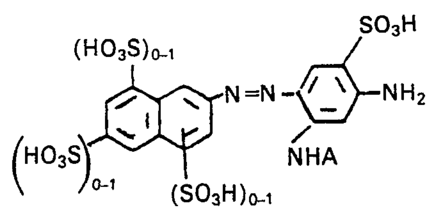

(XXVIII)

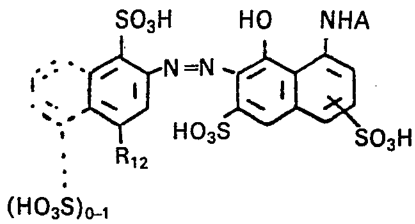

(XXIX)

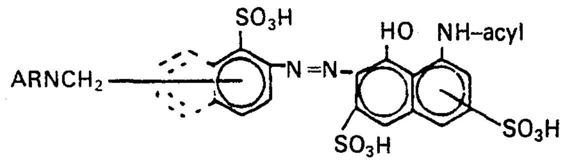

(XXX)

worin

Acyl = Acylrest, insbesondere Formyl, $C_1-C_4$-Alkylcarbonyl, Arylcarbonyl und bevorzugt gegebenenfalls durch $C_1-C_4$-Alkyl, OH, $SO_3H$, COOH substituiertes Phenylcarbonyl.

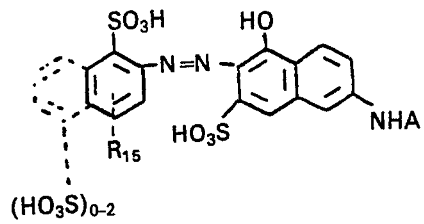

(XXXI)

$R_{15}$ = $R_{13}$, $CH_3$, $C_1-C_4$-Alkoxy, Acylamino

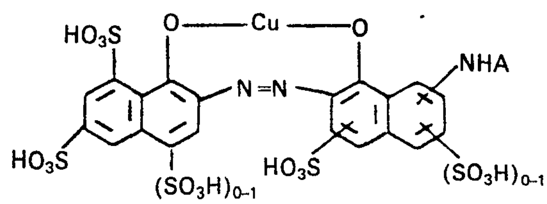

(XXXII)

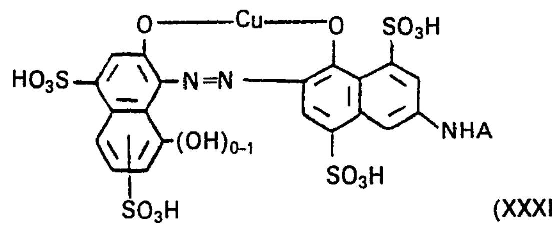

(XXXIII)

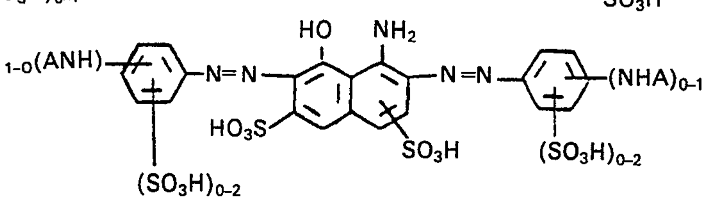

(XXXIV)

wobei in der Formel XXIV der Rest $A\underset{\substack{|\\H}}{N}-$ im Molekül nur einmal vorhanden sein soll.

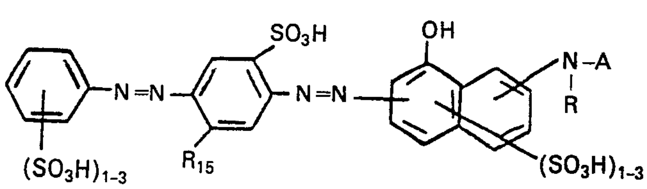

(XXXV)

In der FR-A 1 570 565 werden konstitutionell nahe vergleichbare Azo-Farbstoffe mit dem Reaktivrest der Formel

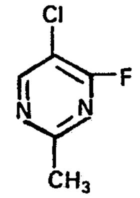

beschrieben, die sich insbesondere zum Färben von Baumwolle eignen.

Herstellungsbeispiele

Beispiel 1a

Herstellung von

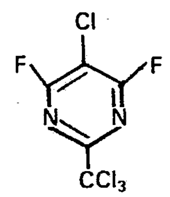

In einem Rührgefäss mit Rührer und Rückflusskühler werden 240 ml Tetramethylensulfon wasserfr., 84 g Natriumfluorid und 200 g 2-Trichlormethyl-4,5,6-trichlorpyrimidin vorgelegt. In einer Stunde heizt man bis auf 170 °C und rührt bei dieser Temperatur 3 Stunden nach. Durch Destillation und Redestillation isoliert man anschliessend 137 g 2-Trichlormethyl-4,6-difluor -5- chlorpyrimidin als wasserhelle Flüssigkeit vom Kp. 104–6°/18 mbar, $n_D^{20}$ : 1,5218. Das entspricht einer Ausbeute von 76,9% der Theorie.

Beispiel 1b

Herstellung von

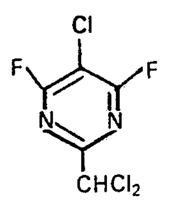

In einer Druckapparatur aus rostfreiem Stahl werden 270 g 2-Dichlormethyl-4,5,6-trichlorpyrimidin (90%ig) mit 400 ml HF wasserfr. vorgelegt. Man heizt auf 140 °C und hält bei dieser Temperatur den Innendruck durch gelegentliches Entspannen der entstehenden HCl bei 25 bar. Nach beendeter HCl-Entwicklung wird abgekühlt, der Restdruck entspannt und anschliessend der Autoklaveninhalt durch Destillation aufgearbeitet.

Man erhält 213 g eines Rohdestillates vom Brechungsindex 1,5350. Durch fraktionierte Redestillation erhält man

55 g 2-Dichlormethyl-4,6-difluor -5- chlorpyrimidin als Flüssigkeit vom Kp.: 92°/17 mbar, $n_D^{20}$ : 1,5150 und

71 g 2-Dichlormethyl -4- fluor-5,6-dichlorpyrimidin vom Kp.; 120°/18 mbar, $n_D^{20}$ : 1,5510.

Beispiel 1c

Herstellung von

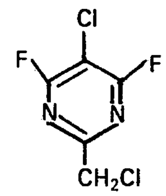

232 g 2-Chlormethyl-4,5,6-trichlorpyrimidin (78%ig) werden in 360 ml Tetramethylensulfon mit 126 g NaF 4 Std. bei 170° und 4 h/190° fluoriert.

Man erhält durch destillative Aufarbeitung

74 g 2-Chlormethyl-4,6-difluor -5- chlorpyrimidin Kp.: 83–5°/20 mbar, $n_D^{20}$ : 1,5010 aus dem Nachlauf lässt sich auch die monofluorierte Zwischenstufe des 2-Chlormethyl -4- fluor-5,6-dichlorpyrimidin gewinnen:

Kp.: 112°/14 mbar, $n_D^{20}$ : 1,5414.

Beispiel 2

19 Teile 1,3-Diaminobenzol -4- sulfonsäure werden in 250 Teilen Wasser angerührt und durch Zugabe von ca. 40 ml einer 20%igen Natriumcarbonatlösung gelöst.

In diese Lösung werden bei ca. 35–40° 27 Teile 2-Trichlormethyl-4,6-difluor -5- chlorpyrimidin gegeben. Bei 30–40° wird unter kräftigem Rühren solange die freiwerdende Flussäure durch Zutropfen einer Natriumcarbonatlösung neutralisiert bis sich der pH-Wert von 6–7 nicht mehr ändert. Das so erhaltene Kondensationsprodukt der Formel

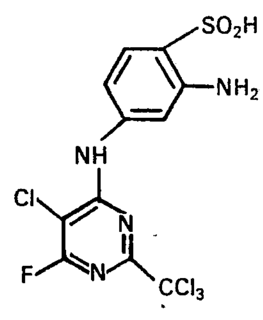

wird nach Zugabe von Eis und 7 Teilen Natriumnitrit mit 28 Teilen Salzsäure direkt diazotiert. In diese Suspension der Diazoniumverbindung werden 30 Gew.-Teile 1-[2'-Methyl-4'-sulfophenyl] -3- carboxypyrazolon-(5) gegeben und die Kupplung durch Zugabe von ca. 80 Teile einer Natriumcarbonatlösung (20%ig) zu Ende geführt. Nach beendeter Kupplung wird die Abscheidung des Farbstoffs durch Zugabe von 200 Teilen Kaliumchlorid oder Natriumchlorid vervollständigt, anschliessend wird durch Filtration isoliert und bei 50–80 °C getrocknet. Man erhält ein gelbes Pulver, das Baumwolle in grünstichig gelben Tönen anfärbt bzw. druckt.

Die so erhaltenen Drucke oder Färbungen besitzen hervorragende Nassechtheiten.

Verwendet man anstelle von 2-Trichlormethyl-4,6-difluor -5- chlorpyrimidin die entsprechenden Mengen 2-Dichlormethyl-4,6-difluor -5-chlorpyrimidin, 2-Trichlormethyl-4,6-difluorpyrimidin, 2-Chlormethyl-4,6-difluor -5- chlorpyrimidin und verfährt analog wie oben beschrieben, so erhält man Farbstoffe, die Wolle und Baumwolle in grünstichig gelben Tönen färben.

Weitere gelbe Farbstoffe mit ähnlichen Eigenschaften erhält man, wenn in diesem Beispiel das als Kupplungskomponente eingesetzte 1-[2'-Methyl-4'-sulfophenyl] -3- carboxypyrazolon-(5) beispielsweise durch folgende Kupplungskomponenten ersetzt wird.

Acetessigsäure-[2'-methoxy-5'-methyl-4'-sulfonsäure]-anilid
Acetessigsäure-[2'-methoxy-5'-sulfonsäure]-anilid
3-Methylpyrazolon-(5)
1,3-Dimethylpyrazolon
1-(2',5'-disulfophenyl)-3-carboxypyrazolon-(5)
1-(2', 5'-dichlor-4'-sulfophenyl) -3- methylpyrazolon-(5)
1-(2'-Chlor-5'-sulfophenyl)-3-methylpyrazolon.

Beispiel 3

Die Lösung von 21 Teilen 1,3-Diamino -2-methylbenzol -5- sulfonsäure als Natriumsalz in 300 Teilen Wasser wird bei 35–45° unter kräftigem Rühren mit 27,0 Teilen 2-Trichlormethyl-4,6-difluor -5- chlorpyrimidin kondensiert. Die freiwerdende Flussäure wird dabei durch Zutropfen einer 20%igen Sodalösung neutralisiert. Nach beendeter Kondensation wird das Umsetzungsprodukt durch Zugabe von Eis, 7 Teilen Natriumnitrit und 28 Teilen Salzsäure bei 5–10° direkt diazotiert und anschliessend durch Zugabe von 30 Gew.-Teilen 1-(2'-Methyl-4'-sulfophenyl)-3-carboxypyrazolon-(5) und ca. 80 Teilen einer 20%igen Sodalösung zum Azofarbstoff der Formel

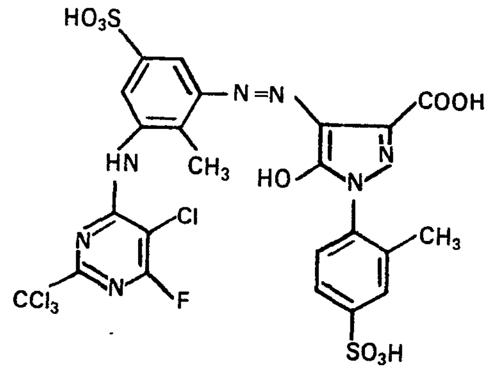

gekuppelt. Die Abscheidung des Farbstoffs wird durch Aussalzen mit 150 Teilen Natriumchlorid vervollständigt. Anschliessend wird durch Filtration isoliert und bei 50–100° getrocknet. Man erhält ein gelbes Pulver, das zum Bedrucken und Färben von Baumwolle hervorragend geeignet ist.

Ersetzt man in diesem Beispiel die Kupplungskomponente durch die im Beispiel 2 angegebenen Kupplungskomponenten, so werden ebenfalls gelbe Reaktivfarbstoffe mit sehr guten färberischen Eigenschaften erhalten.

Verwendet man anstelle von 2-Trichlormethyl-4,6-difluor -5- chlorpyrimidin die entsprechenden Mengen 2-Dichlormethyl-4,6-difluor -5-chlorpyrimidin, 2-Trichlormethyl-4,6-difluorpyrimidin, 2-Chlormethyl-4,6-difluor -5- chlorpyrimidin und verfährt analog wie oben beschrieben, so erhält man Farbstoffe die Wolle und Baumwolle in gelben Tönen färben.

Beispiel 4

19 Teile 1,4-Diaminobenzol -2- sulfonsäure werden als Natriumsalz in 250 Teilen Wasser bei 20 °C gelöst und mit 27 Teilen 2-Trichlormethyl-4,6-difluor -5- chlorpyridin bei dieser Temperatur selektiv kondensiert. Durch Zugabe von 30 Teilen einer 20%igen Sodalösung wird dabei ein pH-Wert von 5,8–6 eingehalten.

Nach beendeter Kondensation wird die Suspension durch Zugabe von Eis, 7 Teilen Natriumnitrit und 28 Teilen Salzsäure diazotiert.

Die Suspension der Diazoniumverbindung wird mit einer Lösung des Natriumsalzes von 29 Teilen 1-(4'-Sulfophenyl) -3- carboxypyrazolon-(5) in 150 Teilen Wasser versetzt und die Kupplung durch Zugabe von 50 Teilen einer 20%igen Sodalösung zu Ende geführt. Danach wird mit 200 Teilen Kaliumchlorid ausgesalzen, isoliert und getrocknet. Man erhält so ein gelbes Pulver, das Baumwolle in goldgelben Farbtönen färbt. Der Farbstoff entspricht der Formel

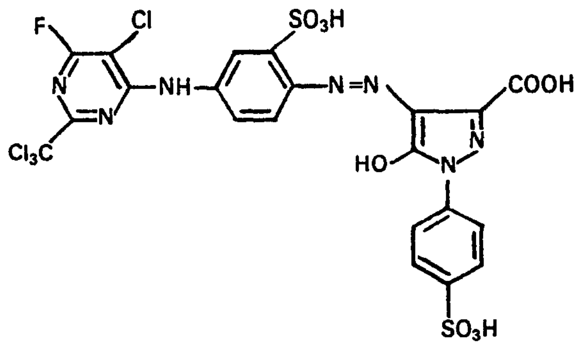

Ähnliche Farbtöne werden erhalten, wenn in diesem Beispiel das 1-(4'-Sulfophenyl) -3- carboxypyrazolon-(5) durch äquimolare Mengen der im Beispiel 2 angegebenen Pyrazole ersetzt wird.

Verwendet man in den obigen Farbstoffbeispielen anstelle von 2-Trichlormethyl-4,6-difluor -5- chlorpyrimidin die entsprechenden Mengen 2-Dichlormethyl-4,6-difluor -5- chlorpyrimidin, 2-Trichlormethyl-4,6-difluorpyrimidin, 2-Chlormethyl-4,6-difluor -5- chlorpyrimidin und verfährt analog wie oben beschrieben, so erhält man Farbstoffe, die Wolle und Baumwolle in gelben Tönen färben.

Beispiel 5

19 Teile 1,3-Diaminobenzol -6- sulfonsäure werden wie in Beispiel 2 beschrieben mit 27 Teilen 2-Trichlormethyl-4,6-difluor -5- chlorpyrimidin zur Reaktion gebracht, diazotiert und mit 22

Teilen 1,4-Dimethyl -6- oxy -2- pyridon -3- sulfonsäure gekuppelt. Der entstehende Farbstoff der Formel

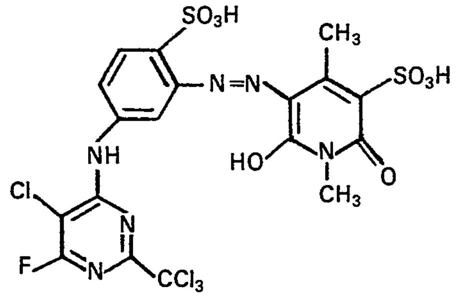

wird ausgesalzen und getrocknet. Er färbt Wolle und Baumwolle in reinen grünstichig gelben Nuancen.

Weitere gelbe Farbstoffe erhält man, wenn man die in der folgenden Tabelle Spalte 1 genannten Diazokomponenten mit 2-Trichlormethyl-4,6-difluor -5- chlorpyrimidin umsetzt und danach mit den in Spalte 2 genannten Kupplungskomponenten kuppelt.

| Beispiel | Diazokomponente | Kupplungskomponente | Farbton |
|---|---|---|---|
| 6 | 1,3-Diaminobenzol-4- sulfonsäure | 1-Ethyl -4- methyl -6- oxy -2- pyridon -3- carbonamid | grünstichig gelb |
| 7 | do. | 1-Ethyl -4- methyl -6- oxy -2- pyridon -3- sulfonsäure | do. |
| 8 | do. | 1-Ethyl -4- methyl -6- oxy -2- pyridon -3- methansulfonsäure | do. |
| 9 | do. | 1,4-Dimethyl -6- oxy -2- pyridon -3- methansulfonsäure | do. |
| 10 | do. | 1-(2'-Ethylsulfo) -4- methyl -6- oxy-pyridon -3- carbonamid | do. |
| 11 | 1,5-Diaminobenzol-2,4-di-sulfonsäure | 1-Ethyl -4- methyl -6- oxy -2- pyridon -3- carbonamid | do. |
| 12 | do. | 1-Ethyl -4- methyl -6- oxy -2- pyridon -3- sulfonsäure | do. |
| 13 | do. | 1-Ethyl -4- methyl -6- oxy -2- pyridon -3- methansulfonsäure | |
| 14 | do. | 1,4-Dimethyl -6- oxy -2- pyridon -3- methansulfonsäure | do. |
| 15 | do. | 1(2'-Ethylsulfo) -4- methyl -6- oxy-pyridon -3- carbonamid | do. |
| 16 | do. | 1,4-Dimethyl -6- oxy -2- pyridon -3- sulfonsäure | gelb |
| 17 | 1,4-Diaminobenzol - 4-sulfonsäure | do. | do. |
| 18 | do. | 1-Ethyl -4- methyl -6- oxy -2- pyridon -3- carbonamid | do. |
| 19 | do. | 1-Ethyl -3- methyl -6- oxy -2- pyridon -3- sulfonsäure | do. |
| 20 | do. | 1-Ethyl -4- methyl -6- oxy -2- pyridon -3- methansulfonsäure | do. |
| 21 | do. | 1,4-Dimethyl -6- oxy -2- pyridon -3- methansulfonsäure | do. |
| 22 | do. | 1(2'-Ethylsulfo) -4- methyl -6- oxy-pyridon -3- carbonamid | do. |

Verwendet man in den Beispielen 5–22 anstelle von 2-Trichlor-4,6-difluor -5- chlorpyrimidin die entsprechenden Mengen 2-Dichlormethyl-4,6-difluor -5- chlorpyrimidin, 2-Trichlormethyl-4,6-difluorpyrimidin, 2-Chlormethyl-4,6-difluor -5-chlorpyrimidin und verfährt analog wie oben beschrieben, so erhält man Farbstoffe die Wolle und Baumwolle in gelben bis grünstichig gelben Tönen färben.

Beispiel 23

20,2 Teile 3-Amino-N-methylbenzylamin -4-sulfonsäure werden in 200 ml Wasser heiss gelöst, auf 0,5 °C abgekühlt und mit 35 ml konzentrierter Salzsäure versetzt. Man diazotiert mit 7 Teilen Natriumnitrit und tropft die Suspension des Diazoniumsalzes in eine neutrale Lösung von 25 Teilen 1-Ethyl -4- methyl -6- oxy -2- pyridon -3- methansulfonsäure. Mit 80 Teilen einer

20%igen Natriumcarbonatlösung wird die Kupplung zu Ende geführt. Der Farbstoff wird mit Natrium- oder Kaliumchlorid ausgesalzen und filtriert. Man löst den erhaltenen Filterkuchen in 500 ml Wasser und tropft bei 40 °C langsam 27,0 Teile 2-Trichlormethyl-4,6-difluor -5- chlorpyrimidin zu. Es wird so lange gerührt, bis sich der pH-Wert von 7–8 nach Neutralisation der freiwerdenden Flussäure durch Zutropfen von Natriumcarbonatlösung nicht mehr ändert. Der erhaltene Farbstoff der Formel

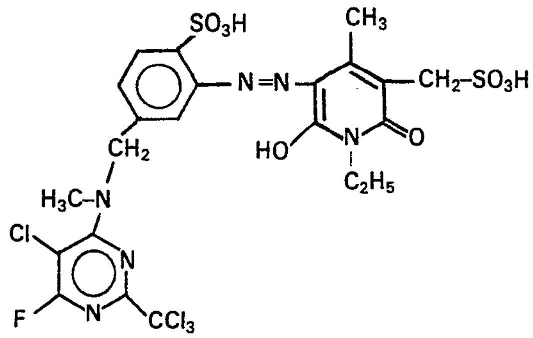

wird ausgesalzen, isoliert und getrocknet. Man erhält ein gelbes Pulver, das Baumwolle in grünstichig gelben Tönen färbt.

Weitere grünstichig gelbe Farbstoffe mit ähnlichen Eigenschaften erhält man, wenn man 1-Ethyl -4- methyl -6- oxy -2- pyridon -3- methansulfonsäure durch die in der folgenden Tabelle genannten Kupplungskomponente ersetzt und sonst wie in Beispiel 23 beschrieben verfährt.

| Beispiel | Diazokomponente | Kupplungskomponente | Farbton |
|---|---|---|---|
| 24 | 3-Amino-N-methylbenzylamin -4- sulfonsäure | 1,4-Dimethyl -6- oxy -2- pyridon -3- methansulfonsäure | grünstichig gelb |
| 25 | do. | 1 (2'-Ethylsulfo) -4- methyl -6- oxy-pyridon -3- carbonamid | do. |
| 26 | do. | 1-Ethyl -4- methyl -6- oxy -2- pyridon -3- carbonamid | do. |

Verwendet man in den Beispielen 23–26 anstelle von 2-Trichlormethyl-4,6-difluor -5- chlorpyrimidin die entsprechenden Mengen 2-Dichlormethyl-4,6-difluor -5- chlorpyrimidin, 2-Trichlormethyl-4,6-difluorpyrimidin oder 2-Chlormethyl-4,6-difluor -5- chlorpyrimidin und verfährt analog wie oben beschrieben, so erhält man Farbstoffe, die Wolle und Baumwolle in grünstichig gelben Tönen färben.

Beispiel 27

23,9 Teile 2-Amino -5- hydroxynaphthalin -7- sulfonsäure werden in 200 ml Wasser neutral gelöst. In diese Lösung werden bei ca. 20–30 °C 27 Teile 2-Trichlormethyl-4,6-difluor -5- chlorpyrimidin gegeben. Unter kräftigem Rühren wird solange die freiwerdende Flussäure durch Zutropfen von Natriumcarbonatlösung neutralisiert, bis sich der pH-Wert von 5,5–6,0 nicht mehr ändert.

Die Suspension des Kondensationsproduktes wird mit der nach üblichen Methoden hergestellten Suspension einer Diazoniumverbindung aus 2-Naphthylamin-1,5-disulfonsäure vereinigt und die Kupplung durch Zugabe von 10 Teilen Lithiumcarbonat zu Ende geführt. Der orangefarbene Reaktivfarbstoff der Formel

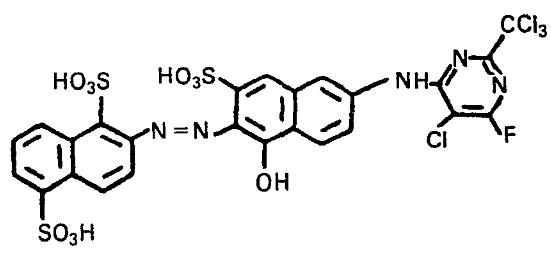

wird ausgesalzen, isoliert und getrocknet. Man erhält ein orangefarbenes Pulver, das zum Färben und Bedrucken von Baumwolle nach den für Reaktivfarbstoffen üblichen Verfahren hervorragend geeignet ist.

Wird das in diesem Beispiel beschriebene Kondensationsprodukt aus 2-Trichlormethyl-4,6-difluor -5- chlorpyrimidin und 2-Amino -5- hydroxy-naphthalin -7- sulfonsäure nach an sich bekannten Methoden mit den Diazoniumverbindungen aus den nachfolgend aufgeführten Aminen gekuppelt, so werden ebenfalls hervorragende Reaktivfarbstoffe mit den angegebenen Farbtönen erhalten:

| Beispiel | Diazoniumverbindung aus: | Farbton |
|---|---|---|
| 28 | 2-Aminonaphthalin-1,5,7-trisulfonsäure | Orange |
| 29 | Anilin -2- sulfonsäure | Orange |
| 30 | 1-Amino -3- acetylaminobenzol -6- sulfonsäure | Orange |
| 31 | 1-Amino-5-(2'-(2''-sulfophenylamino)-4'-fluortriazin-1',3',5'-yl-5')-ami-nobenzol -2- sulfonsäure | Orange |
| 32 | 1-Amino -4- methoxybenzol -2- sulfonsäure | Scharlach |
| 33 | 1-Amino -4- methoxybenzol-2,5-disulfonsäure | Scharlach |
| 34 | 2-Aminonaphthalin-3,6,8-trisulfonsäure | Scharlach |
| 35 | 2-Aminonaphthalin-4,6,8-trisulfonsäure | Scharlach |
| 36 | 2-Aminonaphthalin -1- sulfonsäure | Orange |
| 37 | 1-Amino -4- methoxybenzol -3- sulfonsäure | Scharlach |
| 38 | Anilin -4- sulfonsäure | Orange |
| 38a | 1-Amino -4- ethoxybenzol -2- sulfonsäure | Scharlach |

Verwendet man in den Beispielen 27–38a anstelle von 2-Trichlormethyl-4,6-difluor -5- chlorpyrimidin die entsprechenden Mengen 2-Dichlormethyl-4,6-difluor -5- chlorpyrimidin, 2-Trichlormethyl-4,6-difluorpyrimidin oder 2-Chlormethyl-4,6-difluor -5- chlorpyrimidin und verfährt analog wie oben beschrieben, so erhält man Farbstoffe, die Wolle und Baumwolle in den für den jeweiligen aus 2-Trichlormethyl-4,6-difluor -5- chlorpyrimidin erhaltenen Farbstoffen angegebenen Tönen färben.

Beispiel 39

In die Lösung von 32 Gew.-Teilen 1-Amino -8-hydroxynaphthalin-3,6-disulfonsäure als Natriumsalz in 100 Teilen Wasser werden unter starkem Rühren bei 10–15 °C 27 Teile 2-Trichlormethyl-4,6-difluor -5- chlorpyrimidin getropft und dabei die freiwerdende Säure durch verdünnte Natronlauge oder Sodalösung neutralisiert. Nach etwa einer Stunde ist die Kondensation unter diesen Bedingungen beendet. Das so erhaltene Kondensationsprodukt wird dann mit der nach üblichen Methoden zu erhaltenden Diazoniumverbindung aus 0,1 Mol Anilin -2- sulfonsäure vereinigt und die Kupplung bei pH 7 zu Ende geführt. Nach Aussalzen, Isolieren und Trocknen erhält man ein dunkles Pulver des Farbstoffs der Formel

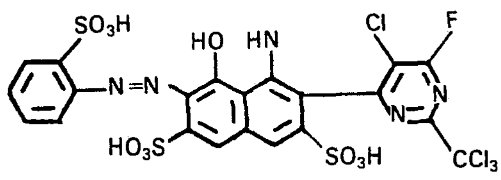

das sich in Wasser mit roter Farbe löst und Baumwolle in brillanten roten Tönen färbt.

Ersetzt man in diesem Beispiel die Diazoniumverbindung aus Anilin -2- sulfonsäure durch die äquimolaren Mengen der aus folgenden Aminen erhältlichen Diazoniumverbindungen, so werden ebenfalls brillante rote Reaktivfarbstoffe erhalten:

| Beispiel | Diazoverbindung | Farbton |
|---|---|---|
| 40 | Anilin | Rot |
| 41 | Anilin-2,5-disulfonsäure | Rot |
| 42 | 4-Methylanilin -2- sulfonsäure | Rot |
| 43 | 4-Methoxyanilin -2- sulfonsäure | blaust. Rot |
| 44 | 4-Methoxyanilin-2,5-disulfonsäure | blaust. Rot |
| 45 | 1-Amino-5-(2'-(2''-sulfophenylamino)-4'-fluor-triazin-1',3',5'-yl-6')-aminobenzol -2- sulfonsäure | Rot |
| 46 | 1-Amino -5- (5'-chlor-2',6'-difluor-pyrimidyl-4')-aminobenzol -2- sulfonsäure | Rot |
| 47 | 2-Aminonaphthalin -1- sulfonsäure | blaust. Rot |
| 48 | 2-Aminonaphthalin-1,5-disulfonsäure | do. |
| 49 | 2-Aminonaphthalin-1,5,7-trisulfonsäure | do. |
| 50 | Anilin -4- sulfonsäure | Rot |
| 51 | Anilin -3- sulfonsäure | do. |
| 52 | 4-Chloranilin -2- sulfonsäure | do. |
| 53 | 2,4-Dichloranilin -6- sulfonsäure | do. |
| 54 | 2-Chloranilin -3- sulfonsäure | do. |
| 55 | 4-Chloranilin -3- sulfonsäure | do. |
| 56 | 2,3,6-Trichloranilin -5- sulfonsäure | do. |
| 57 | 2-Chloranilin -4- sulfonsäure | do. |
| 58 | 2,5-Dichloranilin | do. |

| Beispiel | Diazoverbindung | Farbton |
|---|---|---|
| 59 | 2-Methylanilin -3- sulfonsäure | do. |
| 60 | 2-Methylanilin -4- sulfonsäure | do. |
| 61 | 2-Chlor -6- methylanilin -4- sulfonsäure | do. |
| 62 | 3-Methylanilin -4- sulfonsäure | do. |
| 63 | 4-Methylanilin -3- sulfonsäure | do. |
| 64 | 5-Methyl -4- chloranilin -2- sulfonsäure | do. |
| 65 | 4-Acetylaminoanilin -2- sulfonsäure | do. |
| 66 | 2,3-Dichloranilin -6- sulfonsäure | do. |
| 67 | 2,4-Dimethylanilin -6- sulfonsäure | do. |
| 68 | 2,4-Dimethylanilin -5- sulfonsäure | do. |
| 69 | 2-Methyl -4- chloranilin -6- sulfonsäure | do. |

Verwendet man in den Beispielen 39–69 anstelle von 2-Trichlormethyl-4,6-difluor -5- chlorpyrimidin die entsprechenden Mengen 2-Dichlormethyl-4,6-difluor -5- chlorpyrimidin, 2-Trichlormethyl-4,6-difluorpyrimidin oder 2-Chlormethyl-4,6-difluor -5- chlorpyrimidin und verfährt analog wie oben beschrieben, so erhält man Farbstoffe, die Wolle und Baumwolle in roten bis blaustichig roten Tönen färben.

Beispiel 70

Kondensiert man unter den in Beispiel 39 angegebenen Bedingungen je 0,1 Mol 2-Trichlormethyl-4,6-difluor -5- chlorpyrimidin und 1-Amino -8- hydroxynaphthalin-4,6-disulfonsäure und kuppelt das Kondensationsprodukt nach analogen Methoden mit der Diazoniumverbindung aus Anilin -2- sulfonsäure, so erhält man nach Aussalzen, Isolieren und Trocknen den Farbstoff der Formel

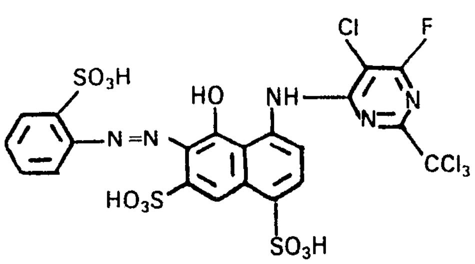

als dunkles Pulver, das sich in Wasser mit gelbstichig roter Farbe löst und zum Bedrucken und Färben von Baumwolle in brillanten roten Farbtönen hervorragend geeignet ist.

Ersetzt man in diesem Beispiel die Diazoniumverbindung aus Anilin -2- sulfonsäure durch äquimolare Mengen der Diazoniumverbindung der in Beispielen 40–60 aufgeführten Amine, so erhält man ebenfalls brillante rote Reaktivfarbstoffe.

Verwendet man anstelle von 2-Trichlormethyl-4,6-difluor -5- chlorpyrimidin die entsprechenden Mengen 2-Dichlormethyl-4,6-difluor -5-chlorpyrimidin, 2-Trichlormethyl-4,6-difluorpyrimidin oder 2-Chlormethyl-4,6-difluor -5- chlorpyrimidin und verfährt analog wie oben beschrieben, so erhält man Farbstoffe, die Wolle und Baumwolle in brillant roten Tönen färben.

Beispiel 71

Zu einer Suspension von 0,1 Mol des nach üblichen Methoden hergestellten Aminoazofarbstoffs der Formel

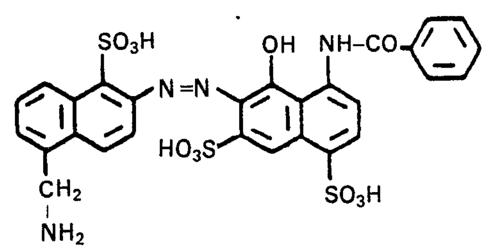

in 100 Teilen Wasser werden bei pH 7 und ca. 50–60° 27 Teile 2-Trichlormethyl-4,6-difluor -5-chlorpyrimidin zugetropft und dabei der pH-Wert durch Zugabe von verdünnter Natronlauge oder einer Natriumcarbonatlösung im Bereich von 6–8 gehalten.

Nach beendeter Kondensation wird ausgesalzen, isoliert und getrocknet. Der als rotes Pulver anfallende Farbstoff der Formel

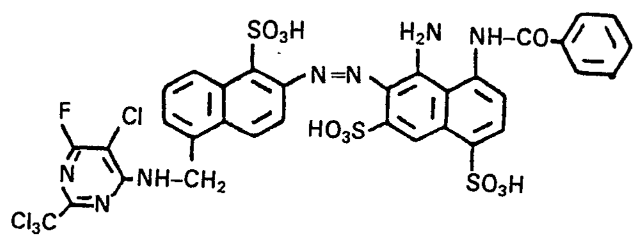

färbt Wolle und Baumwolle in brillant roten Tönen. Durch vorheriges emulgieren des Chlor-Fluorpyrimidins in Wasser kann die Kondensationsgeschwindigkeit erhöht werden.

Weitere rote Farbstoffe mit ähnlichen Eigenschaften erhält man, wenn man aus den in der folgenden Tabelle aufgeführten Kupplungs- und Diazokomponenten nach üblichen Verfahren Aminoazofarbstoffe herstellt und diese nach dem im obigen Beispiel beschriebenen Verfahren mit 2-Trichlormethyl-4,6-difluor -5- chlorpyrimidin kondensiert.

| Beispiel | Diazokomponente | Kupplungskomponente | Farbton |
|---|---|---|---|
| 72 | 2-Amino -5- aminomethylen-naphthalin -1 - sulfonsäure | 1-Benzoylamino -8- hydroxynaphthalin-3,6-disulfonsäure | Rot |
| 73 | do. | 1-Acetylamino -8- hydroxynaphthalin-3,6-disulfonsäure | do. |
| 74 | do. | 1-Acetylamino -8- hydroxynaphthalin-4,6-disulfonsäure | do. |
| 75 | do. | 1-(2'-(2"-sulfophenylamino)-4'-fluortriazin-1',3',5'-yl-6')-8-hydroxynaphthalin-3,6-disulfonsäure | do. |
| 76 | 3-Amino-N-methylbenzylamin -4- sulfonsäure | 1-Acetylamino -8- hydroxynaphthalin-3,6-disulfonsäure | Rot |
| 77 | do. | 1-Acetylamino -8- hydroxynaphthalin-4,6-disulfonsäure | do. |
| 78 | do. | 1-Benzoylamino -8- hydroxynaphthalin-3,6-disulfonsäure | do. |
| 79 | 3-Amino-N-methylbenzylamin -4- sulfonsäure | 1-Benzoylamino -8- hydroxynaphthalin-4,6-disulfonsäure | Rot |
| 80 | do. | 1-(2',3'-Dichlorchinoxalin-6'-carbonylamino) -8- hydroxynaphthalin-4,6-disulfonsäure | do. |
| 81 | 2-Amino -5- aminomethylen-naphthalin-1,7-disulfonsäure | do. | do. |
| 82 | do. | 1-Acetylamino -8- hydroxynaphthalin-3,6-disulfonsäure | do. |
| 83 | do. | 1-Acetylamino -8- hydroxynaphthalin-4,6-disulfonsäure | do. |
| 84 | do. | 1-Benzoylamino -8- hydroxynaphthalin-3,6-disulfonsäure | do. |
| 85 | do. | 1-[2'-(2"-Sulfophenylamino)-4'-fluortriazin-1',3',5'-yl-6')-8-hydroxynaphthalin-3,6-disulfonsäure | do. |
| 86 | do. | 1-Benzoylamino -8- hydroxynaphthalin-4,6-disulfonsäure | do. |
| 87 | 2-Amino -5- aminomethylen-naphthalin -7- sulfonsäure | 1-Benzoylamino -8- hydroxynaphthalin-4,6-disulfonsäure | do. |
| 87a | do. | 1-Benzoylamino -8- hydroxynaphthalin-3,6-disulfonsäure | do. |

Verwendet man in den Beispielen 71–87 anstelle von 2-Trichlormethyl-4,6-difluor -5- chlorpyrimidin die entsprechenden Mengen 2-Dichlormethyl-4,6-difluor -5- chlorpyrimidin, 2-Trichlormethyl-4,6-difluorpyrimidin oder 2-Chlormethyl-4,6-difluor -5- chlorpyrimidin und verfährt analog wie oben beschrieben, so erhält man Farbstoffe, die Wolle und Baumwolle in brillanten roten Tönen färben.

Beispiel 88

19 Teile 1,3-Diaminobenzol -4- sulfonsäure werden wie in Beispiel 2 beschrieben mit 23,5 Teilen 2-Dichlormethyl-4,6-difluor -5- chlorpyrimidin zur Reaktion gebracht, diazotiert und nach üblichen Methoden mit 44,5 Teilen 1-Benzoylamino -8- hydroxynaphthalin-4,6-disulfonsäure gekuppelt. Nach beendeter Kupplung wird ausgesalzen, isoliert und getrocknet. Der als rotes Pulver anfallende Farbstoff der Formel

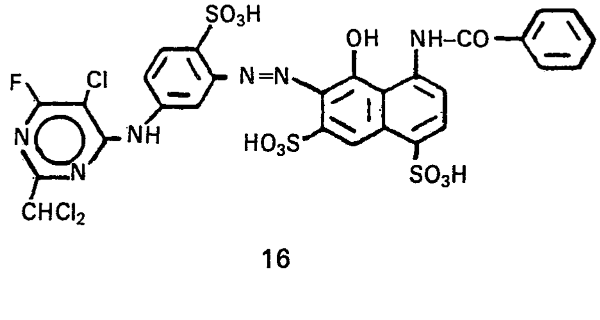

färbt Wolle und Baumwolle in brillanten roten Tönen.

Weitere orange bis rote Farbstoffe erhält man, wenn man nach obiger Methode die in der folgenden Tabelle Spalte 2 genannten Diazokomponenten mit 2-Dichlormethyl-4,6 difluor-5- chlordifluorpyrimidin umsetzt und danach mit den in Spalte 3 genannten Kupplungskomponenten kuppelt.

| Beispiel | Diazokomponente | Kupplungskomponente | Farbton |
|---|---|---|---|
| 89 | 1,3-Diaminobenzol - 4- sulfonsäure | 1-Acetylamino -8- hydroxynaphthalin-3,6-disulfonsäure | Rot |
| 90 | do. | 1-Acetylamino -8- hydroxynaphthalin-4,6-disulfonsäure | do. |
| 91 | do. | 1-Benzoylamino -8- hydroxynaphthalin-3,6-disulfonsäure | do. |
| 92 | do. | 1-(2'-(2''-Sulfophenylamino)-4'-fluortriazin-1',3',5'-yl-6')-8-hydroxynaphthalin-3,6-disulfonsäure | do. |
| 93 | do. | 1-(2',3'-Dichlorchinoxalin-6'-carbonylamino) -8- hydroxynaphthalin-4,6-disulfonsäure | do. |
| 94 | do. | 1-Hydroxy-naphthalin -4- sulfonsäure | do. |
| 95 | do. | 1-Hydroxy-naphthalin -5- sulfonsäure | do. |
| 96 | 1,3-Diaminobenzol - 4- sulfonsäure | 1-Hydroxy-naphthalin-4,6-disulfonsäure | Rot |
| 97 | | 1-Hydroxy-naphthalin-4,7-disulfonsäure | do. |
| 98 | | 1-Hydroxy-naphthalin-3,6-disulfonsäure | do. |
| 99 | | 2-Acetylamino -5- hydroxynaphthalin-1,7-disulfonsäure | Orange |
| 100 | | 1-(5'-Chlor-6'-dichlormethyl-2'-fluor-4'-aminopyrimidyl) -8- hydroxynaphthalin-3,6-disulfonsäure | Rot |
| 101 | | 2-Acetylamino -8- hydroxynaphthalin -6- sulfonsäure | Scharlach |
| 102 | | 2-Acetylamino -8- hydroxynaphthalin-3,6-disulfonsäure | do. |
| 103 | | 2-Acetylamino -5- hydroxynaphthalin -7- sulfonsäure | Orange |
| 104 | | 2-Hydroxy-naphthalin-6,8-disulfonsäure | do. |
| 105 | | 2-Benzoylamino -5- hydroxynaphthalin -7- sulfonsäure | do. |
| 106 | 1,4-Diaminobenzol - 2- sulfonsäure | 2-Benzoylamino -5- hydroxynaphthalin -7- sulfonsäure | Scharlach |
| 107 | do. | 1-Acetylamino -8- hydroxynaphthalin-3,6-disulfonsäure | Rot |
| 108 | | 1-Acetylamino -8- hydroxynaphthalin-4,6-disulfonsäure | do. |
| 109 | | 1-Benzoylamino -8- hydroxynaphthalin-3,6-disulfonsäure | do. |
| 110 | | 1-(2'-(2''-Sulfophenylamino)-4'-fluortriazin-1',3',5'-yl-6')-8-hydroxynaphthalin-3,6-disulfonsäure | do. |
| 111 | 1,4-Diaminobenzol - 2- sulfonsäure | 1-Benzoylamino -8- hydroxynaphthalin-4,6-disulfonsäure | Rot |
| 112 | do. | 2-Acetylamino -8- hydroxynaphthalin -6- sulfonsäure | do. |
| 113 | do. | 2-Acetylamino -8- hydroxynaphthalin-3,6-disulfonsäure | do. |
| 114 | do. | 2-Acetylamino -5- hydroxynaphthalin -7- sulfonsäure | do. |
| 115 | do. | 1-Hydroxy-naphthalin -4- sul- | do. |

| Beispiel | Diazokomponente | Kupplungskomponente | Farbton |
|---|---|---|---|
| | | fonsäure | |
| 116 | 1,4-Diaminobenzol - 2- sulfonsäure | 1-Hydroxy-naphthalin -5- sulfonsäure | Rot |
| 117 | do. | 1-Hydroxy-naphthalin-4,6-disulfonsäure | do. |
| 118 | do. | 1-Hydroxy-naphthalin-4,7-disulfonsäure | do. |
| 119 | do. | 1-Hydroxy-naphthalin-3,6-disulfonsäure | do. |
| 120 | 1,4-Diaminobenzol -2-sulfonsäure | 2-Acetylamino -5- hydroxynaphthalin-1,7-disulfonsäure | Scharlach |
| 121 | do. | 2-Hydroxy-naphthalin-6,8-disulfonsäure | Orange |
| 122 | 1,3-Diamino -2- methylbenzol -5- sulfonsäure | do. | do. |
| 123 | do. | 1-Acetylamino -8- hydroxynaphthalin-3,6-disulfonsäure | Rot |
| 124 | do. | 1-Acetylamino -8- hydroxynaphthalin-4,6-disulfonsäure | do. |
| 125 | do. | 1-Benzoylamino -8- hydroxynaphthalin-3,6-disulfonsäure | do. |
| 126 | do. | 1-Benzoylamino -8- hydroxynaphthalin-4,6-disulfonsäure | do. |
| 127 | 1,3-Diamino -2- methylbenzol -5- sulfonsäure | 1-(2',3'-Dichlorchinoxalin-6'-carbonylamino) -8- hydroxynaphthalin-4,6-disulfonsäure | Rot |
| 128 | do. | 2-Acetylamino -8- hydroxynaphthalin -6- sulfonsäure | Scharlach |
| 129 | do. | 2-Acetylamino -8- hydroxynaphthalin-3,6-disulfonsäure | do. |
| 130 | do. | 2-Acetylamino -5- hydroxynaphthalin -7- sulfonsäure | Orange |
| 131 | do. | 1-Hydroxy-naphthalin -4-sulfonsäure | Rot |
| 132 | do. | 1-Hydroxy-naphthalin -5-sulfonsäure | do. |
| 133 | do. | 1-Hydroxy-naphthalin-4,6-disulfonsäure | do. |
| 134 | do. | 1-Hydroxy-naphthalin-4,7-disulfonsäure | do. |
| 135 | do. | 1-Hydroxy-naphthalin-3,6-disulfonsäure | do. |
| 136 | 1,3-Diamino -2- methylbenzol -5- sulfonsäure | 2-Acetylamino -5- hydroxynaphthalin-1,7-disulfonsäure | Orange |
| 137 | do. | 2-Benzoylamino -5- hydroxynaphthalin -7- sulfonsäure | do. |
| 138 | 1,5-Diaminobenzol-2,4-disulfonsäure | Benzoylamino -5- hydroxynaphthalin -7- sulfonsäure | Orange |
| 139 | do. | 1-Acetylamino -8- hydroxynaphthalin-3,6-disulfonsäure | Rot |
| 140 | do. | 1-Acetylamino -8- hydroxynaphthalin-4,6-disulfonsäure | do. |
| 141 | do. | 1-Benzoylamino -8- hydroxynaphthalin-3,6-disulfonsäure | do. |
| 142 | do. | 1-(2'-(2''-Sulfophenylamino)-4'-fluortriazin-1',3',5'-yl-6') -8- hydroxynaphthalin-3,6-disulfonsäure | do. |
| 143 | 1,5-Diaminobenzol-2,4-disulfonsäure | 1-Benzoylamino -8- hydroxynaphthalin-4,6-disulfonsäure | Rot |
| 144 | do. | 2-Acetylamino -8- hydroxynaphthalin -6- sulfonsäure | do. |
| 145 | do. | 2-Acetylamino -8- hydroxynaph- | do. |

| Beispiel | Diazokomponente | Kupplungskomponente | Farbton |
|---|---|---|---|
| | | thalin-3,6-disulfonsäure | |
| 146 | do. | 2-Acetylamino -8- hydroxynaphthalin -7- sulfonsäure | Orange |
| 147 | do. | 1-Hydroxy-naphthalin -4-sulfonsäure | Rot |
| 148 | 1,5-Diaminobenzol-2,4-disulfonsäure | 1-Hydroxy-naphthalin -2-sulfonsäure | Rot |
| 149 | do. | 1-Hydroxy-naphthalin-4,6-disulfonsäure | do. |
| 150 | do. | 1-Hydroxy-naphthalin-4,7-disulfonsäure | do. |
| 151 | 1,5-Diaminobenzol-2,4-disulfonsäure | 1-Hydroxy-naphthalin-3,6-disulfonsäure | do. |
| 152 | do. | 2-Acetylamino -5- hydroxynaphthalin-1,7-disulfonsäure | Orange |
| 153 | do. | 2-Hydroxynaphthalin-6,8-disulfonsäure | do. |

Verwendet man in den Beispielen 88–153 anstelle von 2-Dichlormethyl-4,6-difluor -5- chlorpyrimidin die entsprechenden Mengen 2-Trichlormethyl-4,6-difluor -5- chlorpyrimidin, 2-Trichlormethyl-4,6-difluorpyrimidin oder 2-Chlormethyl-4,6-difluor -5- chlorpyrimidin und verfährt analog wie oben beschrieben, so erhält man Farbstoffe, die Wolle und Baumwolle in roten bis orangen Tönen färben.

Beispiel 154

44 Teile 1-(4'-Aminobenzoylamino) -8- hydroxynaphthalin-3,6-disulfonsäure werden in 200 Teilen Wasser gelöst und unter starkem Rühren bei 15–20 °C mit 30 Teilen 2-Trichlormethyl-4,6-difluor -5- chlorpyrimidin versetzt. Dabei wird die freiwerdende Flussäure auf pH 5–5,5 mit Sodalösung abgestumpft. Nach etwa zwei Stunden ist die Kondensation unter diesen Bedingungen beendet.

Das so erhaltene Kondensationsprodukt wird dann mit der nach üblichen Methoden zu erhaltenden Diazoniumverbindung aus 0,1 Mol Anilin -2- sulfonsäure vereinigt und die Kupplung bei pH 7 zu Ende geführt. Nach Aussalzen, Isolieren und Trocknen erhält man ein dunkles Pulver des Farbstoffs der Formel

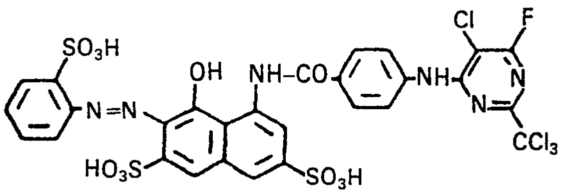

Weitere Farbstoffe mit roten Farbtönen erhält man, wenn in diesem Beispiel die Anilin -2- sulfonsäure durch folgende aromatische Amine ersetzt wird:

Anilin
Anilin -3- sulfonsäure
1-Amino -5- chlorbenzol -2- sulfonsäure
1-Amino -2- carboxybenzol -4- sulfonsäure
1-Amino -4- methylbenzol -2- sulfonsäure
Anilin-2,5-disulfonsäure
2-Aminonaphthalin -1- sulfonsäure
2-Aminonaphthalin-1,5-disulfonsäure
2-Aminonaphthalin-1,7-disulfonsäure.

Verwendet man anstelle von 2-Trichlormethyl-4,6-difluor -5- chlorpyrimidin die entsprechenden Mengen 2-Dichlormethyl-4,6-difluor -5- chlorpyrimidin, 2-Trichlormethyl-4,6-difluor-pyrimidin oder 2-Chlormethyl-4,6-difluor -5- chlorpyrimidin und verfährt analog wie oben beschrieben, so erhält man Farbstoffe, die Wolle und Baumwolle in roten bis violetten Tönen färben.

Beispiel 155

In eine Suspension von 0,1 Mol des Diazoniumsalzes von 1-Amino-5-(5'-chlor-2'-trichlormethyl-6'-fluor-pyrimidyl-4')-aminobenzol -2-sulfonsäure (hergestellt nach Beispiel 2) wird eine mit Natriumacetat gepufferte Lösung von 24 g 2-Amino -8- hydroxy-naphthalin -6- sulfonsäure in 80 ml Wasser bei pH 2–4 gegeben. Es erfolgt Kupplung zu dem Farbstoff der Formel

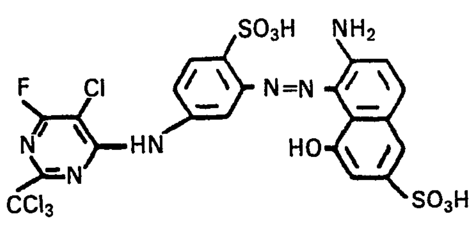

Nach beendeter Kupplung wird der Farbstoff ausgesalzen, isoliert und bei 30–40 °C im Vakuum getrocknet. Er löst sich in Wasser und färbt Wolle in roten Tönen mit guten Nass- und Lichtechtheiten.

Weitere orange bis blaustichig rote Farbstoffe erhält man, wenn man die in der folgenden Tabelle Spalte 2 genannten Diazokomponenten mit 2-Trichlormethyl-4,6-difluor -5- chlorpyrimidin

nach der in Beispiel 2 beschriebenen Methode umsetzt und diazotiert und danach mit den in Spalte 3 genannten Kupplungskomponenten nach bekannten Methoden kuppelt.

| Beispiel | Diazokomponente | Kupplungskomponente | Farbton |
|---|---|---|---|
| 156 | 1,3-Diaminobenzol-4-sulfonsäure | 2-N-Methylamino-8-hydroxynaphthalin-6-sulfonsäure | blaust. rot |
| 157 | do. | 2-Amino-8-hydroxynaphthalin-5-sulfonsäure | rot |
| 158 | do. | 2-Amino-8-hydroxynaphthalin-3,6-disulfonsäure | blaust. rot |
| 159 | do. | 2-Aminonaphthalin-5-sulfonsäure | Orange |
| 160 | do. | 2-Aminonaphthalin-6-sulfonsäure | do. |
| 161 | do. | 2-Aminonaphthalin-7-sulfonsäure | do. |
| 162 | do. | 7-Aminonaphthalin-1-sulfonsäure | do. |
| 163 | do. | 2-Aminonaphthalin-3,6-disulfonsäure | do. |
| 164 | do. | 2-Aminonaphthalin-3,7-disulfonsäure | do. |
| 165 | do. | 6-Aminonaphthalin-1,3-disulfonsäure | do. |
| 166 | do. | 2-N-Methylaminonaphthalin-7-sulfonsäure | rotst. Orange |
| 167 | do. | 2-Amino-8-hydroxynaphthalin-5,7-disulfonsäure | blaust. Rot |
| 168 | 1,4-Diaminobenzol-2-sulfonsäure | 2-Amino-8-hydroxynaphthalin-6-sulfonsäure | blaust. Rot |
| 169 | do. | 2-N-Methylamino-8-hydroxynaphthalin-6-sulfonsäure | do. |
| 170 | do. | 2-Amino-8-hydroxynaphthalin-5-sulfonsäure | do. |
| 171 | do. | 2-Amino-8-hydroxynaphthalin-3,6-disulfonsäure | do. |
| 172 | do. | 2-Aminonaphthalin-5-sulfonsäure | rotst. Orange |
| 173 | 1,4-Diaminobenzol-2-sulfonsäure | 2-Aminonaphthalin-6-sulfonsäure | Orange |
| 174 | do. | 2-Aminonaphthalin-7-sulfonsäure | do. |
| 175 | do. | 7-Aminonaphthalin-1-sulfonsäure | do. |
| 176 | do. | 2-Aminonaphthalin-3,6-disulfonsäure | do. |
| 177 | do. | 2-Aminonaphthalin-3,7-disulfonsäure | do. |
| 178 | do. | 6-Aminonaphthalin-1,3-disulfonsäure | do. |
| 179 | do. | 2-N-Methylaminonaphthalin-7-sulfonsäure | rot |
| 180 | do. | 2-Amino-8-hydroxynaphthalin-5,7-disulfonsäure | blaust. Rot |
| 181 | 2,5-Diamino-4-methyl-3'-sulfo-1,1'-diphenylsulfon | 2-Amino-8-hydroxynaphthalin-6-sulfonsäure | blaust. Rot |
| 182 | do. | 2-N-Methylamino-8-hydroxynaphthalin-6-sulfonsäure | do. |
| 183 | do. | 2-Amino-8-hydroxynaphthalin-5-sulfonsäure | do. |
| 184 | do. | 2-Amino-8-hydroxynaphthalin-3,6-disulfonsäure | do. |
| 185 | do. | 2-Aminonaphthalin-5-sulfonsäure | gelbst. Rot |
| 186 | do. | 2-Aminonaphthalin-6-sulfonsäure | do. |
| 187 | do. | 2-Aminonaphthalin-7-sulfonsäure | do. |
| 188 | do. | 7-Aminonaphthalin-1-sulfonsäure | do. |
| 189 | do. | 2-Aminonaphthalin-3,6-disulfonsäure | do. |
| 190 | 2,5-Diamino-4- | 2-Aminonaphthalin-3,7-disul- | gelbst. Rot |

| Beispiel | Diazokomponente | Kupplungskomponente | Farbton |
|---|---|---|---|
| | methyl-3'-sulfo-1,1'-diphenylsulfon | fonsäure | |
| 191 | do. | 6-Aminonaphthalin-1,3-disulfonsäure | do. |
| 192 | do. | 2-N-Methylaminonaphthalin-7-sulfonsäure | Rot |
| 193 | do. | 2-Amino -8- hydroxynaphthalin-5,7-disulfonsäure | blaust. Rot |

Beispiel 194

Zu einer Suspension von 0,1 Mol des nach üblichen Methoden hergestellten Aminoazofarbstoffs der Formel

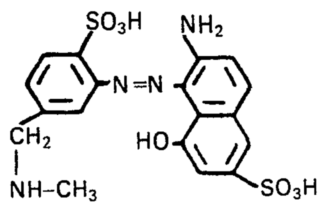

in 100 ml Wasser werden bei pH 7 und ca. 40 °C 27 Teile 2-Trichlormethyl-4,6-difluor -5- chlorpyrimidin zugetropft und dabei der pH-Wert durch Zugabe von verdünnter Natronlauge oder einer Natriumcarbonat-Lösung im Bereich von 6–8 gehalten. Nach beendeter Kondensation wird ausgesalzen, isoliert und getrocknet. Der als rotes Pulver anfallende Farbstoff der Formel

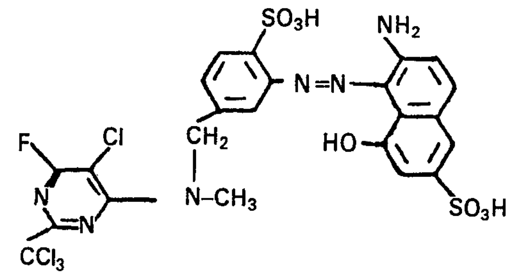

färbt Wolle und Baumwolle in roten echten Tönen.

Weitere orange bis rote Farbstoffe mit ähnlichen Eigenschaften erhält man, wenn man aus den in der folgenden Tabelle aufgeführten Kupplungs- und Diazokomponenten nach üblichen Verfahren Aminoazofarbstoffe herstellt und diese nach dem im obigen Beispiel beschriebenen Verfahren mit 2-Trichlormethyl-4,6-difluor -5-chlorpyrimidin kondensiert.

| Beispiel | Diazokomponente | Kupplungskomponent | Farbton |
|---|---|---|---|
| 195 | 3-Amino-N-methylbenzylamin -4-sulfonsäure | 2-N-Methylamino -8- hydroxynaphthalin -6- sulfonsäure | blaust. Rot |
| 196 | do. | 2-Amino -8- hydroxynaphthalin -5- sulfonsäure | Rot |
| 197 | do. | 2-Amino -8- hydroxynaphthalin-3,6-disulfonsäure | blaust. Rot |
| 198 | do. | 2-Aminonaphthalin -5- sulfonsäure | Orange |
| 199 | do. | 2-Aminonaphthalin -6- sulfonsäure | do. |
| 200 | do. | 2-Aminonaphthalin -7-sulfonsäure | do. |
| 201 | do. | 7-Aminonaphthalin -1 - sulfonsäure | do. |
| 202 | 3-Amino-N-methylbenzylamin -4-sulfonsäure | 2-Aminonaphthalin-3,6-disulfonsäure | Orange |
| 203 | do. | 2-Aminonaphthalin-3,7-disulfonsäure | do. |
| 204 | do. | 6-Aminonaphthalin-1,3-disulfonsäure | do. |
| 205 | do. | 2-N-Methylaminonaphthalin-7-sulfonsäure | rotst. Orange |
| 206 | do. | 2-Amino -8- hydroxynaphthalin-5,7-disulfonsäure | blaust. Rot |
| 207 | do. | 2-N-Methylamino -8- hydroxynaphthalin -6- sulfonsäure | blaust. Rot |
| 208 | do. | 2-Amino -8- hydroxynaphthalin -5- sulfonsäure | Rot |
| 209 | do. | 2-Amino -8- hydroxynaphthalin-3,6-disulfonsäure | blaust. Rot |

| Beispiel | Diazokomponente | Kupplungskomponent | Farbton |
|---|---|---|---|
| 210 | do. | 2-Aminonaphthalin -5- sulfonsäure | Orange |
| 211 | 2-Amino -5- amino-methylennaphthalin - 1 - sulfonsäure | 2-Aminonaphthalin -6- sulfonsäure | Orange |
| 212 | do. | 2-Aminonaphthalin -7- sulfonsäure | do. |
| 213 | do. | 7-Aminonaphthalin -1 - sulfonsäure | do. |
| 214 | do. | 2-Aminonaphthalin-3,6-disulfonsäure | do. |
| 215 | do. | 2-Aminonaphthalin-3,7-disulfonsäure | do. |
| 216 | do. | 6-Aminonaphthalin-1,3-disulfonsäure | do. |
| 217 | do. | 2-Amino -8- hydroxynaphthalin -6- sulfonsäure | Rot |
| 218 | 2-Amino -5- amino-methylennaphthalin-1,7-disulfonsäure | 2-Amino -8- hydroxynaphthalin -6- sulfonsäure | Rot |
| 219 | do. | 2-N-Methylamino -8- hydroxy-naphthalin -6- sulfonsäure | blaust. Rot |
| 220 | do. | 2-Amino -8- hydroxynaphthalin-3,6-disulfonsäure | Rot |
| 221 | do. | 2-Aminonaphthalin -5- sulfonsäure | Orange |
| 222 | do. | 2-Aminonaphthalin -6- sulfonsäure | do. |
| 223 | do. | 2-Aminonaphthalin -7- sulfonsäure | do. |
| 224 | do. | 7-Aminonaphthalin -1 - sulfonsäure | do. |
| 225 | do. | 2-Aminonaphthalin-3,6-disulfonsäure | do. |
| 226 | 2-Amino -5- amino-methylennaphthalin-1,7-disulfonsäure | 2-Aminonaphthalin-3,7-disulfonsäure | Orange |
| 227 | do. | 6-Aminonaphthalin-1,3-disulfonsäure | do. |
| 228 | 2-Amino -5- amino-methylennaphthalin - 7- sulfonsäure | 2-Amino -8- hydroxynaphthalin -6- sulfonsäure | Rot |
| 229 | do. | 2-N-Methylamino -8- hydroxy-naphthalin -6- sulfonsäure | blaust. Rot |
| 230 | do. | 2-Amino -8- hydroxynaphthalin-3,6-disulfonsäure | do. |
| 231 | do. | 2-Aminonaphthalin -5- sulfonsäure | Orange |
| 232 | do. | 2-Aminonaphthalin -6- sulfonsäure | do. |
| 233 | do. | 2-Aminonaphthalin -7- sulfonsäure | do. |
| 234 | 2-Amino -5- amino-methylennaphthalin - 7- sulfonsäure | 7-Aminonaphthalin -1 - sulfonsäure | Orange |
| 235 | do. | 2-Aminonaphthalin-3,6-disulfonsäure | do. |
| 236 | do. | 2-Aminonaphthalin-3,7-disulfonsäure | do. |
| 237 | do. | 6-Aminonaphthalin-1,3-disulfonsäure | do. |

Verwendet man in den Beispielen 194–237 anstelle von 2-Trichlormethyl-4,6-difluor -5- chlorpyrimidin die entsprechenden Mengen 2-Dichlormethyl-4,6-difluor -5- chlorpyrimidin, 2-Trichlormethyl-4,6-difluorpyrimidin oder 2-Chlormethyl-4,6-difluor -5- chlorpyrimidin und verfährt analog wie oben beschrieben, so erhält man Farbstoffe, die Wolle und Baumwolle in orange bis rote Töne färben.

Beispiel 238

Zu einer Suspension von 0,1 Mol des nach üblichen Methoden hergestellten Aminoazofarbstoffs der Formel

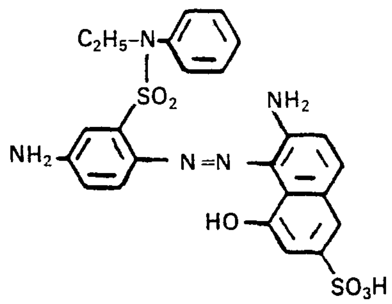

in 1200 ml Wasser werden bei pH 6 und ca. 50 °C 27 Teile 2-Trichlormethyl-4,6-difluor -5- chlorpyrimidin zugetropft und dabei der pH-Wert durch Zugabe von verdünnter Natronlauge oder einer Natriumcarbonat-Lösung im Bereich von 6–7 gehalten. Nach beendeter Kondensation wird ausgesalzen, isoliert und getrocknet. Der als rotes Pulver anfallende Farbstoff der Formel

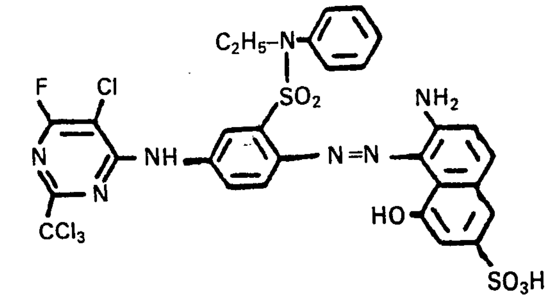

färbt Wolle und Baumwolle in roten echten Tönen.

Weitere orange bis rote Farbstoffe mit ähnlichen Eigenschaften erhält man, wenn im obigen Beispiel 2-Amino -8- hydroxynaphthalin -6- sulfonsäure durch die in der nachfolgenden Tabelle aufgeführten Kupplungskomponenten ersetzt und zwar nach an sich bekannten Methoden und die so erhaltenen Farbstoffe mit 2-Dichlormethyl-4,6-difluor -5- chlorpyrimidin kondensiert.

| Beispiel | Kupplungskomponente | Farbton |
|---|---|---|
| 239 | 2-N-Methylamino -8- hydroxynaphthalin -6- sulfonsäure | blaust. Rot |
| 240 | 2-Amino -8- hydroxynaphthalin -5- sulfonsäure | do. |
| 241 | 2-Amino -8- hydroxynaphthalin-3,6-disulfonsäure | do. |
| 242 | 2-Aminonaphthalin -5- sulfonsäure | gelbst. Rot |
| 243 | 2-Aminonaphthalin -6- sulfonsäure | do. |
| 244 | 2-Aminonaphthalin -7- sulfonsäure | do. |
| 245 | 2-Aminonaphthalin -1 - sulfonsäure | do. |
| 246 | 2-Aminonaphthalin-3,6-disulfonsäure | do. |
| 247 | 2-Aminonaphthalin-3,7-disulfonsäure | do. |
| 248 | 6-Aminonaphthalin-1,3-disulfonsäure | do. |
| 249 | 5-Aminonaphthalin-1,3-disulfonsäure | do. |
| 250 | 2-N-Methylaminonaphthalin -7- sulfonsäure | Rot |
| 251 | 2-Amino -8- hydroxynaphthalin-5,7-disulfonsäure | blaust. Rot |

Verwendet man in den Beispielen 238–251 anstelle von 2-Trichlormethyl-4,6-difluor -5- chlorpyrimidin die entsprechenden Mengen 2-Dichlormethyl-4,6-difluor -5- chlorpyrimidin, 2-Trichlormethyl-4,6-difluorpyrimidin oder 2-Chlormethyl-4,6-difluor -5- chlorpyrimidin und verfährt analog wie oben beschrieben, so erhält man Farbstoffe, die Wolle und Baumwolle in orange bis blaustichig roten Tönen färben.

Beispiel 252

Zu einer Suspension von 0,1 Mol des nach üblichen Methoden hergestellten Aminoazofarbstoffs der Formel

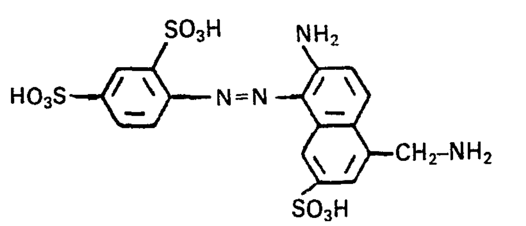

in 1000 ml Wasser werden bei pH 7 und ca. 50° 27 Teile 2-Trichlormethyl-4,6-difluor -5- chlorpyrimidin zugetropft und dabei der pH-Wert durch Zugabe von verdünnter Natronlauge oder einer Natriumcarbonat-Lösung im Bereich von 6–8 gehalten. Nach beendeter Kondensation wird ausgesalzen, isoliert und getrocknet. Der als rotes Pulver anfallende Farbstoff der Formel

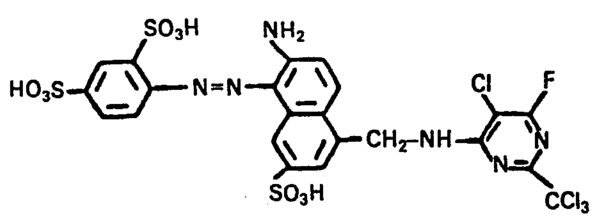

färbt Wolle und Baumwolle in echten roten Tönen.

Weitere orange bis rote Farbstoffe mit ähnlichen Eigenschaften erhält man, wenn man aus den in der folgenden Tabelle aufgeführten Kupplungs- und Diazokomponenten nach üblichen Verfahren Aminoazofarbstoffe herstellt und diese nach dem im obigen Beispiel beschriebenen Verfahren mit 2-Dichlormethyl-4,6-difluor -5- chlorpyrimidin kondensiert.

| Beispiel | Diazokomponente | Kupplungskomponente | Farbton |
|---|---|---|---|
| 253 | 1-Aminobenzol-2,5-disulfonsäure | 2-Amino-5-aminomethylen-naphthalin-1,7-disulfonsäure | gelbst. Rot |
| 254 | 1-Amino-2,5-dichlorbenzol-4-sulfonsäure | do. | Orange |
| 255 | 1-Amino-5-benzoylamino-benzol-2-sulfonsäure | do. | do. |
| 256 | 1-Amino-4-benzoylamino-benzol-2-sulfonsäure | 2-Amino-5-aminomethylen-naphthalin-1,7-disulfonsäure | Orange |
| 257 | 1-Amino-4-acetylamino-benzol-2,5-disulfonsäure | do. | Scharlach |
| 258 | 1-Amino-5-acetylamino-benzol-2,4-disulfonsäure | do. | Rot |
| 259 | 1-Aminobenzol-2-sulfonsäure | do. | Orange |
| 260 | 1-Aminobenzol-2,4-disulfonsäure | 2-Amino-5-aminomethylen-naphthalin-1-sulfonsäure | Rot |
| 261 | 1-Aminobenzol-2,5-disulfonsäure | do. | gelbst. Rot |
| 262 | 1-Amino-2,5-dichlorbenzol-4-sulfonsäure | do. | Orange |
| 263 | 1-Amino-5-benzoylamino-benzol-2-sulfonsäure | do. | do. |
| 264 | 1-Amino-4-benzoylamino-benzol-2-sulfonsäure | do. | do. |
| 265 | 1-Amino-4-acetylamino-benzol-2,5-disulfonsäure | 2-Amino-5-aminomethylen-naphthalin-1-sulfonsäure | Scharlach |
| 266 | 1-Amino-5-acetylamino-benzol-2,4-disulfonsäure | do. | Rot |
| 267 | 1-Aminobenzol-2-sulfonsäure | do. | do. |

Beispiel 268

Zur Lösung von 0,1 Mol des nach üblichen Methoden hergestellten Aminoazofarbstoffs der Formel

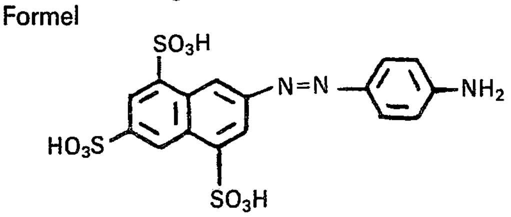

in 1000 Teilen Wasser werden bei pH 7 und ca. 60° 27 Teile 2-Trichlormethyl-4,6-difluor-5-chlorpyrimidin zugetropft und dabei der pH-Wert durch Zugabe von verdünnter Natronlauge oder einer Natriumcarbonatlösung im Bereich von 6–8 gehalten.

Nach beendeter Kondensation wird ausgesalzen, isoliert und getrocknet. Der als gelbes Pulver anfallende Farbstoff der Formel

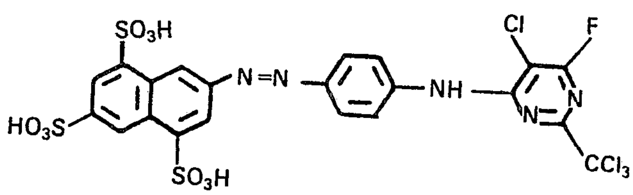

färbt Baumwolle in licht- und chlorechten gelben Farbtönen.

Wird in diesem Beispiel die 2-Aminonaphthalin-4,6,8-trisulfonsäure durch 2-Aminonaphthalin-4,8-disulfonsäure, 2-Aminonaphthalin-6,8-disulfonsäure, 2-Aminonaphthalin-3,6,8-trisulfonsäure, Aminobenzol-2,4-disulfonsäure oder Aminobenzol-2,5-disulfonsäure ersetzt, so werden ebenfalls gelbe Reaktivfarbstoffe hervorragender Licht- und Nassechtheiten erhalten.

In analoger Weise können gelbe Reaktivfarbstoffe dieses Typs erhalten werden, wenn in diesem Beispiel das als Kupplungskomponente eingesetzte Anilin durch 3-Methylanilin, 2-Methoxyanilin, 2,5-Dimethoxyanilin, 3-Acetylaminoanilin, 3-Ureidoanilin oder durch 2-Methoxy-5-methylanilin ersetzt wird.

Verwendet man anstelle von 2-Trichlormethyl-4,6-difluor-5-chlorpyrimidin die entsprechenden Mengen 2-Dichlormethyl-4,6-difluor-5-chlorpyrimidin, 2-Trichlormethyl-4,6-difluorpyrimidin oder 2-Chlormethyl-4,6-difluor-5-chlor-

pyrimidin und verfährt analog wie oben beschrieben, so erhält man Farbstoffe, die Wolle und Baumwolle in gelben Tönen färben.

Beispiel 269

Zur Lösung der nach üblichen Methoden aus 0,1 Mol 2-Amino-naphthalin-4,6,8-trisulfonsäure zu erhaltenden Diazoniumverbindung werden 0,1 Mol des nach Beispiel 5 zu erhaltenden Kondensationsproduktes aus 19 Teilen 1,3-Diamino-benzol -6- sulfonsäure und 27 Teilen 2-Trichlormethyl-4,6-difluor -5- chlorpyrimidin gegeben und die Kupplung durch Neutralisation mit einer verdünnten Sodalösung zu Ende geführt.

Nach Aussalzen, Filtrieren und Trocknen wird der Farbstoff der Formel

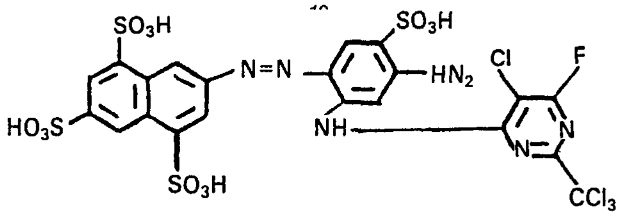

in Form eines gelben Pulvers erhalten. Er eignet sich in hervorragender Weise zum Färben und Bedrucken von Baumwolle in goldgelben Farbtönen.

Wird in diesem Beispiel die 2-Aminonaphthalin-4,6,8-trisulfonsäure durch 2-Aminonaphthalin-4,8-disulfonsäure, 2-Aminonaphthalin-6,8-disulfonsäure, 2-Aminonaphthalin-3,6,8-trisulfonsäure, Aminobenzol-2,4-disulfonsäure oder Aminobenzol-2,5-disulfonsäure ersetzt, so werden ebenfalls gelbe Reaktivfarbstoffe mit hervorragenden Nassechtheiten erhalten.

Verwendet man anstelle von 2-Trichlormethyl-4,6-difluor -5- chlorpyrimidin die entsprechenden Mengen 2-Dichlormethyl-4,6-difluor -5- chlorpyrimidin, 2-Trichlormethyl-4,6-difluorpyrimidin oder 2-Chlormethyl-4,6-difluor -5- chlorpyrimidin und verfährt analog wie oben beschrieben, so erhält man Farbstoffe, die Wolle und Baumwolle in goldgelben Tönen färben.

Beispiel 270

In die Lösung des Natriumsalzes von 32 Gew.-Teilen 1-Amino -8- hydroxynaphthalin-3,6-disulfonsäure in 200 Teilen Wasser werden bei pH 5,5–6 wie in Beispiel 82 angegeben 24 Teile 2-Trichlormethyl-4,6-difluor -5- chlorpyrimidin gegeben und bei 10–20° kondensiert. Die Lösung des Kondensationsproduktes wird dann mit der Diazoniumverbindung aus 0,1 Mol 2-Amino-naphthalin-4,6,8-trisulfonsäure in 200 Teilen Wasser vereinigt und durch Zugabe von Alkali die Kupplung bei pH 7 durchgeführt.

Nach beendeter Kupplung wird die rote Farbstofflösung mit 35 Gew.-Teilen Kupfersulfat versetzt und bei 15° und pH 6,4 eine Mischung aus 50 Teilen einer 30%igen Wasserstoffperoxidlösung und 130 Teilen einer 20%igen Natriumacetatlösung zugetropft. Durch Zugabe von ca. 200 g Eis wird dabei die Temperatur im Bereich von 10–15° gehalten. Nach beendeter oxydativer Kupferung wird der Kupferkomplexfarbstoff der Formel

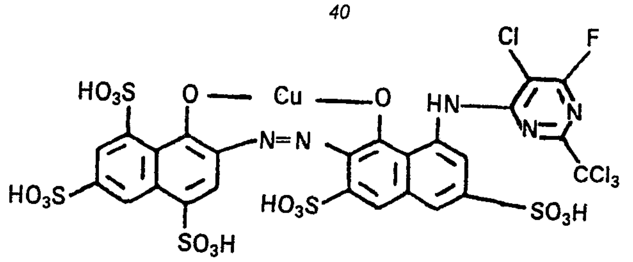

ausgesalzen, isoliert und getrocknet. Man erhält ein dunkles Pulver, das sich in Wasser mit blauer Farbe löst und zum Bedrucken und Färben von Baumwolle in marineblauen Farbtönen mit guter Lichtechtheit geeignet ist.

Die Diazoniumverbindung aus 2-Naphthylamin-4,6,8-trisulfonsäure kann in diesem Beispiel durch die Diazoniumverbindungen aus den Aminen der folgenden Tabelle ersetzt werden. Die Ausführung der oxydativen Kupferung erfolgt analog.

| Diazoniumverbindung | Farbton |
|---|---|
| Anilin -4- sulfonsäure | Violett |
| Anilin-3,5-disulfonsäure | Violett |
| Anilin | Rotviolett |
| 2-Aminonaphthalin-4,8-disulfonsäure | Blau |
| 2-Aminonaphthalin-6,8-disulfonsäure | Blau |
| 2-Aminonaphthalin-1,5,7-trisulfonsäure | Blau |

Verwendet man anstelle von 2-Trichlormethyl-4,6-difluor -5- chlorpyrimidin die entsprechenden Mengen 2-Dichlormethyl-4,6-difluor -5- chlorpyrimidin, 2 Trichlormethyl-4,6-difluor-pyrimidin oder 2-Chlormethyl-4,6-difluor -5- chlorpyrimidin und verfährt analog wie oben beschrieben, so erhält man Farbstoffe, die Baumwolle in violetten bis blauen Tönen färben.

Beispiel 271

In die nach dem in Beispiel 270 beschriebenen Verfahren hergestellten Lösung des Kondensationsproduktes aus 2-Amino -5- hydroxynaphthalin -7- sulfonsäure und 2-Trichlormethyl-4,6-difluor -5- chlorpyrimidin wird eine Suspension der Diazoniumverbindung aus 0,1 Mol 2-Aminonaphthalin-4,6,8-trisulfonsäure in 250 Volumenteilen Wasser gegeben und die Kupplung durch Zugabe von 20 Teilen Natriumbicarbonat zu Ende geführt. Die so erhaltene Kupplungslösung wird mit 250 Teilen einer 20%igen Natriumacetatlösung und 500 Teilen einer 3%igen Wasserstoffperoxidlösung versetzt. Die oxidative Kupferung wird dann durch Zutropfen von 250 Teilen einer 20%igen Kupfersulfatlösung erreicht. Nach beendeter Kupferung wird der Farbstoff der Formel

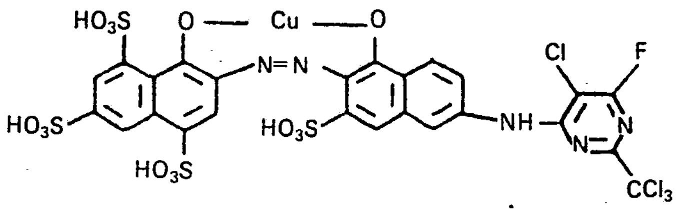

mit einem Gemisch aus 400 Teilen Natriumchlorid und 100 Teilen Kaliumchlorid ausgesalzen, anschliessend isoliert und getrocknet. Man erhält ein dunkles Pulver, das sich in Wasser mit violetter Farbe löst und Baumwolle in klaren blauvioletten Farbtönen färbt.

Ersetzt man in diesem Beispiel die Diazoniumverbindung aus 2-Aminonaphthalin-4,6,8-trisulfonsäure durch Diazoniumverbindung aus folgenden aromatischen Aminen, so erhält man ebenfalls violette Reaktivfarbstoffe:

Anilin -4- sulfonsäure,
Anilin -3- sulfonsäure,
Anilin-3,5-disulfonsäure,
2-Aminonaphthalin-4,8-disulfonsäure,
2-Aminonaphthalin-6,8-disulfonsäure,
1-Aminonaphthalin-4,6-disulfonsäure,
1-Aminonaphthalin-4,7-disulfonsäure,
2-Aminonaphthalin-3,6,8-trisulfonsäure.

Verwendet man anstelle von 2-Trichlormethyl-4,6-difluor -5- chlorpyrimidin die entsprechenden Mengen 2-Dichlormethyl-4,6-difluor -5- chlorpyrimidin, 2-Trichlormethyl-4,6-difluorpyrimidin oder 2-Chlormethyl-4,6-difluor -5- chlorpyrimidin und verfährt analog wie oben beschrieben, so erhält man Farbstoffe, die Baumwolle in violetten Tönen färben.

Beispiel 272

0,1 Mol des Kupferkomplexes der Formel

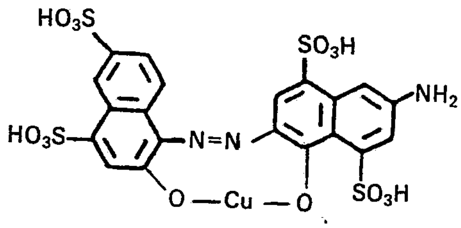

die durch Kupplung von 1-Aminonaphthalin-4,6-disulfonsäure mit 2-Acetylamino -5- hydroxynaphthalin-4,8-disulfonsäure anschliessender oxydativer Kupferung und Verseifung der Acetylaminogruppe erhalten werden kann, wird in 1500 Volumenteilen Wasser bei pH 6,5 gelöst und bei ca. 60 °C mit 27 Teilen 2-Trichlormethyl-4,6-difluor -5- chlorpyrimidin portionsweise versetzt, wobei die freiwerdende Säure so mit einer Sodalösung neutralisiert wird, dass während der Kondensationszeit von etwa 2 Stunden ein pH von 6,5 gehalten wird.

Nach beendeter Umsetzung wird der Farbstoff der Formel

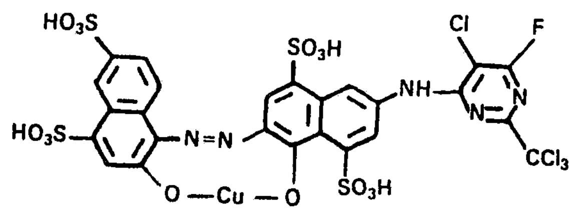

ausgesalzen, isoliert und bei ca. 50 °C im Vakuum getrocknet.

Man erhält ein dunkles Pulver, das sich in Wasser mit blauer Farbe löst und Baumwolle in rotstichig blauen Farbtönen färbt. Der gleiche Farbstoff kann durch Kupplung der Diazoniumverbindung aus 1-Aminonaphthalin-4,6-disulfonsäure mit dem Kondensationsprodukt aus 2-Amino -5- hydroxynaphthalin-4,8-disulfonsäure und 2-Trichlormethyl-4,6-difluor -5- chlorpyrimidin und anschliessender oxydativer Kupferung erhalten werden.

Farbstoffe, die Baumwolle in ähnlichen blauen Farbtönen färben, können erhalten werden, wenn man in diesem Beispiel die Diazoniumverbindung aus 1-Aminonaphthalin-4,6-disulfonsäure durch die der folgenden Amine ersetzt:

1-Aminonaphthalin-4,7-disulfonsäure,
1-Aminonaphthalin -4- sulfonsäure,
2-Aminonaphthalin-6,8-disulfonsäure,
2-Aminonaphthalin-4,6,8-trisulfonsäure,
2-Aminonaphthalin-3,6-disulfonsäure,
1-Amino -8- hydroxynaphthalin-4,6-disulfonsäure bzw. -3,6-disulfonsäure, in Form der o-Sulfonsäureester und abschliessender Hydrolyse des Sulfonsäureesters.

Verwendet man anstelle von 2-Trichlormethyl-4,6-difluor -5- chlorpyrimidin die entsprechenden Mengen 2-Dichlormethyl-4,8-difluor -5-chlorpyrimidin, 2-Trichlormethyl-4,6-difluorpyrimidin oder 2-Chlormethyl-4,6-difluor -5- chlorpyrimidin und verfährt analog wie oben beschrieben, so erhält man Farbstoffe, die Wolle und Baumwolle in blauen Tönen färben.

Beispiel 273

0,1 Mol des 1:2-Chromkomplexes der Formel

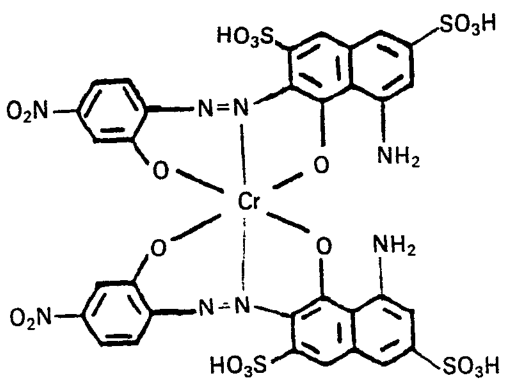

der durch Kupplung von diazotiertem 5-Nitro -2-aminophenol mit 1-Amino -8- hydroxynaphthalin-3,6-disulfonsäure und anschliessender Umwandlung in den 1:2-Cr-Komplex erhalten werden kann, werden in 1000 Teilen Wasser bei pH 7 gelöst und mit 60 Teilen 2-Trichlormethyl-4,6-difluor -5- chlorpyrimidin bei 60–70 °C kondensiert. Die Neutralisation der freiwerdenden Säure erfolgt dabei durch Zutropfen einer verdünnten Sodalösung. Nach beendeter Kondensation wird der Farbstoff ausgesalzen, isoliert und getrocknet. Er fällt in Form eines dunklen Pulvers an, das Baumwolle in grünstichig grauen Farbtönen färbt.

Ersetzt man in diesem Beispiel den reinen Chromkomplex durch eine 1:1-Mischung aus dem Cr-Komplex und dem entsprechenden Co-Komplex, so erhält man eine Farbstoffmischung, die Baumwolle in neutralen, lichtechten Schwarz- bzw. Grautönen färbt.

Verwendet man anstelle von 2-Trichlormethyl-4,6-difluor -5- chlorpyrimidin die entsprechenden Mengen 2-Dichlormethyl-4,6-difluor -5-chlorpyrimidin, 2-Trichlormethyl-4,6-difluorpyrimidin oder 2-Chlormethyl-4,6-difluor -5- chlorpyrimidin und verfährt analog wie oben beschrieben, so erhält man Farbstoffe, die Wolle und Baumwolle in grünstichig bis neutralen lichtechten Schwarz- bzw. Grautönen färbt.

Beispiel 274

0,1 Mol des Co-Komplexes der Formel

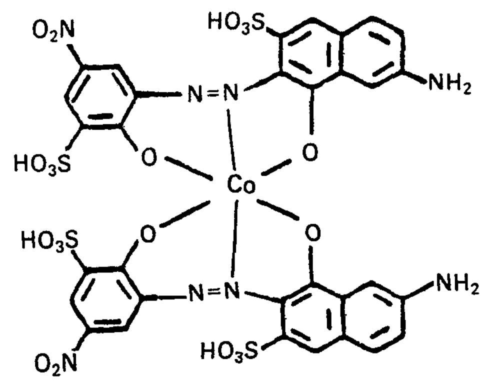

werden in 800 Volumenteilen Wasser bei pH 6 gelöst und mit 60 Teilen 2-Trichlormethyl-4,6-difluor -5- chlorpyrimidin unter kräftigem Rühren kondensiert. Die freiwerdende Säure wird durch Zutropfen einer 20%igen Sodalösung neutralisiert. Nach beendeter Kondensation wird der erhaltene Reaktivfarbstoff ausgesalzen, isoliert und getrocknet. Er fällt in Form eines dunklen Pulvers an, das sich in Wasser mit brauner Farbe löst und Baumwolle in lichtechten Brauntönen färbt.

Verwendet man anstelle von 2-Trichlormethyl-4,6-difluor -5- chlorpyrimidin die entsprechenden Mengen 2-Dichlormethyl-4,6-difluor -5-chlorpyrimidin, 2-Trichlormethyl-4,6-difluorpyrimidin oder 2-Chlormethyl-4,6-difluor -5- chlorpyrimidin und verfährt analog wie oben beschrieben, so erhält man Farbstoffe, die Wolle und Baumwolle in lichtechten Brauntönen färben.

Beispiel 275

0,1 Mol des Kondensationsproduktes aus 1,3-Diaminobenzol -4- sulfonsäure und 2-Trichlormethyl-4,6-difluor -5- chlorpyrimidin wird wie in Beispiel 2 beschrieben diazotiert und die Suspension bei pH 2–3 mit 0,1 Mol 1-Amino -8-hydroxynaphthalin-3,6-disulfonsäure gekuppelt. Nach beendeter Kupplung wird die dunkelrote Farbstofflösung mit der Suspension der Diazotierung aus Anilin-2,5-disulfonsäure versetzt. Zur zweiten Kupplung wird der pH-Wert des Reaktionsgemisches durch Zutropfen einer 20%igen Sodalösung auf 7–8 gestellt. Nach beendeter Kupplung wird der Farbstoff der Formel

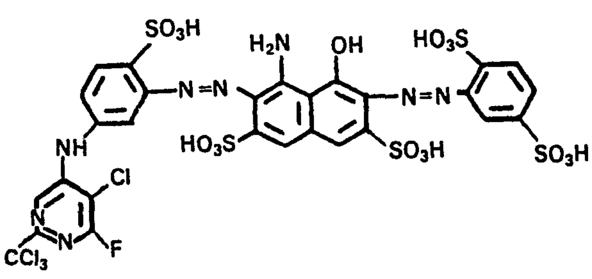

ausgesalzen, isoliert und getrocknet. Er stellt dann ein dunkles Pulver dar, das sich in Wasser mit blauer Farbe löst und Baumwolle in dunkelblauen bis schwarzen Farbtönen färbt.

Verwendet man anstelle von 2-Trichlormethyl-4,6-difluor -5- chlorpyrimidin die entsprechenden Mengen 2-Dichlormethyl-4,6-difluor -5-

chlorpyrimidin, 2-Trichlormethyl-4,6-difluorpyrimidin oder 2-Chlormethyl-4,6-difluor -5- chlorpyrimidin und verfährt analog wie oben beschrieben, so erhält man Farbstoffe, die Wolle und Baumwolle in dunkelblauen bis schwarzen Tönen färben.

Verwendet man in den oben beschriebenen Farbstoffen anstelle von 1-Amino -8- hydroxynaphthalin-3,6-disulfonsäure 1-Amino -8- hydroxynaphthalin-4,6-disulfonsäure, so erhält man Farbstoffe, die Wolle und Baumwolle in dunkelblauen bis schwarzen Tönen färben.

Beispiel 276

Die in schwach saurem pH-Bereich ausgeführte Kupplung von 0,1 Mol der Diazoniumverbindung aus Anilin -4- sulfonsäure mit 0,1 Mol 1-Amino -8- hydroxynaphthalin-3,6-disulfonsäure führt zu einer dunkelroten Lösung des Monoazofarbstoffs, der bei pH 6–7 mit 0,1 Mol der Diazoniumverbindung aus dem Kondensationsprodukt von 1,3-Diaminobenzyl -4- sulfonsäure und 2-Trichlormethyl-4,6-difluor -5- dichlorpyrimidin zu einem dunkelblauen Farbstoff gekuppelt werden kann. Nach Aussalzen, Isolieren und Trocknen fällt der Farbstoff der Formel

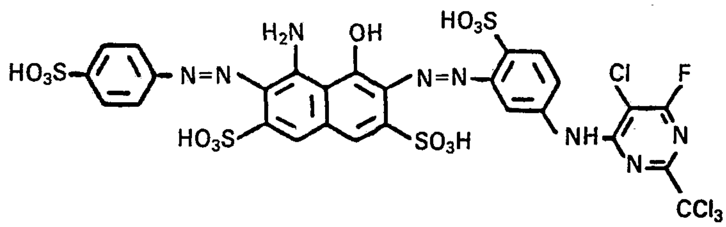

als dunkles Pulver an, das sich in Wasser mit blauer Farbe löst und Baumwolle in dunkelblauen bis schwarzen Farbtönen färbt.

Verwendet man anstelle von 2-Trichlormethyl-4,6-difluor -5- chlorpyrimidin die entsprechenden Mengen 2-Dichlormethyl-4,6-difluor -5-chlorpyrimidin, 2-Trichlormethyl-4,6-difluorpyrimidin oder 2-Chlormethyl-4,6-difluor -5- chlorpyrimidin und verfährt analog wie oben beschrieben, so erhält man Farbstoffe, die Wolle und Baumwolle in dunkelblauen bis schwarzen Tönen färben.

Verwendet man in den oben beschriebenen Farbstoffen anstelle von 1-Amino -8- hydroxynaphthalin-3,6-disulfonsäure 1-Amino -8- hydroxynaphthalin-4,6-disulfonsäure, so erhält man Farbstoffe, die Wolle und Baumwolle in schwarzen Tönen färben.

Beispiel 277

0,1 Mol des in üblicher Weise durch Einwirkung von Chlorsulfonsäure und Thionylchlorid auf Kupferphthalocyanin frisch hergestellten Kupferphthalocyanin-tetrasulfochlorids werden in Form des feuchten, gut gewachsenen Saugkuchens in 1000 Teilen Wasser und 500 Teilen Eis suspendiert und bei pH 8–9 mit 0,1 Mol des Kondensationsproduktes aus 1,3-Diaminobenzol und 2-Trichlormethyl-4,6-difluor -5- chlorpyrimidin zur Umsetzung gebracht. Durch Zutropfen von 20%iger Sodalösung wird dabei ein pH-Wert von ca. 8,5 aufrechterhalten. Nach beendeter Kondensation wird der Reaktivfarbstoff der Formel

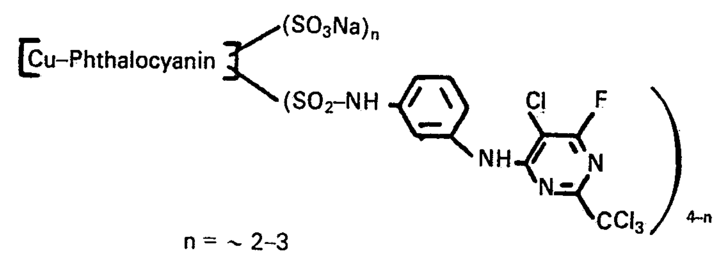

n = ~ 2–3

ausgesalzen, gewaschen und bei 50–100 °C in Vakuum getrocknet. Er stellt ein dunkelblaues, in Wasser mit blauer Farbe lösliches Pulver dar, das Baumwolle in klaren grünstichig blauen Farbtönen färbt.

Verwendet man anstelle von 2-Trichlormethyl-4,6-difluor -5- chlorpyrimidin die entsprechenden Mengen 2-Dichlormethyl-4,6-difluor -5-chlorpyrimidin, 2-Trichlormethyl-4,6-difluorpyrimidin oder 2-Chlormethyl-4,6-difluor -5- chlorpyrimidin und verfährt analog wie oben beschrieben, so erhält man Farbstoffe, die Wolle und Baumwolle in klaren grünstichig blauen Farbtönen färben.

Beispiel 278

0,01 Mol des Triphendioxazins der Formel

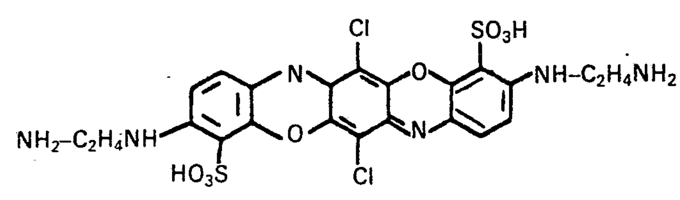

wird in 2 l Wasser bei Raumtemperatur gelöst und bei einem pH-Wert von 7–7,5 mit 6 g 2-Trichlormethyl-4,6-difluor -5- chlorpyrimidin umgesetzt, der pH-Wert wird mit Sodalösung gehalten. Es wird 1 Stunde nachgerührt, das ausgefallene Produkt abfiltriert und bei 60 °C getrocknet. Man erhält ein dunkelblaues Pulver, das Baumwolle und Wolle in leuchtend blauen Tönen färbt.

Verwendet man anstelle von 2-Trichlormethyl-4,6-difluor -5- chlorpyrimidin die entsprechenden Mengen 2-Dichlormethyl-4,6-difluor -5-chlorpyrimidin, 2-Trichlor-4,6-pyrimidin oder 2-Chlormethyl-4,6-difluor -5- chlorpyrimidin und verfährt analog wie oben beschrieben, so erhält man Farbstoffe, die Wolle und Baumwolle in leuchtend blauen Tönen färben.

Nach gleichen Verfahren und mit den genannten Difluorpyrimidinen liefern auch die folgenden Verbindungen im ersten Falle leuchtend blaue, im zweiten Fall leuchtend grünstichig blaue Färbungen auf Baumwolle und Wolle

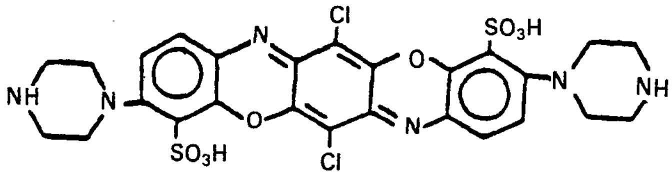

(Umsetzung mit 2 Mol Reaktivkomponente)

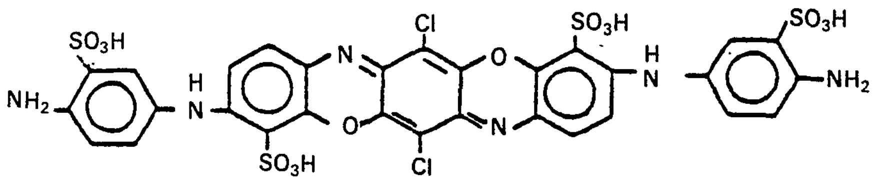

(Umsetzung mit 2 Mol Reaktivkomponente)

Beispiel 279

0,1 Mol des Kupferkomplexes von N-(2-Carboxy-5-sulfophenyl)-N-(2'-hydroxy-3'-amino-5'-sulfophenyl)-ms-phenylformazan-di-Natriumsalz werden in 500 ml Wasser gelöst und bei 30–50° mit 25 Teile 2-Trichlormethyl-4,6-difluor -5- chlorpyrimidin versetzt.

Durch Zugabe von Sodalösung wird ein pH-Wert von 6–6,5 aufrecht erhalten. Man salzt mit Natriumchlorid aus, saugt den ausgefallenen Farbstoff ab und trocknet bei 30–40 °C im Vakuum.

Der erhaltene Farbstoff der Formel

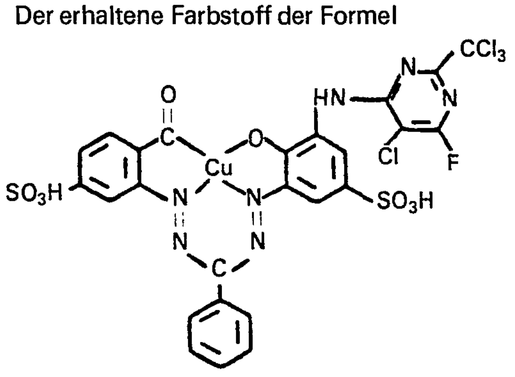

färbt Zellulose- und Polyamidfasern in echten blauen Tönen.

Verwendet man anstelle von 2-Trichlormethyl-4,6-difluor -5- chlorpyrimidin die entsprechenden Mengen 2-Dichlormethyl-4,6-difluor -5-chlorpyrimidin, 2-Trichlormethyl-4,6-difluorpyrimidin oder 2-Chlormethyl-4,6-difluor -5- chlorpyrimidin und verfährt analog wie oben beschrieben, so erhält man Farbstoffe, die Wolle und Baumwolle in echten blauen Tönen färben.

Verwendet man die in der folgenden Tabelle aufgeführten Kupferkomplexe und die oben angegebenen Difluorpyrimidine und verfährt wie oben angegeben, so erhält man weitere Farbstoffe, die Zellulose- und Polyamidfasern in echten blauen Tönen färben.

| Beispiel Nr. | Aminoformazan | Nuance auf Baumwolle |
|---|---|---|
| 280 | N-(2-Hydroxy -3- amino -5- sulfophenyl)-N'-(2'-carboxy-4'-sulfophenyl)-ms-(2''-chlor-5''-sulfophenyl)-formazan, Cu-Komplex, | blau |
| 281 | N-(2-Hydroxy -5- amino -3- sulfo- | blau |

| Beispiel Nr. | Aminoformazan | Nuance auf Baumwolle |
|---|---|---|
| | phenyl)-N'-(2', 5'-disulfophenyl)-ms-phenylformazan, Cu-Komplex, | |
| 282 | N-(2-Carboxy-4-aminophenyl)-N'-(2'-hydroxy-5'-methylsulfonyl-3'-sulfophenyl)-ms-(2"-sulfophenyl)-formazan, Cu-Komplex, | blau |
| 283 | N-(2-Carboxy-5-sulfophenyl)-N'-(2'-hydroxy-3', 5'-disulfophenyl)-ms-(3"-aminophenyl)-formazan, Cu-Komplex, | grünstichig blau |
| 284 | N-(4-Amino-2-sulfophenyl)-N'-(2'-hydroxy-4'-sulfophenyl)-ms-(4"-chlor-3"-sulfophenyl)-formazan, Cu-Komplex, | blau |
| 285 | N-(2-Hydroxy-3-amino-5-sulfophenyl)-N'-(2'-hydroxy-4'-sulfophenyl)-ms-(2"-sulfophenyl), Cu-Komplex, | marineblau |
| 286 | N-(2-Carboxy-5-sulfophenyl)-N'-(2'-hydroxy-5'-amino-3'-sulfophenyl)-ms-(4"-sulfophenyl)-formazan, Cu-Komplex, | blau |
| 287 | N-(2-Carboxy-5-sulfophenyl)-N'-(2'-hydroxy-3'-amino-5'-sulfophenyl)-ms-phenylformazan, Cu-Komplex | blau |
| 288 | N-(2-Carboxy-4-sulfophenyl)-N'-(2'-hydroxy-3'-amino-5'-sulfophenyl)-ms-phenylformazan, Cu-Komplex, | blau |
| 289 | N-(2,4-Disulfophenyl)-N'-(2'-hydroxy-4,6-disulfophenyl)-ms-(3"-aminophenyl)-formazan, Cu-Komplex, | blau |
| 290 | N-(2-Carboxy-5-sulfophenyl)-N'-(2'-hydroxy-3'-amino-5'-sulfophenyl-ms-(4"-methoxyphenyl)-formazan, Cu-Komplex, | blau |
| 291 | N-(2-Carboxy-5-sulfophenyl)-N'-(2'-hydroxy-4'-methylsulfonyl-6'-sulfophenyl)-ms-(3"-aminophenyl)-formazan, Cu-Komplex, | blau |
| 292 | N-(2-Hydroxy-5-sulfophenyl)-N'-(2'-hydroxy-3', 5'-disulfophenyl-ms-(4"-aminophenyl)-formazan, Cu-Komplex, | blau |
| 293 | N-(2-Carboxy-5-sulfophenyl)-N'-(2'-hydroxy-3'-amino-5'-sulfophenyl)-ms-(4"-methyl-3"-bromphenyl)-formazan, Cu-Komplex, | blau |
| 294 | N-(2-Carboxy-4-aminophenyl)-N'-(2'-hydroxy-4-'-sulfonnaphth-1'-yl)-ms-(2"-sulfophenyl)-formazin, Cu-Komplex, | blau |

Beispiel 295

0,1 Mol der bekannten Kupferkomplexverbindung der Formel

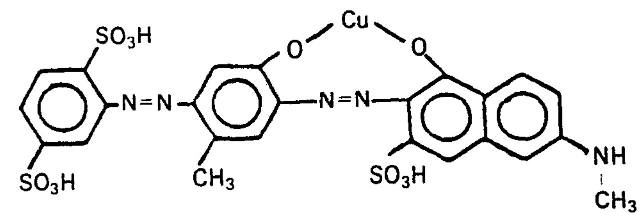

wird in 1500 Volumenteilen Wasser bei pH 6,5 gelöst und bei 40–50 °C mit 30 Teilen 2-Trichlormethyl-4,6-difluor -5- chlorpyrimidin portionsweise versetzt, wobei die freiwerdende Säure so mit Sodalösung neutralisiert wird, dass während der Kondensationszeit von ca. 2 Stunden ein pH-Wert von 6,5 gehalten wird.

Nach beendeter Umsetzung wird der Farbstoff der Formel

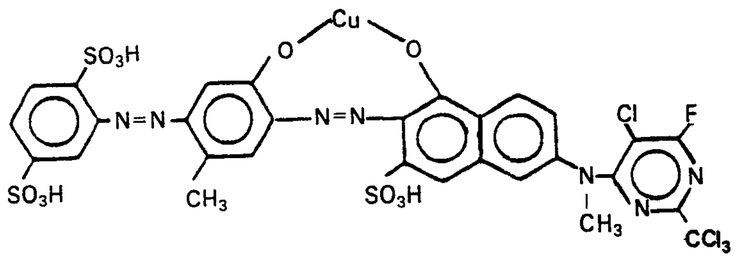

ausgesalzen, isoliert und bei 50 °C im Vakuum getrocknet.

Man erhält ein dunkles Pulver, das sich in Wasser mit blauer Farbe löst und Baumwolle in marineblauen Tönen färbt.

Farbstoffe, die Baumwolle in ähnlichen marineblauen Farbtönen färben, können erhalten werden, wenn man in obigem Beispiel die Kupplungskomponente 6-N-Methylamino -1- hydroxynaphthalin -3- sulfonsäure durch die folgenden Aminohydroxynaphthalinsulfonsäuren ersetzt:

6-Amino -1- hydroxynaphthalin -3- sulfonsäure

6-N-Methylamino -1- hydroxynaphthalin-3,5-disulfonsäure

6-Amino -1- hydroxynaphthalin-3,5-disulfonsäure

6-Amino -1- hydroxynaphthalin-4,8-disulfonsäure

7-Amino -1- hydroxynaphthalin-3,6-disulfonsäure

5-Amino -1- hydroxynaphthalin -3- sulfonsäure.

Weitere Farbstoffe, die Baumwolle in marineblauen Farbtönen färben, können erhalten werden, wenn man die folgenden bekannten Kupferkomplexverbindungen der Formeln

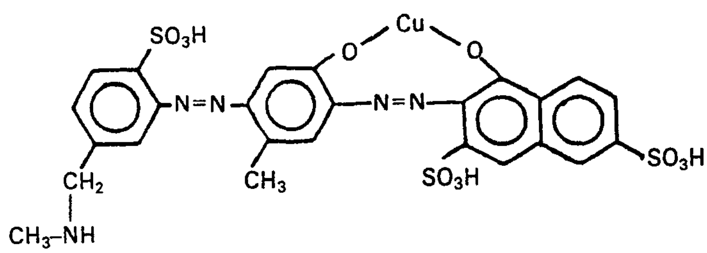

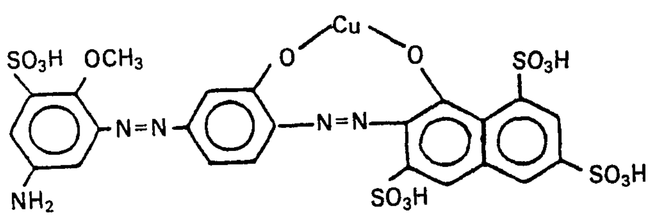

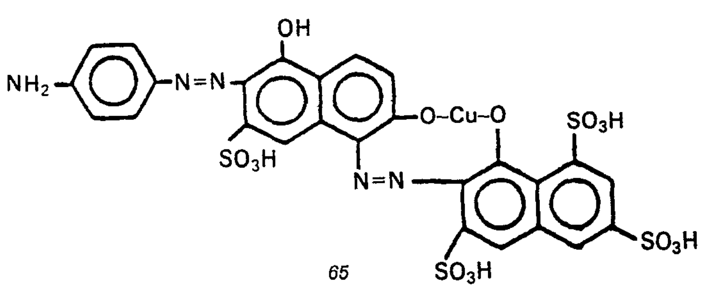

mit 2-Trichlormethyl-4,6-difluor -5- chlorpyrimidin umsetzt.

Verwendet man in den oben beschriebenen Farbstoffen anstelle von 2-Trichlormethyl-4,6-difluor -5- chlorpyrimidin die entsprechenden Mengen 2-Dichlormethyl-4,6-difluor -5- chlorpyrimidin, 2-Trichlormethyl-4,6-difluorpyrimidin oder 2-Chlormethyl-4,6-difluor -5- chlorpyrimidin und verfährt analog wie oben beschrieben, so erhält man Farbstoffe, die Baumwolle in marineblauen Farbtönen färben.

Beispiel 296

0,1 Mol der bekannten Aminodisazoverbindung der Formel

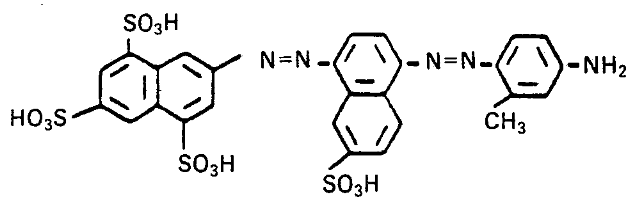

wird in 1500 Volumenteilen Wasser bei pH 6,5 gelöst und bei 50–60 °C mit 25 Teilen 2-Trichlormethyl-4,6-difluor -5- chlorpyrimidin portionsweise versetzt, wobei die freiwerdende Säure so mit Sodalösung neutralisiert wird, dass während der Kondensationszeit von ca. 2 Stunden ein pH-Wert von 6,5 gehalten wird. Nach beendeter Umsetzung wird der Farbstoff der Formel

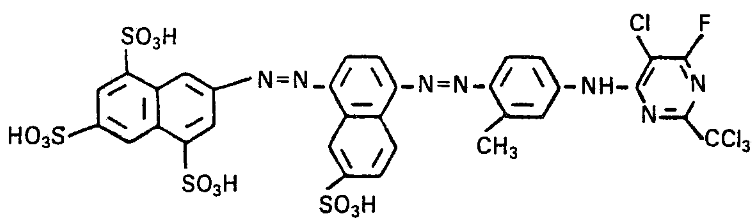

ausgesalzen, isoliert und bei 50 °C im Vakuum getrocknet.

Man erhält ein braunes Pulver, das sich in Wasser mit dunkelbrauner Farbe löst und Baumwolle in braunen Tönen färbt.

Farbstoffe, die Baumwolle in orange bis braunen Farbtönen färben, können erhalten werden, wenn man die Aminodisazofarbstoffe der folgenden Tabelle mit 2-Trichlormethyl-4,6-difluor -5-chlorpyrimidin umsetzt.

| Beispiel | Aminodisazofarbstoff | Farbton der Reaktivfärbung |
|---|---|---|
| 297 | 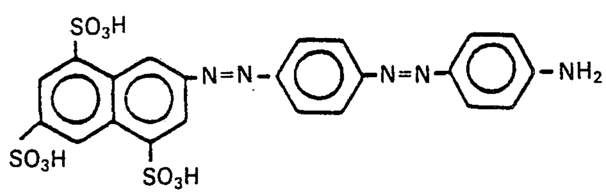 | Orange |
| 298 | 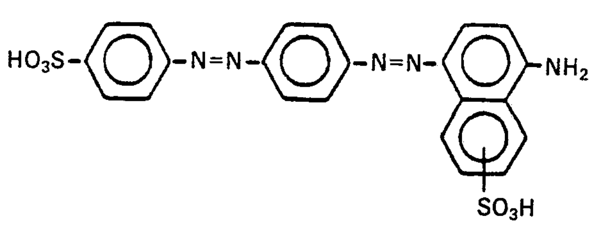 | Orange-Braun |
| 299 | 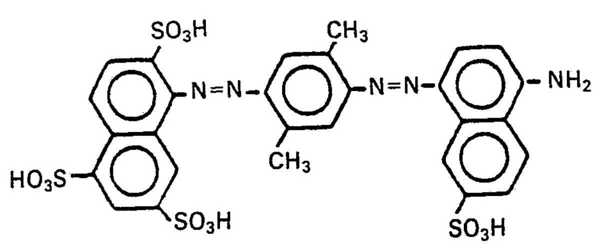 | Braun |

| Beispiel | Aminodisazofarbstoff | Farbton der Reaktivfärbung |
|---|---|---|
| 300 | 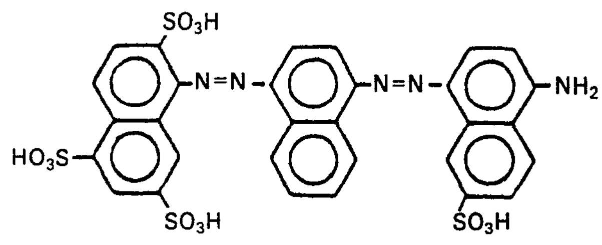 | Braun |

Verwendet man in den oben beschriebenen Farbstoffen anstelle von 2-Trichlor-4,6-difluor -5- chlorpyrimidin die entsprechenden Mengen 2-Dichlormethyl-4,6-difluor -5- chlorpyrimidin, 2-Trichlormethyl-4,6-difluorpyrimidin oder 2-Chlormethyl-4,6-difluor -5- chlorpyrimidin und verfährt analog wie oben beschrieben, so erhält man Farbstoffe, die Wolle und Baumwolle in orange bis braunen Tönen färben.

Beispiel 301

0,1 Mol des bekannten Diaminotriazols der Formel

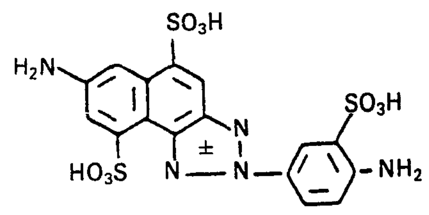

werden in 1000 Volumenteilen Wasser bei pH 6 gelöst und bei 40–60 °C mit 27 Teilen 2-Trichlormethyl -5- chlor-4,6-difluorpyrimidin – in Form einer Emulsion in Wasser – portionsweise versetzt. Die freiwerdende Säure wird durch Zutropfen von 20%iger Sodalösung neutralisiert, so dass während der Kondensationszeit von ca. 2 Stunden ein pH-Wert von 6,5 gehalten wird.

Nach beendeter Kondensation wird das Monoaminotriazol wie üblich angesäuert, diazotiert und mit 0,1 Mol Barbitursäure sodaalkalisch gekuppelt. Nach beendeter Kupplung wird der Farbstoff der Formel

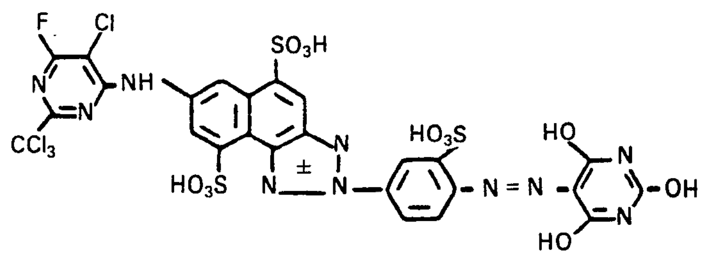

ausgesalzen, isoliert und bei 50° im Vakuum getrocknet. Man erhält ein gelbes Pulver, das sich in Wasser mit gelber Farbe löst und Baumwolle in brillanten grünstichig gelben Tönen färbt.

Weitere Farbstoffe, die Baumwolle in gelben Farbtönen färben, können erhalten werden, wenn man die Barbitursäure durch folgende Kupplungskomponenten ersetzt:

2,6-Dihydroxypyridin -4- carbonsäure

1-[4'-Sulfophenyl] -3- carboxypyrazolon-(5)

1-[2'-Methyl-4'-sulfophenyl] -3- carboxypyrazolon-(5)

1,4-Dimethyl -2- hydroxy-pyridon-(6)-sulfonsäure.

Verwendet man in den oben beschriebenen Farbstoffen anstelle von 2-Trichlormethyl-4,6-difluor -5- chlorpyrimidin die entsprechenden Mengen 2-Dichlormethyl-4,6-difluor -5- chlorpyrimidin, 2-Trichlormethyl-4,6-difluorpyrimidin oder 2-Chlormethyl-4,6-difluor -5- chlorpyrimidin und verfährt analog, so erhält man Farbstoffe, die Baumwolle in gelben Tönen färben.

In der folgenden Tabelle sind weitere aminogruppenhaltige Chromophore aufgeführt, die mit 2-Trichlormethyl-4,6-difluor -5- chlorpyrimidin, 2-Trichlormethyl-4,6-difluorpyrimidin und 2-Chlormethyl-4,6-difluor -5- chlorpyrimidin zu Reaktivfarbstoffen umgesetzt werden können, die Baumwolle in den angegebenen Nuancen färben.

Beispiel

302 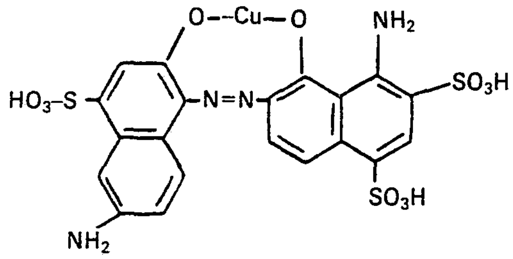 blau

(Ums. mit 2 Mol Reaktivkomponente)

303 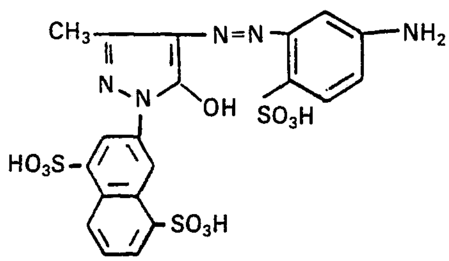 gelb

304 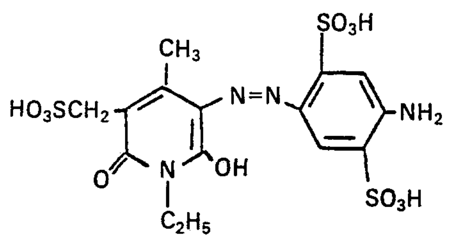 gelb

305 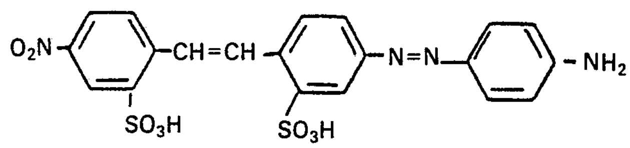 gelb

306 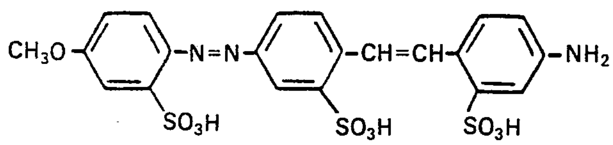 gelb

307 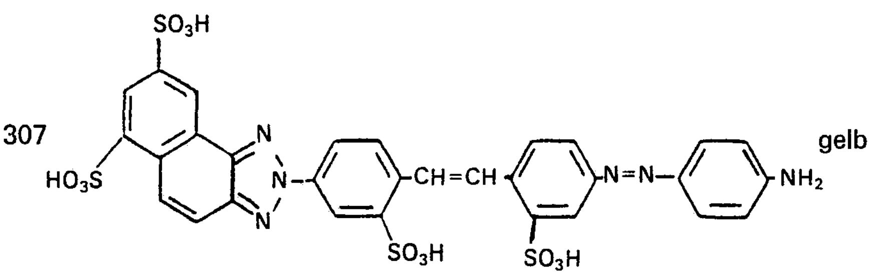 gelb

308 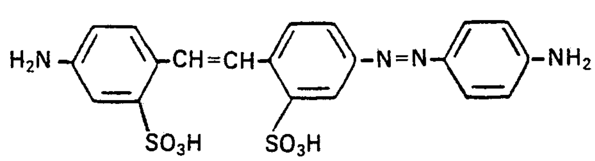 gelb

(Umsetzung mit 2 Mol Reaktivkomponente)

| Beispiel | | |
|---|---|---|
| 309 | 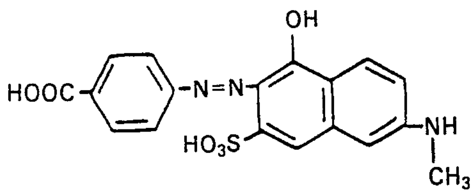 | orange |
| 310 | 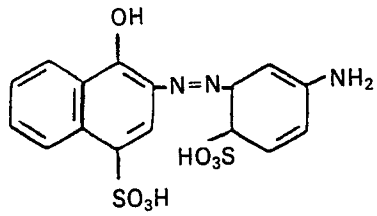 | scharlach |
| 311 | 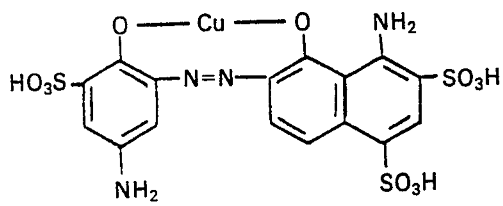<br>(Umsetzung mit 2 Mol Reaktivkomponente) | rotst. blau |
| 312 | 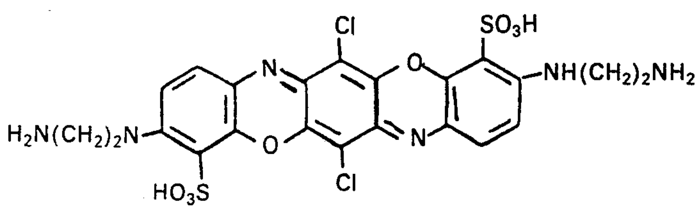 | blau |
| 313 | 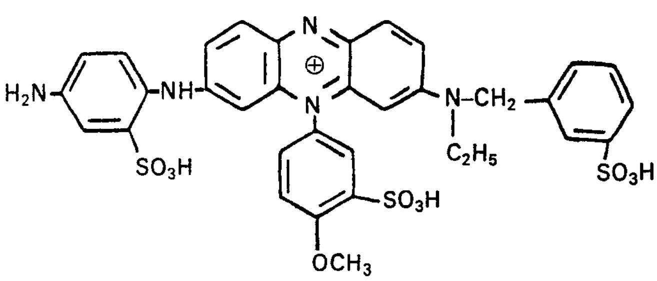 | rotst. blau |
| 314 | 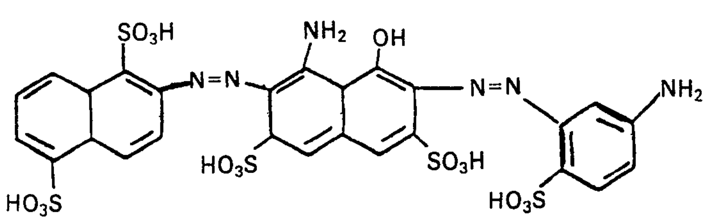 | marine blau |
| 315 | 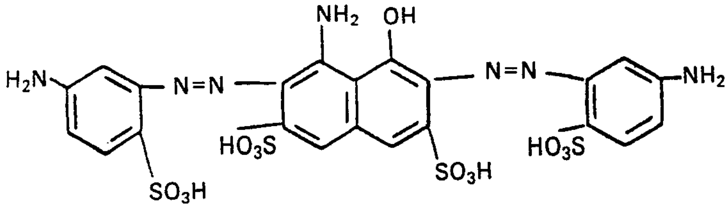 | marine blau |

Beispiel

316 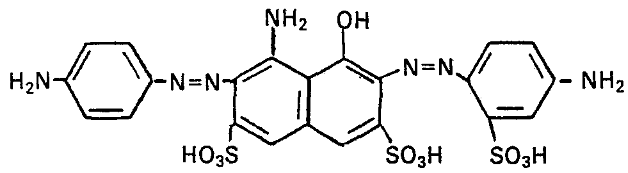 grün-blau

(Umsetzung mit 2 Mol Reaktivkomponente)

317 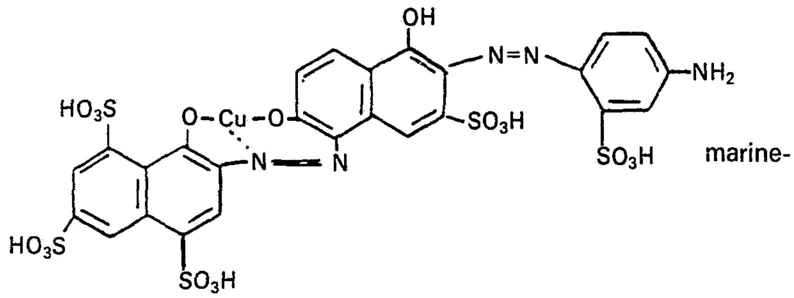 marine-blau

318 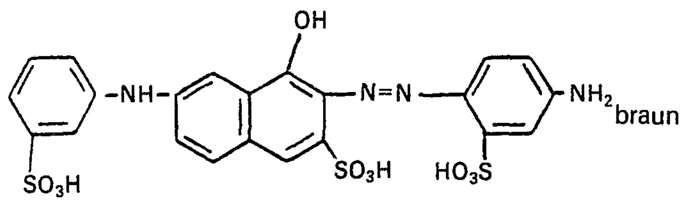 braun

319 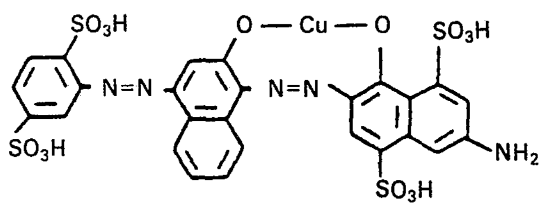 grün

320 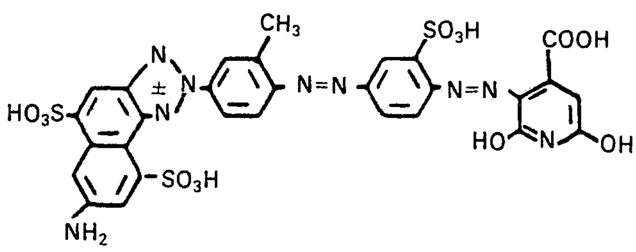 orange

321 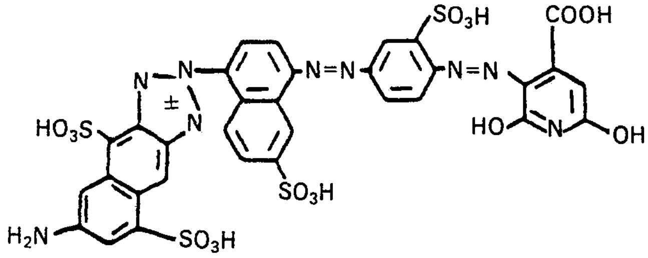 scharlach

| Beispiel | | |
|---|---|---|
| 322 | 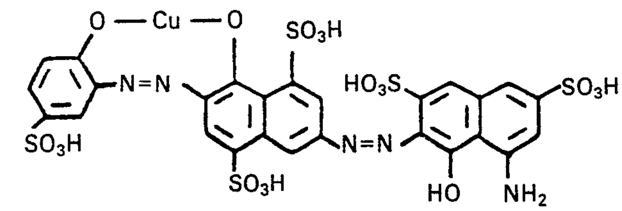 | dunkelblau |
| 323 | 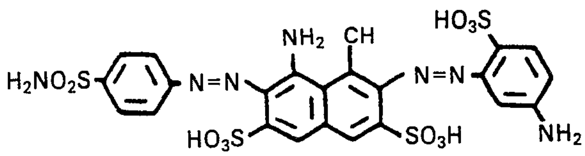 | marineblau |
| 324 | 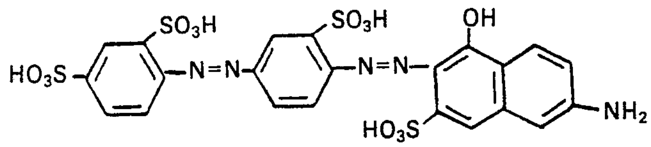 | rot |
| 325 | 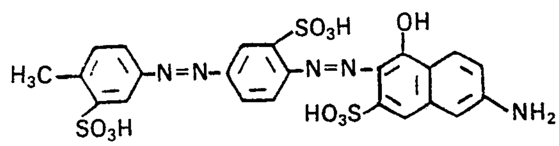 | rot |

**Patentansprüche**

1. Reaktivfarbstoffe der Formel

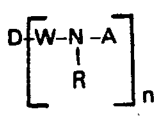 (I)

worin

D = Rest eines organischen Farbstoffs der Mono- oder Polyazo-, Metallkomplexazo-, Phthalocyanin-, Formazan-, Azomethin-, Dioxazin-, Phenazin-, Stilben-, Triphenylmethan-, Xanthen-, Thioxanthon- oder Nitroaryl-Reihe,

W = direkte Bindung oder Brückenglied,

R = Wasserstoff oder Alkyl,

A = Rest der Formel

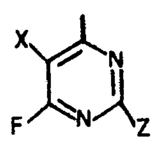 (II)

**worin**

X = Wasserstoff oder Chlor,

Z = $CCl_3$, $CHCl_2$ oder $CH_2Cl$ und

n = 1 oder 2 ist.

2. Reaktivfarbstoffe gemäss Anspruch 1, dadurch gekennzeichnet, dass der Rest A eine der folgenden Bedeutungen a) bis d) besitzt:

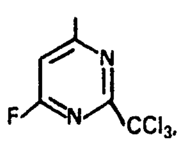

a

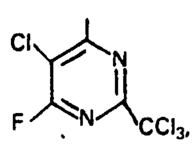

b

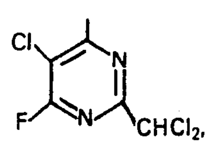

c

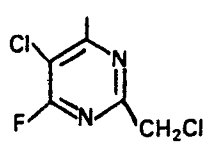

d

(III)

3. Reaktivfarbstoffe gemäss Anspruch 1 bis 2, dadurch gekennzeichnet, dass W für eine direkte Bindung oder für eines der folgenden Brückenglieder steht:

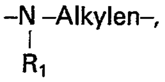

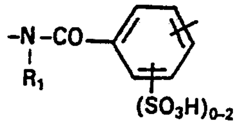

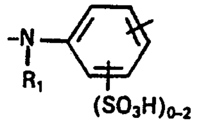

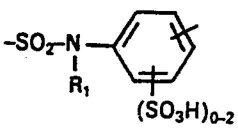

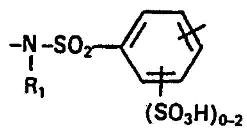

–O–Alkylen–,

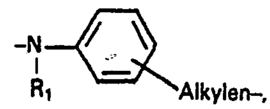

–S-Alkylen-, -Alkylen-, -Alkylen-CO–, -Alkylen-$SO_2$–, wobei $R_1$ für Wasserstoff oder Alkyl steht, und Alkylen einen Alkylenrest mit 1 bis 4 C-Atomen bedeutet.

4. Reaktivfarbstoffe gemäss Anspruch 1 bis 3, dadurch gekennzeichnet, dass folgende Farbstoffe der Strukturformel (I) vorliegen, wobei W, R, n und A die in Anspruch 1 angegebene Bedeutung besitzen:

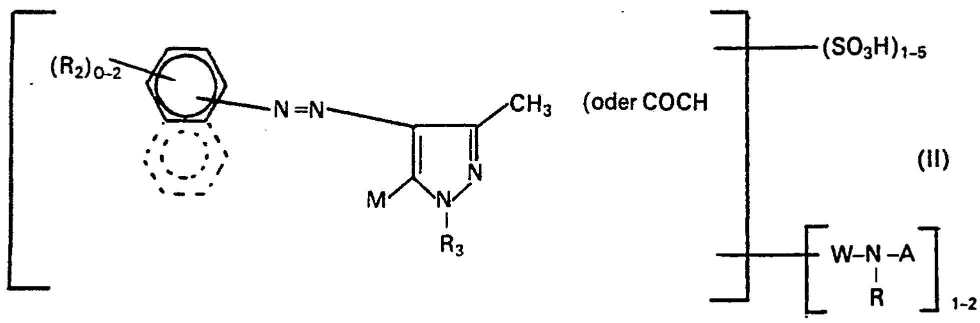

(II)

worin
M =OH, $NH_2$, $NR_3R_4$, $OR_3$

$R_2$ =Alkyl, Alkoxy, Halogen, insbesondere Cl,

$R_3$ und $R_4$ = Wasserstoff, Alkyl, Aryl, Hetaryl, Aralkyl, oder wobei $R_3$ und $R_4$ zusammen für gegebenenfalls durch NH oder O unterbrochenes $C_4$–$C_6$-Alkylen stehen.

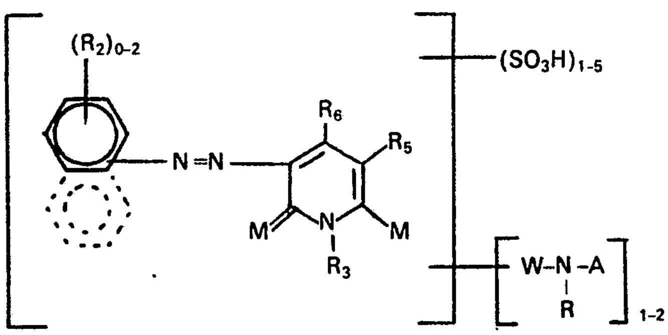

(III)

$R_5$ = –$COOR_3$, –$CONR_3R_4$, –CN, –$CH_2$–$SO_3H$, $SO_3H$ oder –$CH_2$–$NR_3R_4$,
$R_6$ =–M, –$R_3$ oder –$R_5$,
M' =O, $NR_3$

wobei $R_3$ und $R_4$ = Wasserstoff, Alkyl, Aryl, Hetaryl, Aralkyl oder wobei $R_3$ und $R_4$ zusammen für gegebenenfalls durch NH oder O unterbrochenes $C_4$–$C_6$-Alkylen stehen.

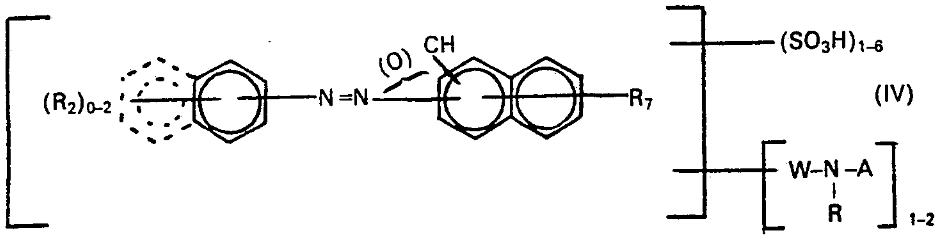

(IV)

$R_7$ = Wasserstoff, $-NR_3-CO-R_8$, $-NR_3-SO_2-R_8$
o = ortho-ständige Stellung der jeweiligen Reste wobei

$R_3$ = Wasserstoff, Alkyl, Aryl, Hetaryl, Aralkyl,
$R_8$ = Alkyl, Aryl, Hetaryl oder Aralkyl

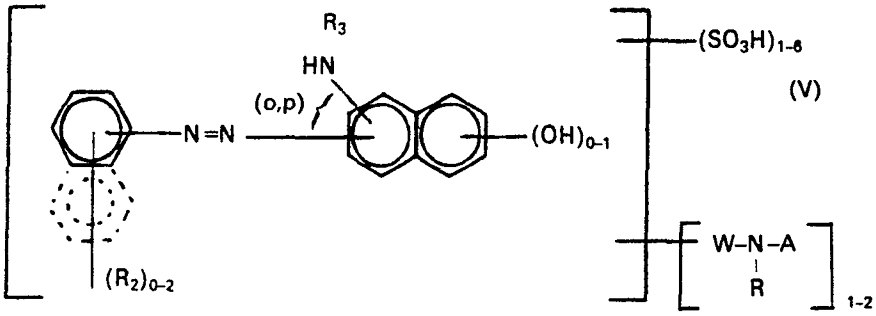

(V)

(o, p) = ortho- oder paraständige Stellung der jeweiligen Reste wobei
$R_2$ = Alkyl, Alkoxy, Halogen (insbesondere Cl)

$R_3$ = Wasserstoff, Alkyl, Aryl, Hetaryl oder Aralkyl.

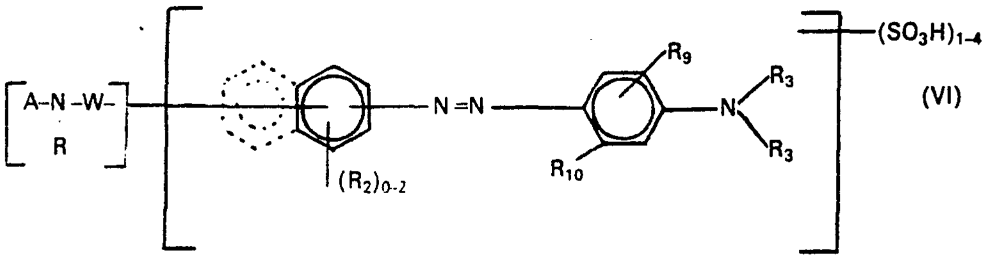

(VI)

$R_9$ und $R_{10}$ = Wasserstoff, $R_8$, $-OR_3$, Halogen, $-NR_3R_4$, $-COOR_3$, $-NR_3-CO-R_4$, $-O-CO-R_4$, $-NR_3-SO_2-R_4$, $-O-SO_2R_4$, $-NR_3-CO-NR_3R_4$ wobei
$R_3$ und $R_4$ = Wasserstoff, Alkyl, Aryl, Hetaryl, Aralkyl oder wobei $R_3$ und $R_4$ zusammen für gegebenenfalls durch NH oder O unterbrochenes $C_4$-$C_6$-Alkylen stehen
und $R_8$ = Alkyl, Aryl, Hetaryl oder Aralkyl.

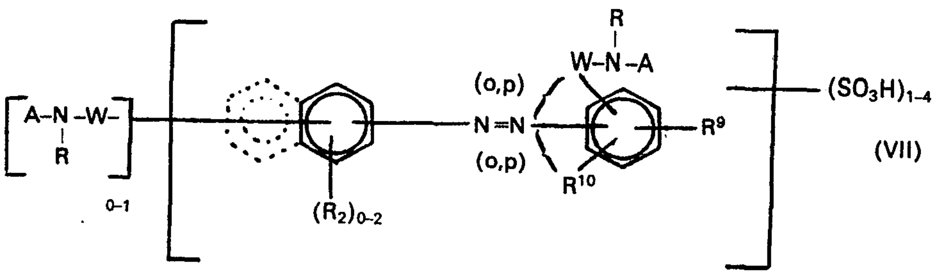

(VII)

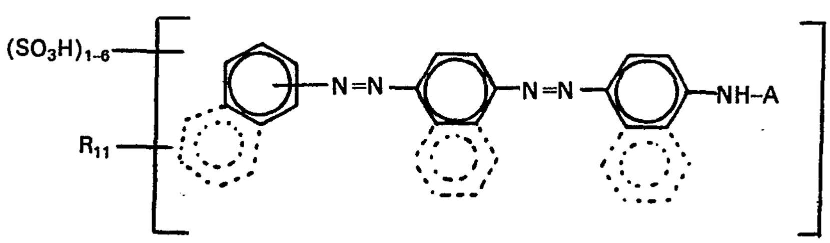

(VIIa)

$R_{11}$ = $R_9$, $C_1$–$C_4$-Alkyl

wobei
(o, p) = ortho- oder paraständige Stellung der jeweiligen Reste
$R_2$ = Alkyl, Alkoxy, Halogen, und wobei
$R_9$ und $R_{10}$ die unter Formel VI angegebene Bedeutung haben,

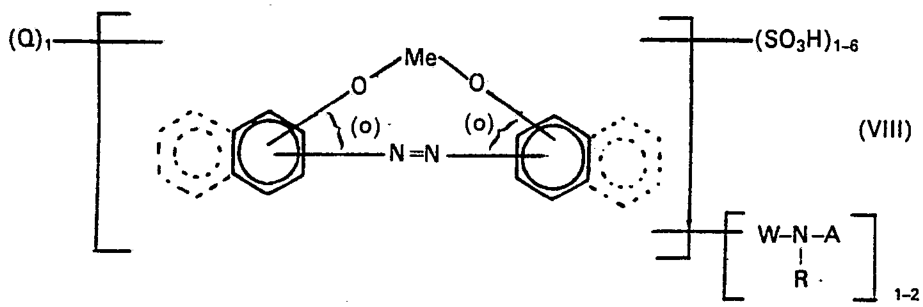

(VIII)

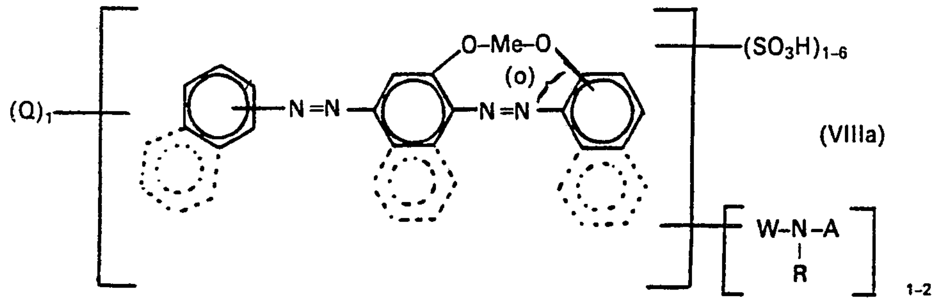

(VIIIa)

wobei

(o) = orthoständige Stellung der jeweiligen Reste

Me = Cu, Cr,

Q = Alkyl, Alkoxy, Halogen, $-NO_2$, Acylamino wie $CH_3-CO-NR_3-$, $-COOR_3$, $-CONR_3R_4$, $-SO_2-NR_3R_4$

l = 0–4

und wobei $R_3$ und $R_4$ die unter Formel (VI) angegebene Bedeutung haben

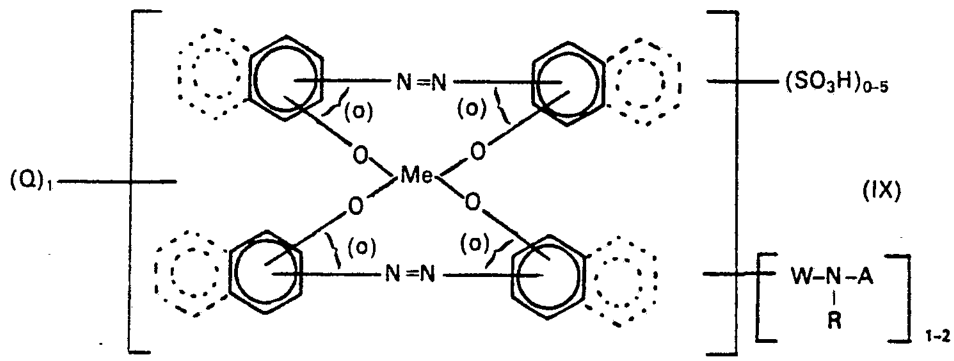

(IX)

Me = Co, Cr

l = 0–8

(o) = orthoständige Stellung der Substituenten

Q = Alkyl, Alkoxy, Halogen, $NO_2$, Acylamino wie $CH_3-CO-NR_3-$, $-COOR_3$, $-CONR_3R_4$, $-SO_2-NR_3R_4$

und wobei $R_3$ und $R_4$ die unter Formel (VI) angegebene Bedeutung haben,

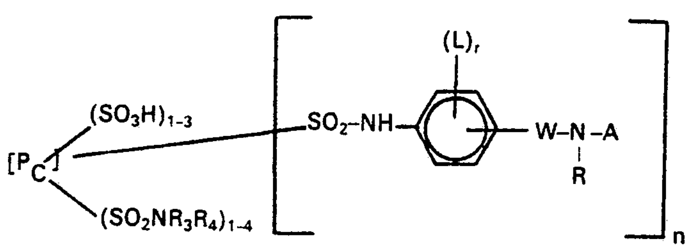

(X)

wobei

$P_c$ = Cu/Ni-Phthalocyanin-Rest

L = Substituent, insbesondere Sulfo oder Carboxy

r = 0–4

und wobei

$R_3$ und $R_4$ die unter Formel (VI) angegebene Bedeutung haben,

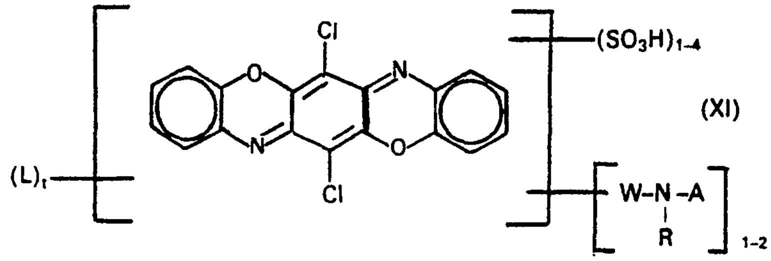

(XI)

wobei

L = Substituent, insbesondere Halogen, $C_{1-4}$-Alkyl, $C_{1-4}$-Alkoxy oder Carboxy,

t = 0 bis 3,

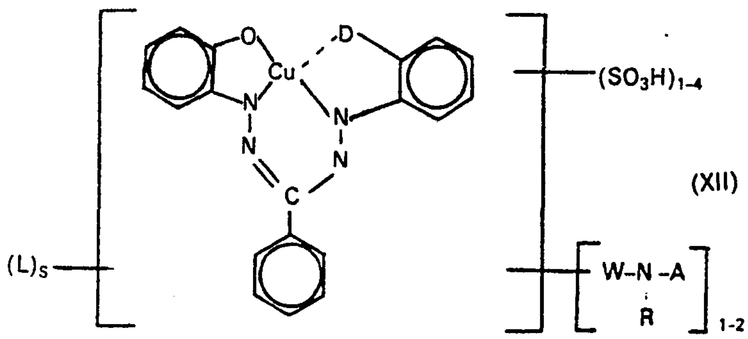

(XII)

wobei

L = Substituent, insbesondere Halogen, $C_{1-4}$-Alkyl, $C_{1-4}$-Alkoxy, Alkylsulfonyl, Aminosulfonyl, unkondensierte Phenylreste oder Carboxy

S = 0–6

D = zur Komplexbildung befähigte Gruppe wie –OH, –COOH oder $-SO_3H$,

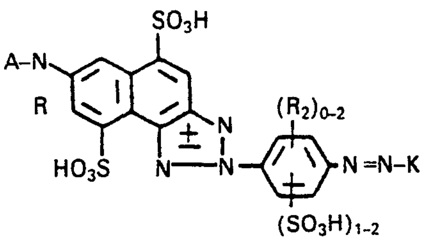

(XIII)

worin

K = Rest einer Kupplungskomponente, bevorzugt einer Kupplungskomponente der cyclischen Enolreihe, wie der Pyridon- oder der Pyrimidonreihe,

$R_2$ = Alkyl, Alkoxy, Halogen (insbesondere Cl)

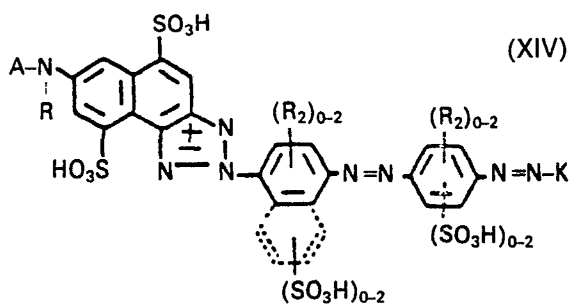

(XIV)

worin

$R_2$ = Alkyl, Alkoxy, Halogen (insbesondere Cl)

K = Rest einer Kupplungskomponente

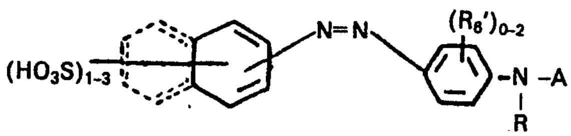

(XV)

worin

$R'_6$ = Wasserstoff, Alkyl, Aryl, Hetaryl, Aralkyl, $-COOR_3$, $-CONR_3R_4$, $-SO_3H$, –OH, $-NH_2$, $-NR_3R_4$, $-OR_3$, wobei $R_3$ und $R_4$ = Wasserstoff, Alkyl, Aryl, Hetaryl, Aralkyl

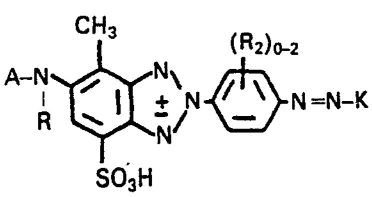

(XVI)

worin

$R_2$ = Alkyl, Alkoxy, Halogen (insbes. Cl)

K = Rest einer Kupplungskomponente

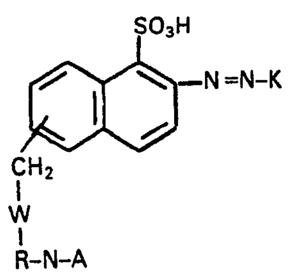

(XVII)

worin
K = Rest einer Kupplungskomponente

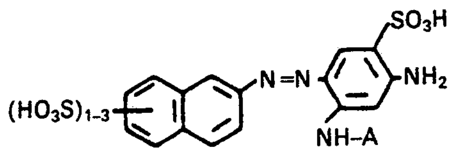
(XVIIa)

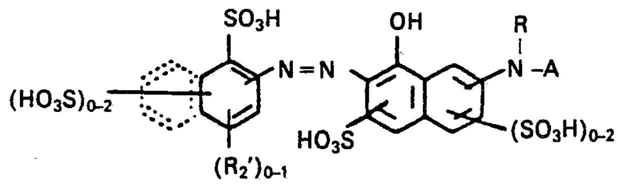
(XVIII)

worin
$R'_2$ = Alkyl, Alkoxy, Hydroxy, Halogen, ein Arylazorest oder ein Arylazomethinrest.

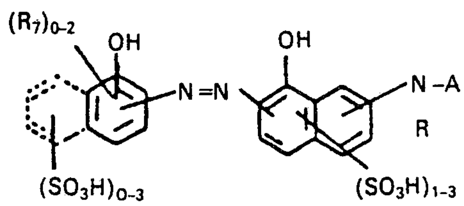
(XIX)

worin
$R_7$ = Wasserstoff, $NR_3-COR_8$, $-NR_3SO_2-R_8$,
wobei
$R_3$ = Wasserstoff, Alkyl, Aryl, Hetaryl, Aralkyl,
$R_8$ = Alkyl, Aryl, Hetaryl oder Aralkyl

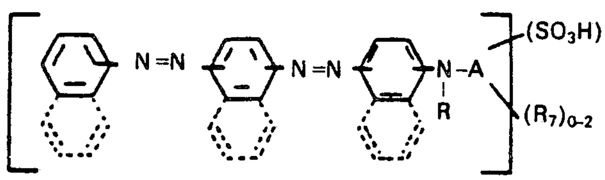
(XX)

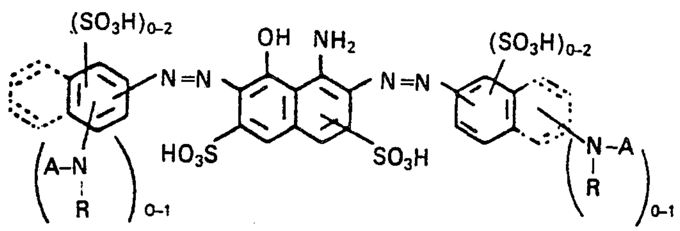
(XXI)

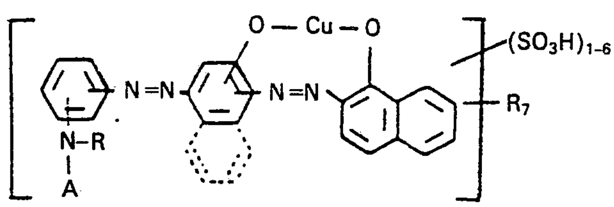
(XXII)

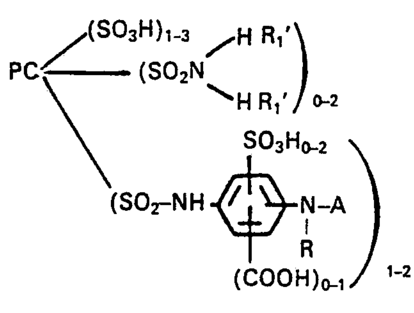
(XXIII)

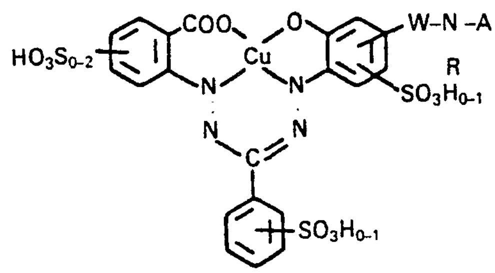

(XXIV)

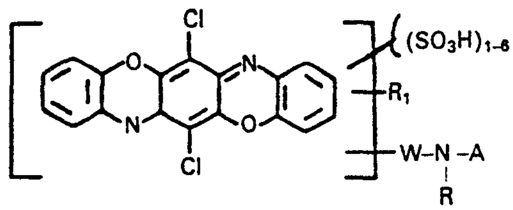

(XXV)

worin

$R_7$ = Wasserstoff, $-NR_3-COR_8$, $-NR_3-SO_2-R_8$,

wobei

$R_3$ = Wasserstoff, Alkyl, Aryl, Hetaryl, Aralkyl

$R_8$ = Alkyl, Aryl, Hetaryl, Aralkyl und worin

$R_1$ = Wasserstoff oder Alkyl und

$R'_1$ = Alkyl.

5. Reaktivfarbstoffe gemäss Anspruch 1 bis 4, dadurch gekennzeichnet, dass folgende Farbstoffe der Strukturformel (I) vorliegen, worin W für eine direkte Bindung steht, n = 1 und A die in Anspruch 1 angegebene Bedeutung besitzt:

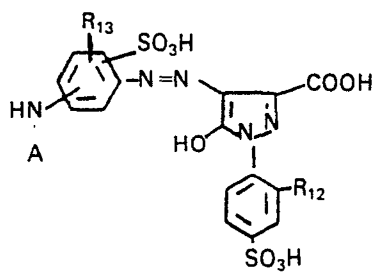

(XXVI)

wobei

$R_{12}$ = H, $CH_3$, Cl

$R_{13}$ = H, $CH_3$, Cl

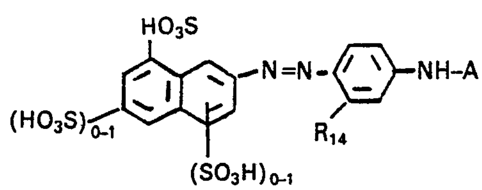

(XXVII)

wobei

$R_{14}$ = H, $CH_3$, $OCH_3$, $NHCOCH_3$, $NH-CONH_2$

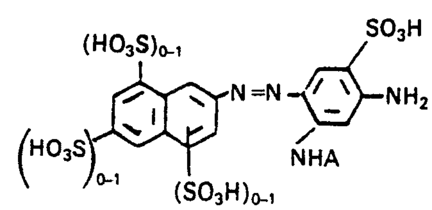

(XXVIII)

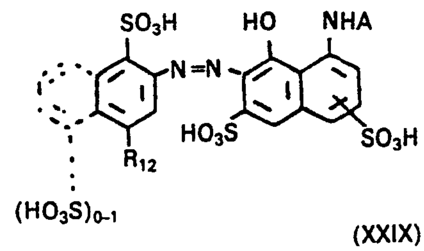

(XXIX)

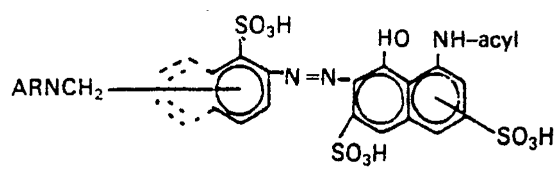

(XXX)

worin acyl = Acylrest, insbesondere Formyl, $C_1$–$C_4$-Alkylcarbonyl, Arylcarbonyl und bevorzugt gegebenenfalls durch $C_1$–$C_4$-Alkyl, OH, $SO_3H$, COOH substituiertes Phenylcarbonyl.

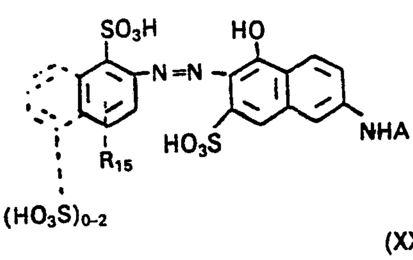

(XXXI)

$R_{15}$ = $R_{13}$, $CH_3$, $C_1$–$C_4$-Alkoxy, Acylamino

(XXXII)

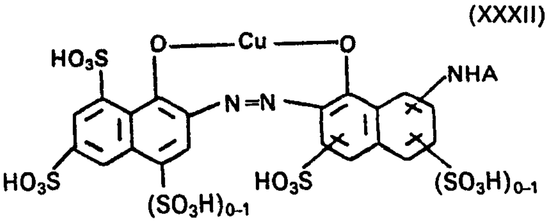

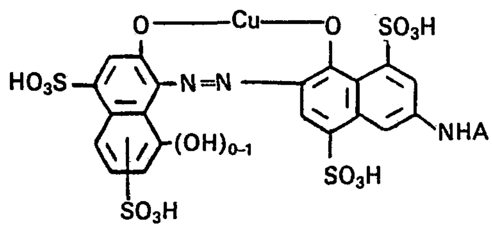

(XXXIII)

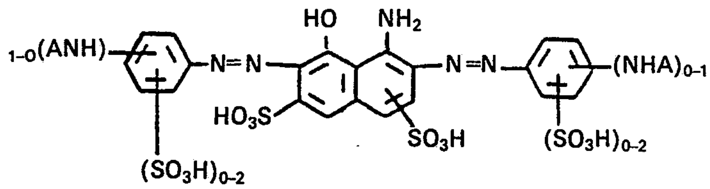

(XXXIV)

wobei in der Formel (XXXIV) der Rest $A\underset{H}{N}-$ im Molekül nur einmal vorhanden sein soll,

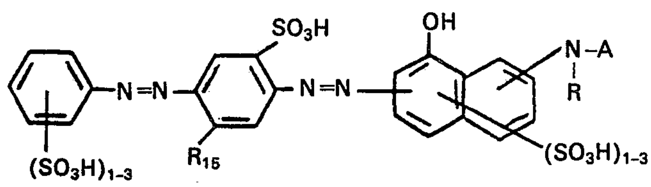

(XXXV)

6. Verfahren zur Herstellung von Reaktivfarbstoffen der Formel

$$D\left[W-\underset{R}{N}-A\right]_n \quad (I)$$

worin
D = Rest eines organischen Farbstoffs der Mono- oder Polyazo-, Metallkomplexazo-, Phthalocyanin-, Formazan-, Azomethin-, Dioxazin-, Phenazin-, Stilben-, Triphenylmethan-, Xanthen-, Thioxanthon- oder Nitroaryl-Reihe,
W = direkte Bindung oder Brückenglied,
R = Wasserstoff oder Alkyl,
A = Rest der Formel

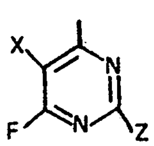

(II)

worin
X = Wasserstoff oder Chlor
Z = $CCl_3$, $CHCl_2$ oder $CH_2Cl$ und
n = 1 oder 2, dadurch gekennzeichnet, dass man
a) entweder Farbstoffe der Formel

$$D\left[W-\underset{R}{N}-H\right]_n \quad (IV)$$

wobei D, W, R und n die oben angegebene Bedeutung besitzen, mit n Mol des Halogenpyrimidins der Formel

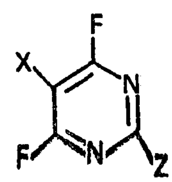

(V)

worin X und Z die oben angegebene Bedeutung haben, kondensiert,

7. Verbindungen der Formel

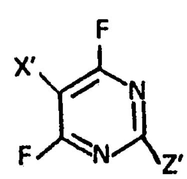

(IV)

worin
X' = Wasserstoff oder Chlor und
Z' = $CCl_3$, $CHCl_2$ oder $CH_2Cl$ mit der Massgabe, dass, falls X' für Chlor steht, Z' für $CHCl_2$ oder für $CH_2Cl$ stehen muss.

8. Verfahren zur Herstellung von Verbindungen der Formel

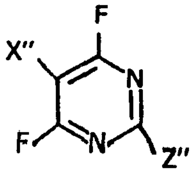

(IVa)

worin
X" = Wasserstoff oder Chlor und
Z" = $CCl_3$ oder $CH_2Cl$, dadurch gekennzeichnet, dass man Chlorpyrimidine der Formel

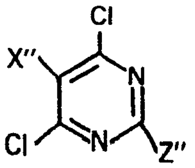

(V)

worin X" und Z" die oben angegebene Bedeutung besitzen in einem inerten Lösungsmittel, insbesondere in Tetramethylensulfon mit mindestens der doppeltmolaren Menge eines Alkalifluorids während 2 bis 10 Stunden bei 140 bis 210 °C, insbesondere bei 160 bis 200 °C umsetzt und die gewünschte Komponente abtrennt.

9. Verfahren zur Herstellung von 2-Dichlormethyl-4,6-difluor -5- chlorpyrimidin, dadurch gekennzeichnet, dass man 2-Dichlormethyl-4,5,6-trichlorpyrimidin mit wasserfreier Fluorwasserstoffsäure bei erhöhtem Druck und erhöhter Temperatur umsetzt und das entstehende 2-Dichlormethyl-4,6-difluor -5- chlorpyrimidin abtrennt.

10. Verwendung von Farbstoffen gemäss Anspruch 1 bis 5 zum Färben und Bedrucken von Substraten.

**Revendications**

1. Colorants réactifs de formule

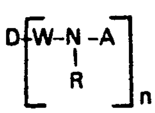

(I)

dans laquelle
D est le reste d'un colorant organique de la série mono- ou polyazo, complexe de métal azo, phthalocyanine, formazane, azométhine, dioxazine, phénazine, stilbène, triphénylméthane, xanthène, thioxanthone ou nitroaryle,
W est une liaison directe ou un chaînon de pontage,
R est l'hydrogène ou un groupe alkyle,
A est un reste de formule

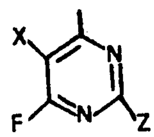

(II)

dans laquelle
X est l'hydrogène ou le chlore,
Z est un groupe $CCl_3$, $CHCl_2$ ou $CH_2Cl$ et
n a la valeur 1 ou 2.

2. Colorants réactifs suivant la revendication 1, caractérisés en ce que le reste A possède l'une des définitions (a) et (b) suivantes:

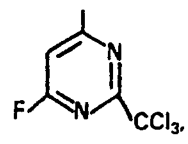

a

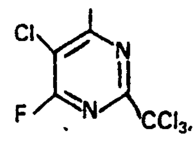

b

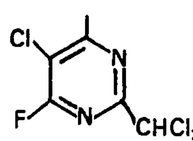

c

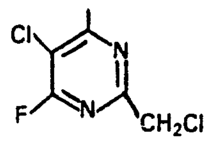

d

(III)

3. Colorants réactifs suivant les revendications 1 et 2, caractérisés en ce que W est une liaison directe ou représente l'un des chaînons de pontage suivants:
–N –Alkylène,
|
$R_1$

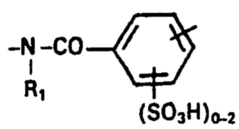

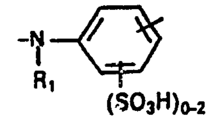

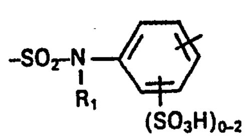

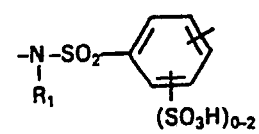

–O–Alkylène,

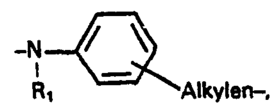

–S–Alkylène, –Alkylène, –Alkylène–CO, –Alkylène–$SO_2$–, où $R_1$ représente l'hydrogène ou un groupe alkyle, et le terme alkylène désigne un reste d'alkylène ayant 1 à 4 atomes de carbone.

4. Colorants réactifs suivant les revendications 1 à 3, caractérisés en ce qu'il s'agit des colorants suivants de formule structurale (I) dans laquelle W, R, n et A ont la définition indiquée dans la revendication 1:

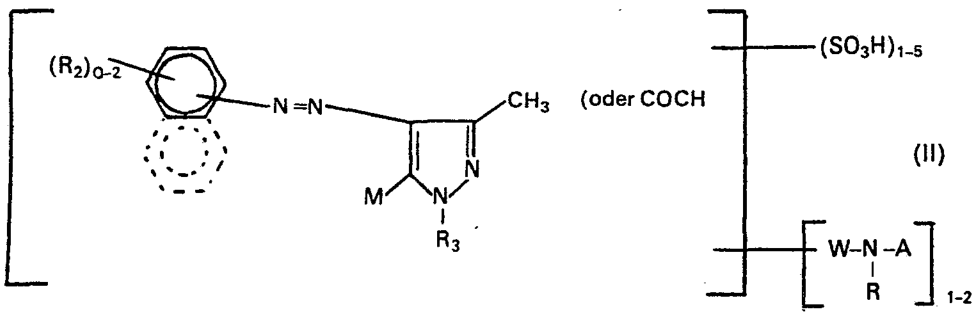

(II)

dans laquelle

M représente OH, $NH_2$, $NR_3R_4$, $OR_3$

$R_2$ est un groupe alkyle, alkoxy, halogène, notamment Cl,

$R_3$ et $R_4$ représentent l'hydrogène, un groupe alkyle, aryle, hétaryle, aralkyle, ou bien $R_3$ et $R_4$ forment conjointement un groupe alkylène en $C_4$–$C_6$ éventuellement interrompu par NH ou ;

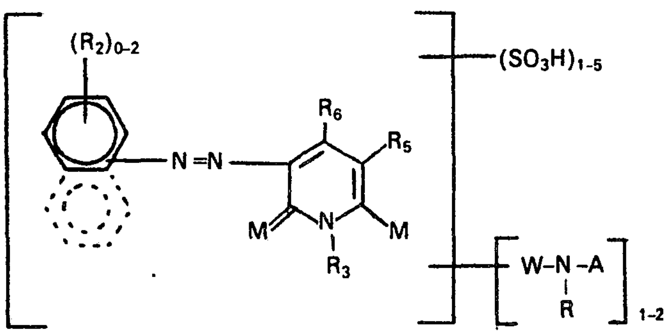

(III)

$R_5$ représente $-COOR_3$, $CONR_3R_4$, $-CN$, $-CH_2-SO_3H$, $SO_3H$ ou $-CH_2-NR_3R_4$,

$R_6$ représente $-M$, $-R_3$ ou $-R_5$,

M' représente O, $NR_3$

$R_3$ et $R_4$: représentant l'hydrogène ou un groupe alkyle, aryle, hétaryle, aralkyle, ou bien $R_3$ et $R_4$ forment conjointement un groupe alkylène en $C_4$–$C_6$ éventuellement interrompu par NH ou O.

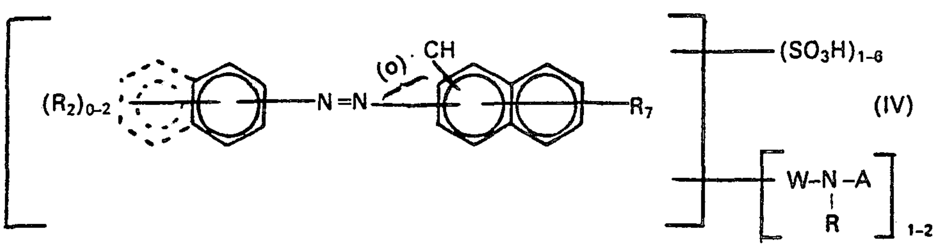

(IV)

$R_7$ représente l'hydrogène, un groupe $-NR_3-CO-R_8$, $-NR_3-SO_2-R_8$

o désigne la position ortho des restes correspondants

$R_3$ représente l'hydrogène, un groupe alkyle, aryle, hétaryle, aralkyle,

$R_8$ représente un groupe alkyle, aryle, hétaryle ou aralkyle.

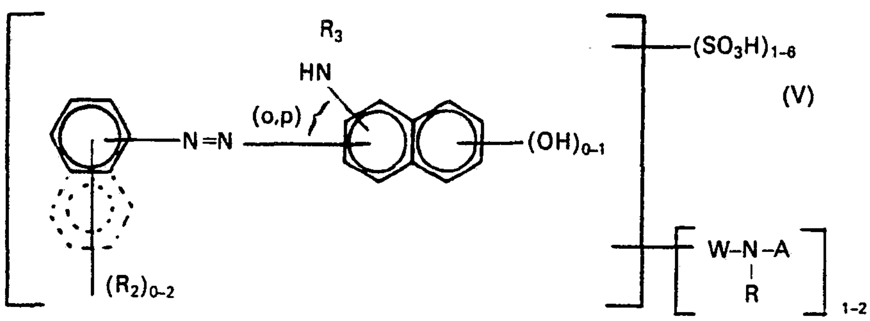

(V)

(o, p) = position ortho ou para des restes correspondants avec

$R_2$ = alkyle, alkoxy, halogène (notamment Cl)

$R_3$ = hydrogène, alkyle, aryle, hétaryle ou aralkyle.

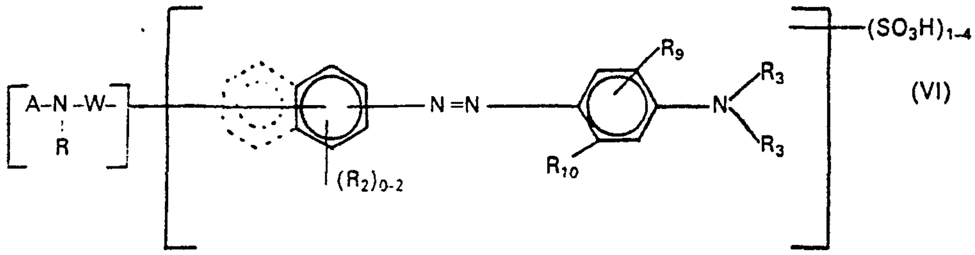

(VI)

$R_9$ et $R_{10}$ = hydrogène, $R_8$, $-OR_3$, halogène, $-NR_3R_4$, $-COOR_3$, $-NR_3-CO-R_4$, $-O-CO-R_4$, $-NR_3-SO_2-R_4$, $-O-SO_2-R_4$, $-NR_3-CO-NR_3R_4$ avec

$R_3$ et $R_4$ = hydrogène, alkyle, aryle, hétaryle, aralkyle, ou bien $R_3$ et $R_4$ forment conjointement un groupe alkylène en $C_4$–$C_6$ éventuellement interrompu par NH ou O et

$R_8$ = alkyle, aryle, hétaryle ou aralkyle.

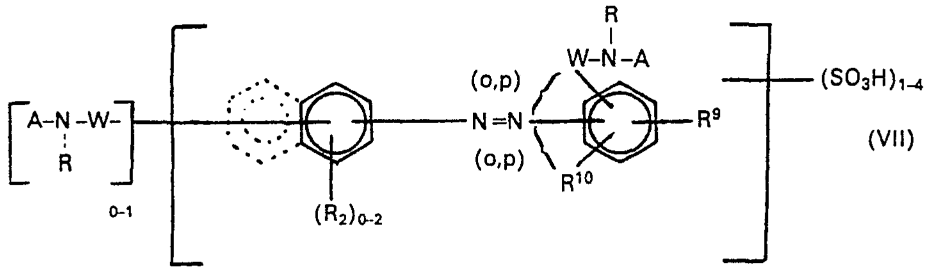

(VII)

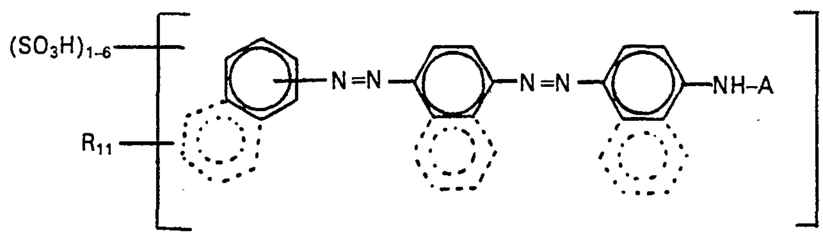

(VIIa)

$R_{11} = R_9$, $C_1$–$C_4$-Alkyl

avec

(o, p) = position ortho ou para des restes correspondants

$R_2$ = alkyle, alkoxy, halogène, et $R_9$ et $R_{10}$ ont la définition indiquée pour la formule VI

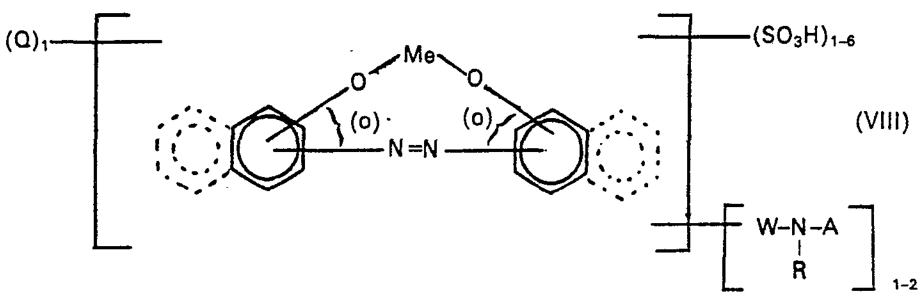

(VIII)

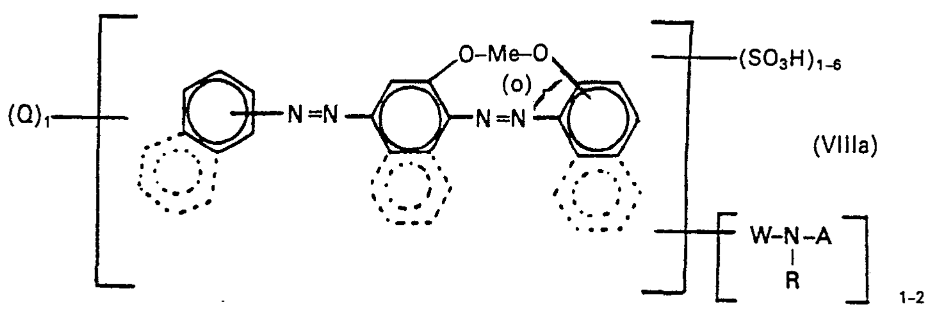

(VIIIa)

avec
(o) = position ortho des restes correspondants
Me = Cu, Cr,
Q = alkyle, alkoxy, halogène, $-NO_2$, Acylamino tel que $CH_3-CO-NR_3-$, $-COOR_3$, $-CONR_3R_4$, $-SO_2-NR_3R_4$
l = 0–4 et
$R_3$ et $R_4$ ont la définition indiquée pour la formule VI

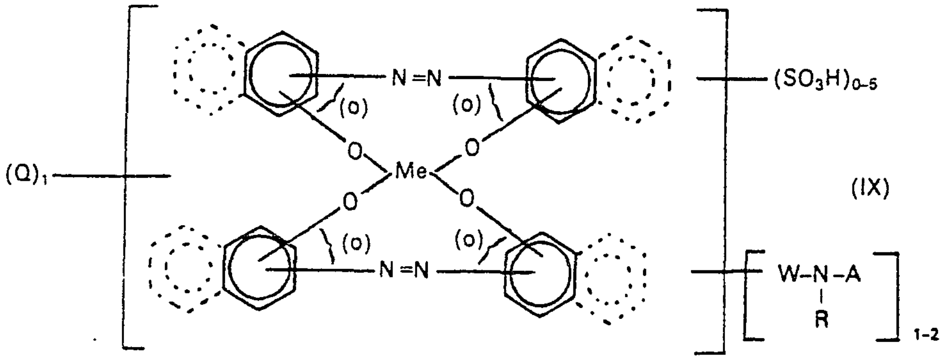

(IX)

Me = Co, Cr
l = 0–8
(o) = position ortho des substituants
Q = alkyle, alkoxy, halogène, $NO_2$, acylamino tel que $CH_3-CO-NR_3-$, $-COOR_3$, $-CONR_3R_4$, $-SO_2-NR_3R_4$ et
$R_3$ et $R_4$ ont la définition indiquée pour la formule VI

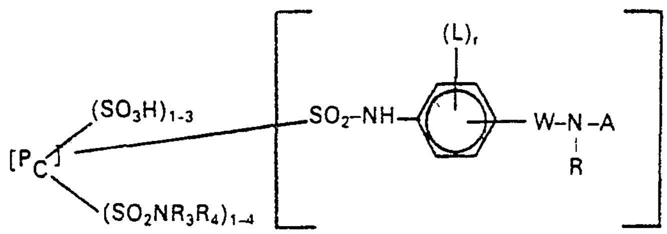

(X)

avec
$P_c$ = reste Cu/Ni-phthalocyanine
L = substituant, notamment sulfo ou carboxy
r = 0–4 et
$R_3$ et $R_4$ ont la définition indiquée pour la formule VI

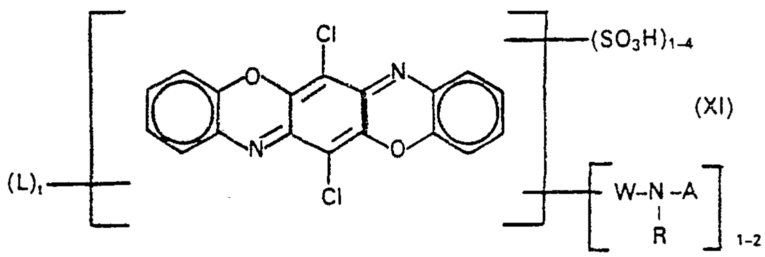

(XI)

avec
L = substituant, notamment halogène, alkyle en $C_{1-4}$, alkoxy en $C_{1-4}$ ou carboxy,
t = 0 à 3,

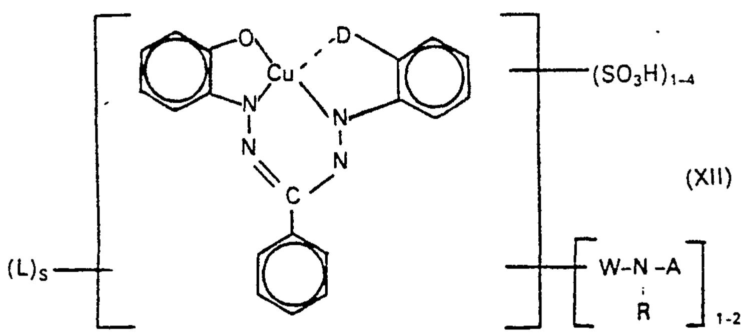

(XII)

avec

L = substituant, notamment halogène, alkyle en $C_{1-4}$, alkoxy en $C_{1-4}$, alkylsulfonyle, aminosulfonyle, restes phényle non condensés ou carboxy

S = 0–6

D = groupe apte à former un complexe tel que –OH, –COOH ou –$SO_3H$,

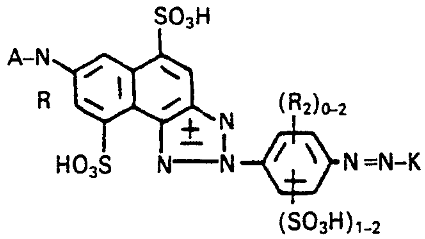

(XIII)

où

K = reste d'un copulant, de préférence d'un copulant de la série énol cyclique, comme la série pyridone ou la série pyrimidone,

$R_2$ = alkyle, alkoxy, halogène (notamment Cl)

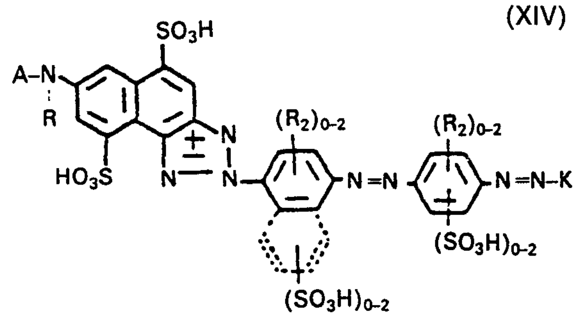

(XIV)

où

$R_2$ = alkyle, alkoxy, halogène (notamment Cl)

K = reste d'un copulant

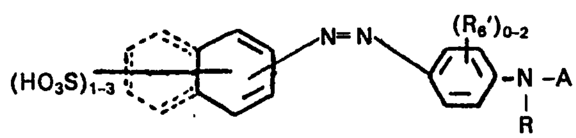

(XV)

où

$R'_6$ = hydrogène, alkyle, aryle, hétaryle, aralkyle, $-COOR_3$, $-CONR_3R_4$, $-SO_3H$, –OH, $-NH_2$, $-NR_3R_4$, $-OR_3$, avec $R_3$ et $R_4$ = hydrogène, alkyle, aryle, hétaryle, aralkyle

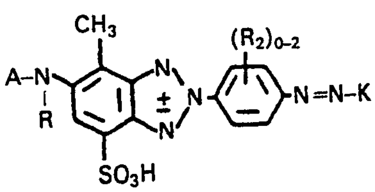

(XVI)

où

$R_2$ = alkyle, alkoxy, halogène (notamment Cl)

K = reste d'un copulant

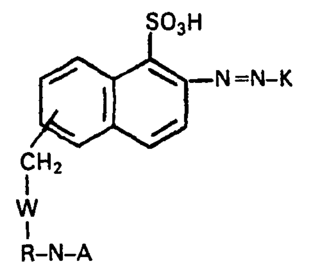

(XVII)

où

K = reste d'un copulant

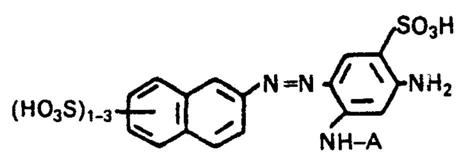

(XVIIa)

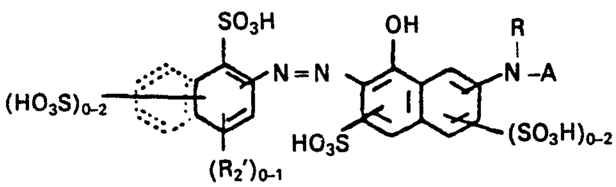

(XVIII)

où

$R'_2$ = alkyle, alkoxy, hydroxy, halogène, un reste arylazo ou un reste arylazométhine

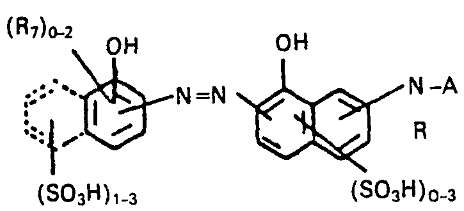

(XIX)

où
$R_7$ = hydrogène, $NR_3$–$COR_8$, –$NR_3SO_2R_8$, avec
$R_3$ = hydrogène, alkyle, aryle, hétaryle, aralkyle,
$R_8$ = alkyle, aryle, hétaryle ou aralkyle

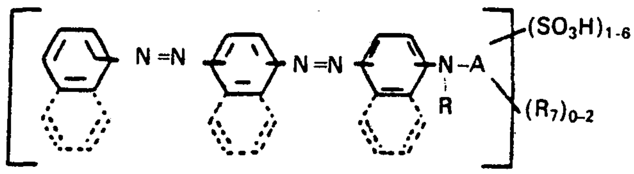
(XX)

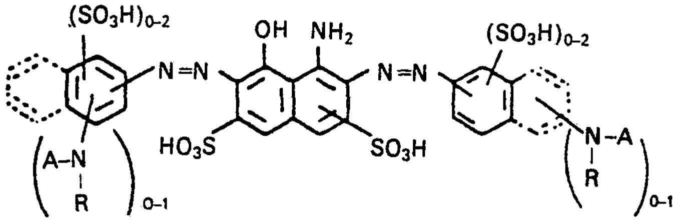
(XXI)

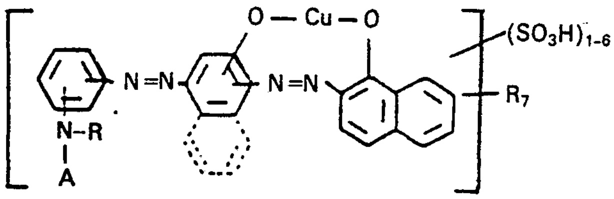
(XXII)

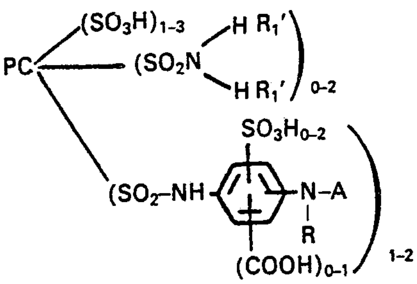
(XXIII)

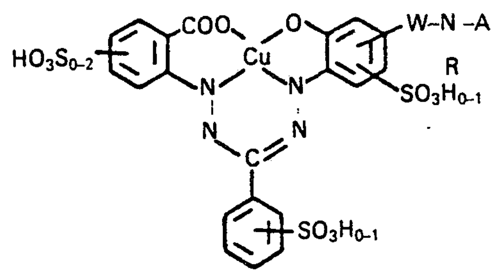
(XXIV)

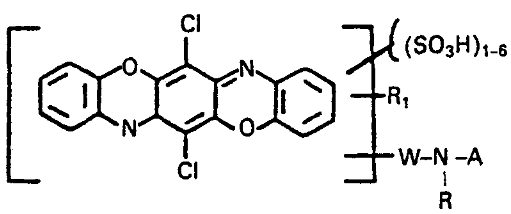
(XXV)

où
$R_7$ = hydrogène, –$NR_3$–$COR_8$, –$NR_3$–$SO_2$–$R_8$, avec
$R_3$ = hydrogène, alkyle, aryle, hétaryle, aralkyle
$R_8$ = alkyle, aryle, hétaryle, aralkyle et où
$R_1$ = hydrogène ou alkyle
$R'_1$ = alkyle

5. Colorants réactifs suivant les revendications 1 à 4, caractérisés en ce qu'il s'agit des colorants suivants de formule structurale I dans laquelle W est une liaison directe, n est égal à 1 et A a la définition indiquée dans la revendication 1.

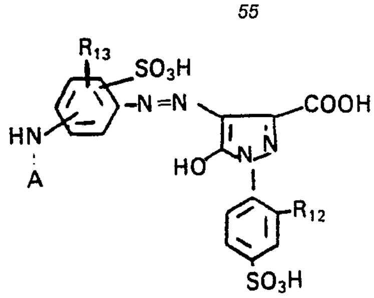
(XXVI)

avec

$R_{12}$ = H, $CH_3$, Cl

$R_{13}$ = H, $CH_3$, Cl

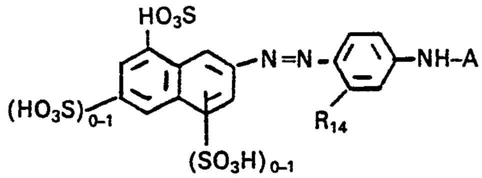

(XXVII)

avec

$R_{14}$ = H, $CH_3$, $OCH_3$, $NHCOCH_3$, NH–$CONH_2$

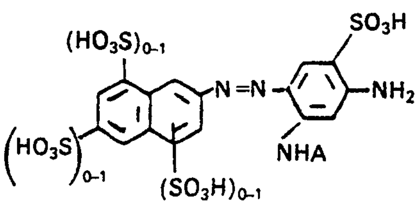

(XXVIII)

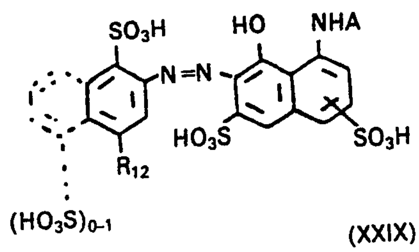

(XXIX)

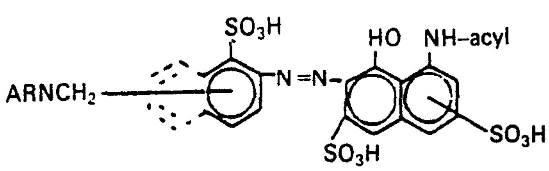

(XXX)

où

acyle = reste acyle, notamment formyle (alkyle en $C_1$–$C_4$) carbonyle, arylcarbonyle et de préférence phényl-carbonyle éventuellement substitué par un reste alkyle en $C_1$–$C_4$ OH, $SO_3H$, COOH

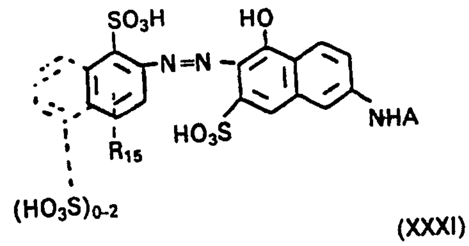

(XXXI)

$R_{15}$ = $R_{13}$, $CH_3$, alkoxy en $C_1$–$C_4$, acylamino

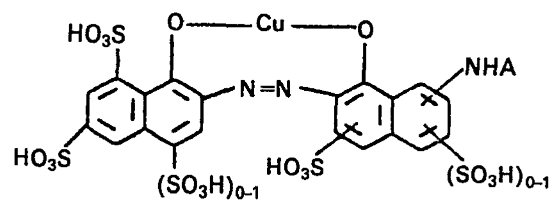

(XXXII)

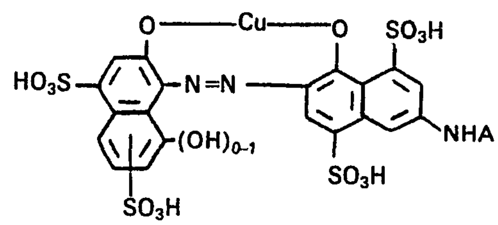

(XXXIII)

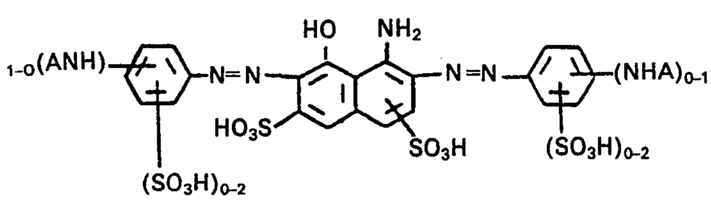

(XXXIV)

le reste $\underset{H}{AN}$ – de la molécule ne devant être présent qu'une seule fois dans la formuel (XXXIV),

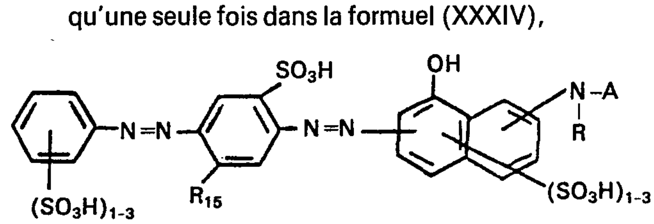

(XXXV)

6. Procédé de production de colorants réactifs de formule

$$D\left[W-\underset{R}{N}-A\right]_n \qquad (I)$$

dans laquelle:

D est le reste d'un colorant organique de la série mono- ou polyazo, complexe de métal azo, phthalocyanine, formazane, azométhine, dioxazine, phénazine, stilbène, triphénylméthane, xanthène, thioxanthone ou nitroaryle,

W est une liaison directe ou un chaînon de pontage,

R est l'hydrogène ou un groupe alkyle,

A est un reste de formule

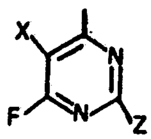

(II)

dans laquelle

X est l'hydrogène ou le chlore,

Z est un groupe $CCl_3$, $CHCl_2$ ou $CH_2Cl$ et

n a la valeur 1 ou 2, caractérisé en ce que

a) on condense des colorants de formule

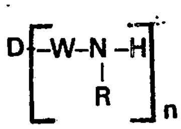

(IV)

dans laquelle D, W, R et n ont la définition indiquée ci-dessus, avec n moles de l'halogénopyrimidine de formule

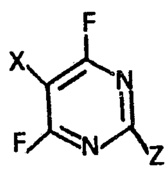

(V)

dans laquelle X et Z ont la définition indiquée ci-dessus.

7. Composés de formule

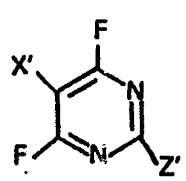

(IV)

dans laquelle

X' = hydrogène ou chlore

Z' = $CCl_3$, $CHCl_2$, ou $CH_2Cl$ sous réserve que, lorsque X' représente le chlore, Z' doit représenter $CHCl_2$ ou $CH_2Cl$.

8. Procédé de production de composés de formule

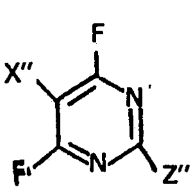

(IVa)

dans laquelle

X'' = hydrogène ou chlore

Z'' = $CCl_3$ ou $CH_2Cl$ caractérisé en ce qu'on fait réagir des chloropyrimidines de formule

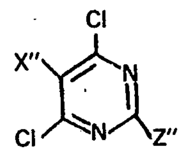

(V)

dans laquelle X'' et Z'' ont la définition indiquée ci-dessus, dans un solvant inerte, notamment dans la tétraméthylènesulfone, avec au moins la double quantité molaire d'un fluorure alcalin pendant 2 à 10 heures à 140–210 °C, notamment à 160–200 °C, et on sépare le composant désiré.

9. Procédé de production de la 2-dichlorométhyl-4,6-difluoro -5- chloropyrimidine, caractérisé en ce qu'on fait réagir la 2-dichlorométhyl-4,5,6-trichloropyrimidine avec l'acide fluorhydrique anhydre sous pression élevée et à température élevée et on sépare la 2-dichloro-méthyl-4,6-difluoro -5- chloropyrimidine formée.

10. Utilisation de colorants suivant les revendications 1 à 5 pour la teinture et l'impression de substrats.

## Claims

1. Reactive dyestuffs of the formula

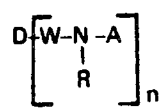

(I)

wherein

D is the radical of an organic dyestuff of the mono- or poly-azo, metal complexazo, phthalocyanine, formazan, azomethine, dioxazine, phenazine, stilbene, triphenylmethane, xanthene, thioxanthone or nitroaryl series,

W is a direct bond or a bridge member,

R is hydrogen or alkyl,

A is a radical of the formula

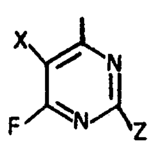

(II)

wherein

X = hydrogen or chlorine and

Z = $CCl_3$, $CHCl_2$ or $CH_2Cl$, and

n is 1 or 2.

2. Reactive dyestuffs according to Claim 1, characterised in that the radical A has one of the following meanings a) to d):

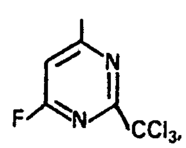

a

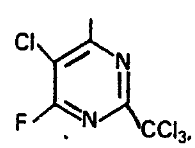

b

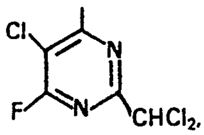

c

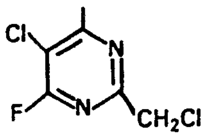

d

(III)

3. Reactive dyestuffs according to Claim 1 to 2, characterised in that W represents a direct bond or one of the following bridge members:

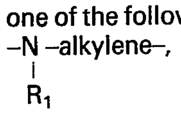

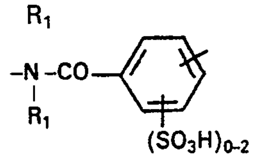

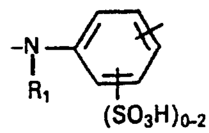

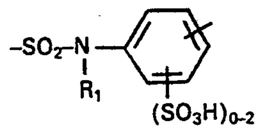

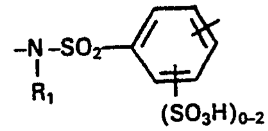

–O–alkylene–,

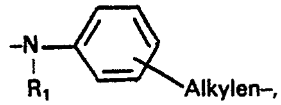

–S–alkylene, –alkylene–, –alkylene–CO– and –alkylene–$SO_2$–, wherein

$R_1$ represents hydrogen or alkyl and alkylene denotes an alkylene radical with 1 to 4 C atoms.

4. Reactive dyestuffs according to Claim 1 to 3, characterised in that they are the following dyestuffs of the structural formula (I), wherein W, R, n and A have the meaning given in Claim 1:

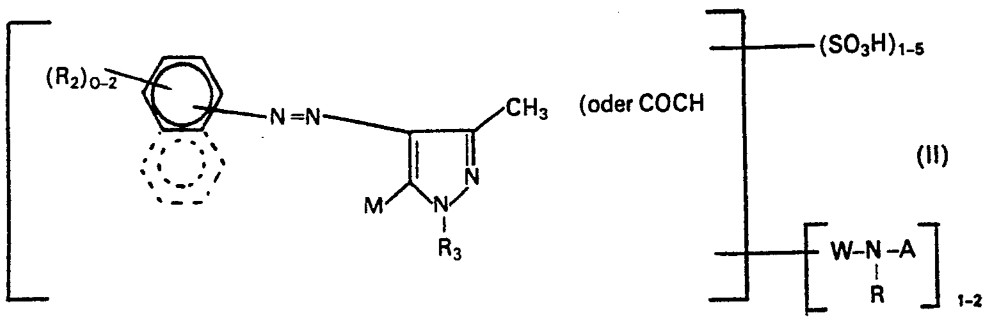

(II)

wherein

M = OH, $NH_2$, $NR_3R_4$ or $OR_3$,

$R_2$ = alkyl, alkoxy or halogen, in particular Cl, and

$R_3$ and $R_4$ = hydrogen, alkyl, aryl, hetaryl or aralkyl, or wherein

$R_3$ and $R_4$ together represent $C_4$–$C_6$-alkylene which is optionally interrupted by NH or O.

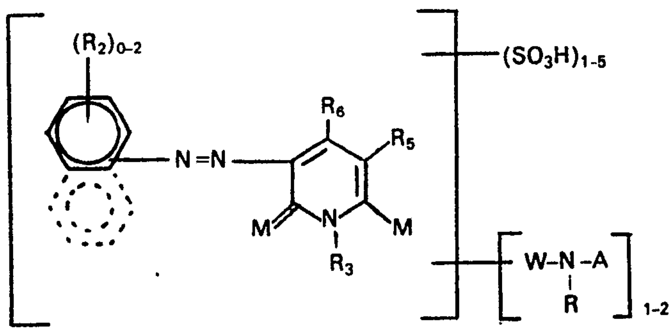

(III)

$R_5$ = –$COOR_3$, –$CONR_3R_4$, –CN, –$CH_2$–$SO_3H$, $SO_3H$ or –$CH_2$–$NR_3R_4$,

$R_6$ = –M, –$R_3$ or –$R_5$ and

M' = O or $NR_3$, wherein

$R_3$ and $R_4$ = hydrogen, alkyl, aryl, hetaryl or aralkyl, or wherein

$R_3$ and $R_4$ together represent $C_4$–$C_6$-alkylene which is optionally interrupted by NH or O.

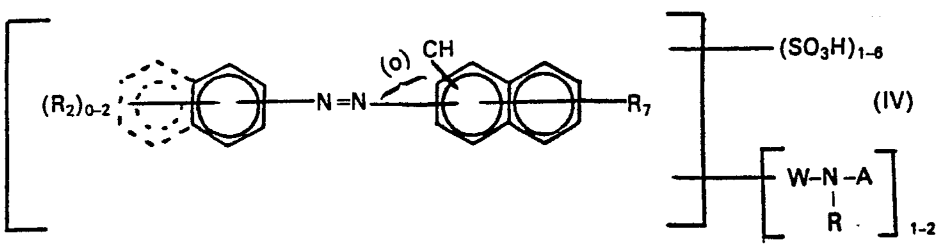

(IV)

$R_7$ = hydrogen, $-NR_3-CO-R_8$ or $-NR_3-SO_2-R_8$ and
o = the ortho-position of the particular radicals, wherein
$R_3$ = hydrogen, alkyl, aryl, hetaryl or aralkyl and
$R_8$ = alkyl, aryl, hetaryl or aralkyl

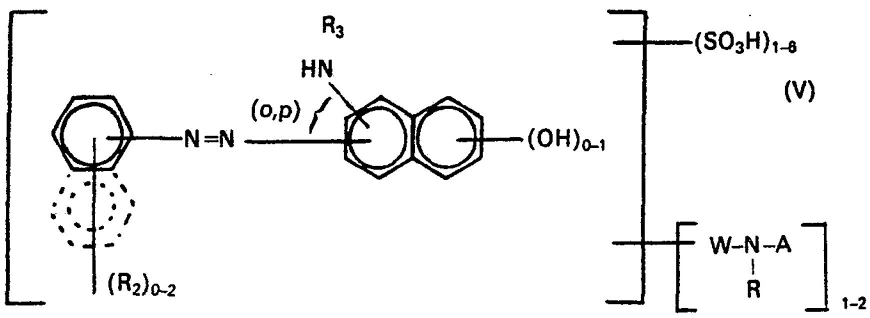

(V)

(o, p) = the ortho or para-position of the particular radicals,
$R_2$ = alkyl, alkoxy or halogen (in particular Cl) and
$R_3$ = hydrogen, alkyl, aryl, hetaryl or aralkyl.

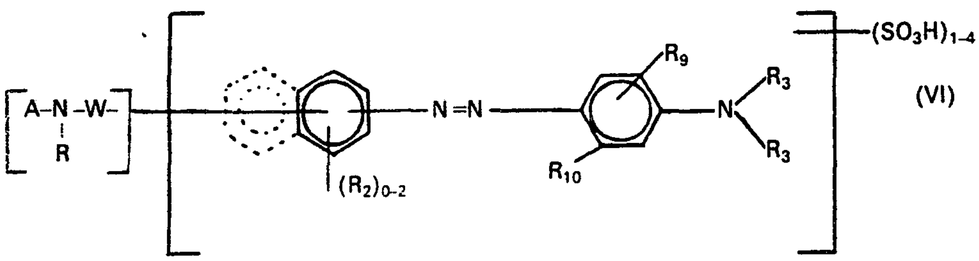

(VI)

$R_9$ and $R_{10}$ = hydrogen, $R_8$, $-OR_3$, halogen, $-NR_3R_4$, $-COOR_3$, $-NR_3-CO-R_4$, $-O-CO-R_4$, $-NR_3-SO_2-R_4$, $-O-SO_2-R_4$ or $-NR_3-CO-NR_3R_4$,
$R_3$ and $R_4$ = hydrogen, alkyl, aryl, hetaryl or aralkyl, or wherein
$R_3$ and $R_4$ together represent $C_4-C_6$-alkylene which is optionally interrupted by NH or O, and
$R_8$ = alkyl, aryl, hetaryl or aralkyl.

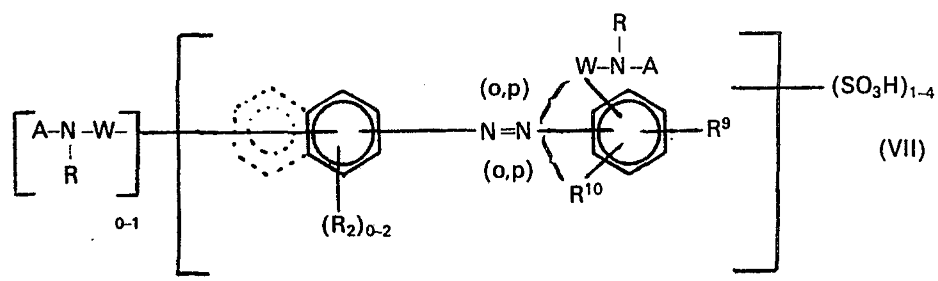

(VII)

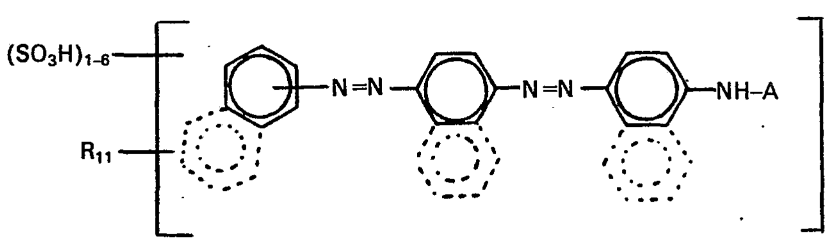

(VIIa)

$R_{11}$ = $R_9$ or $C_1-C_4$-alkyl, wherein
(o, p) = the ortho- or para-position of the particular radicals and
$R_2$ = alkyl, alkoxy or halogen, and wherein
$R_9$ and $R_{10}$ have the meaning given under formula VI,

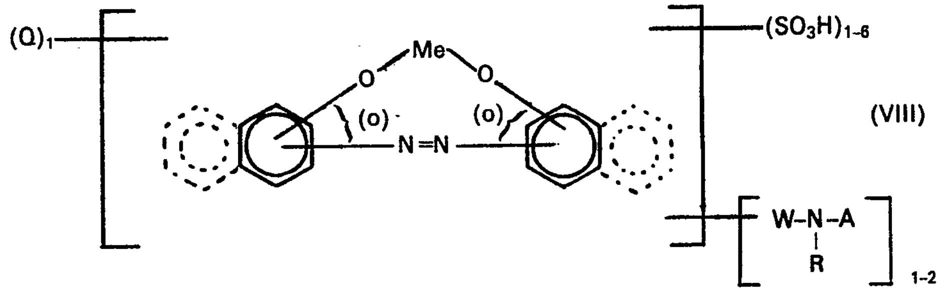

(VIII)

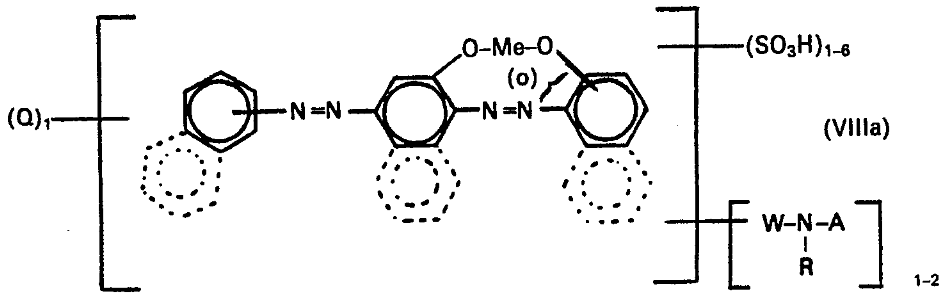

(VIIIa)

wherein
(o) = the ortho-position of the particular radicals,
Me = Cu or Cr,
Q = alkyl, alkoxy, halogen, $-NO_2$, acylamino, such as $CH_3-CO-NR_3-$, $-COOR_3$, $-CONR_3R_4$ or $-SO_2-NR_3R_4$ and
1 = 0–4, and wherein
$R_3$ and $R_4$ have the meaning given under formula (VI)

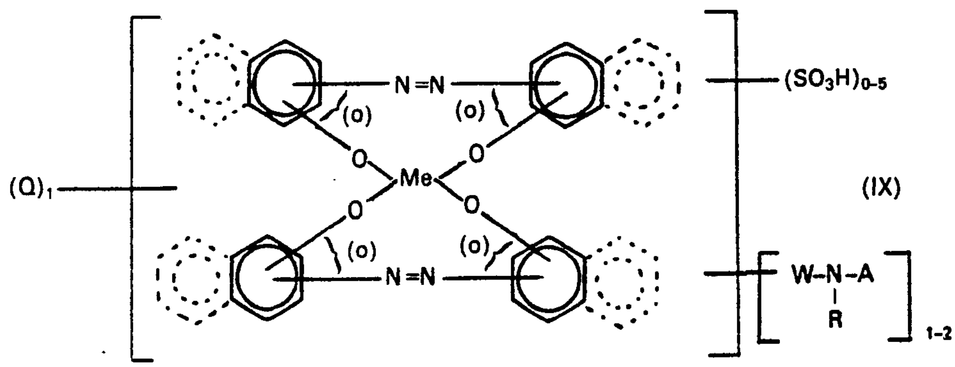

(IX)

Me = Co, Cr
1 = 0–8
(o) = the ortho-position of the substituents and
Q = alkyl, alkoxy, halogen, $NO_2$, acylamino, such as $CH_3-CO-NR_3-$, $-COOR_3$, $-CONR_3R_4$ or $-SO_2-NR_3R_4$, and wherein
$R_3$ and $R_4$ have the meaning given under formula (VI)

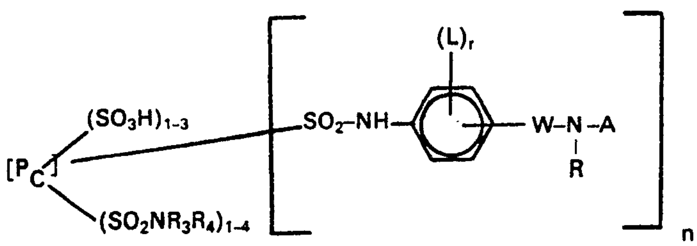

(X)

wherein
$P_c$ = a Cu/Ni phthalocyanine radical,
L = a substituent, in particular sulpho or carboxyl and
r = 0–4, and wherein
$R_3$ and $R_4$ have the meaning given under formula (VI),

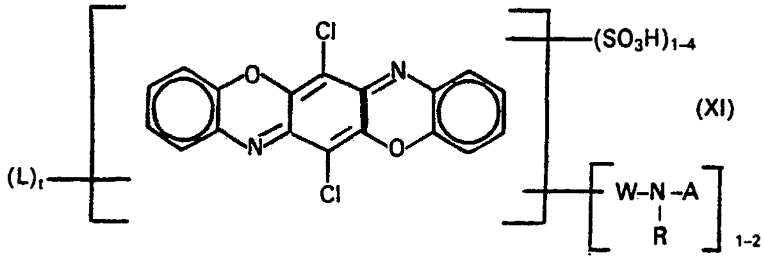

(XI)

wherein

L = a substituent, in particular halogen, $C_{1-4}$-alkyl, $C_{1-4}$-alkoxy or carboxyl and

t = 0 to 3,

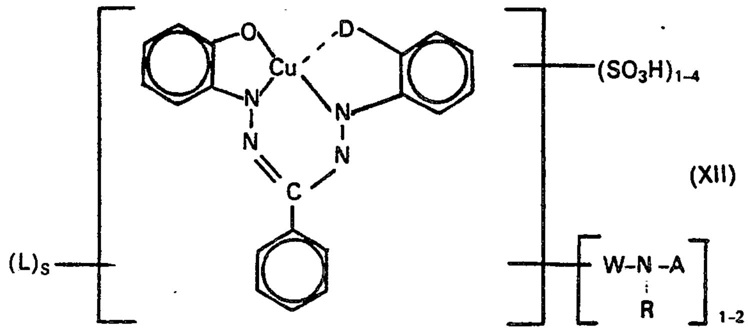

(XII)

wherein

L = a substituent, in particular halogen, $C_{1-4}$-alkyl, $C_{1-4}$-alkoxy, alkylsulphonyl, aminosulphonyl, non-fused phenyl radicals or carboxyl,

S = 0–6 and

D = a group capable of complex formation, such as –OH, –COOH or –$SO_3H$,

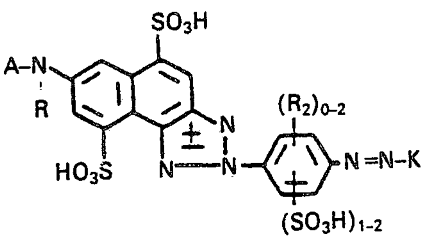

(XIII)

wherein

K = the radical of a coupling component, preferably of a coupling component of the cyclic enol series, such as the pyridone or pyrimidone series, and

$R_2$ = alkyl, alkoxy or halogen (in particular Cl)

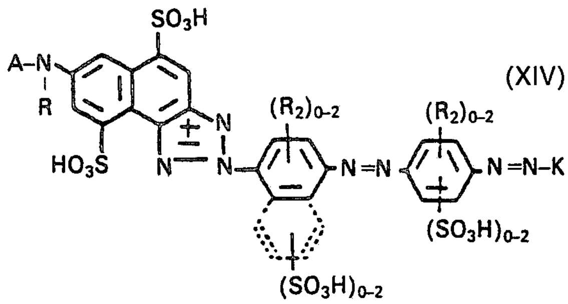

(XIV)

wherein

$R_2$ = alkyl, alkoxy or halogen (in particular Cl) and

K = the radical of a coupling component

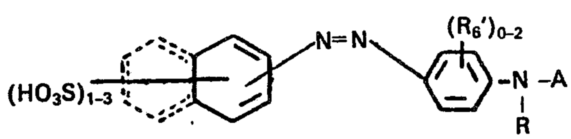

(XV)

wherein

$R'_6$ = hydrogen, alkyl, aryl, hetaryl, aralkyl, –$COOR_3$, –$CONR_3R_4$, –$SO_3H$, –OH, –$NH_2$, –$NR_3R_4$, –$OR_3$, wherein

$R_3$ and $R_4$ = hydrogen, alkyl, aryl, hetaryl or aralkyl

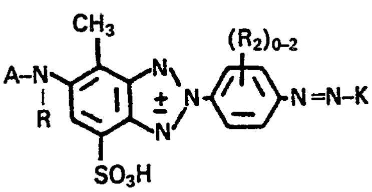

(XVI)

wherein

$R_2$ = alkyl, alkoxy or halogen (in particular Cl) and

K = the radical of a coupling component

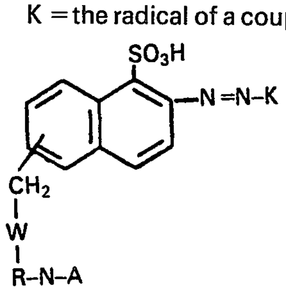

(XVII)

wherein

K = the radical of a coupling component

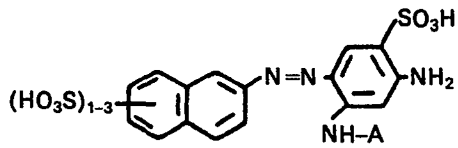

(XVIIa)

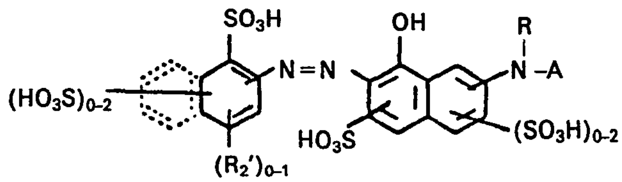

(XVIII)

wherein

R'$_2$ = alkyl, alkoxy, hydroxyl, halogen, an arylazo radical or an arylazomethine radical.

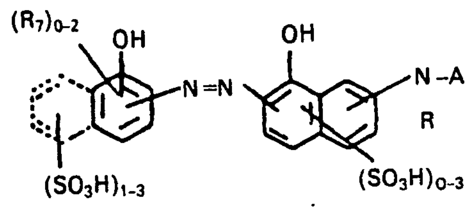

(XIX)

wherein

$R_7$ = hydrogen, $NR_3$–$COR_8$ or –$NR_3SO_2$–$R_8$, wherein

$R_3$ = hydrogen, alkyl, aryl, hetaryl or aralkyl and

$R_8$ = alkyl, aryl, hetaryl or aralkyl

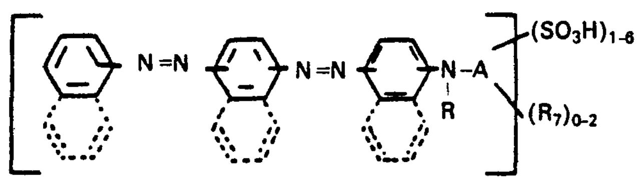

(XX)

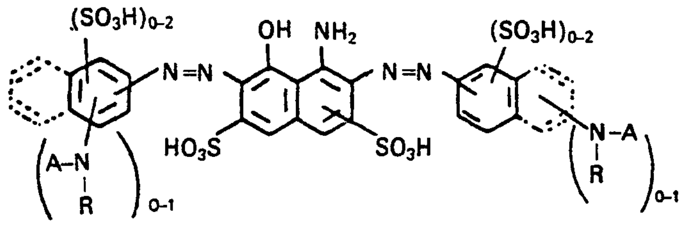

(XXI)

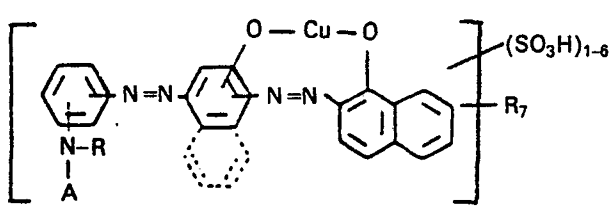

(XXII)

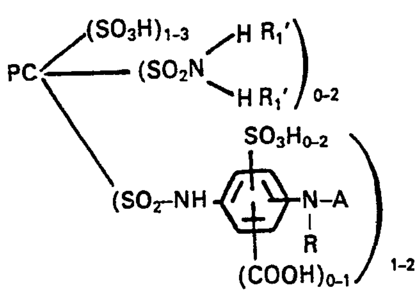

(XXIII)

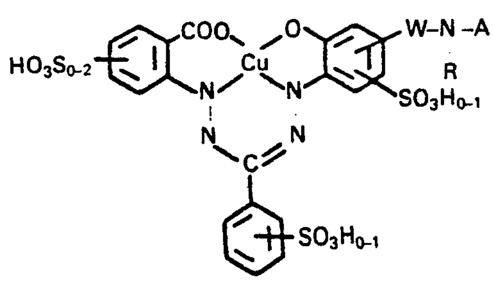

(XXIV)

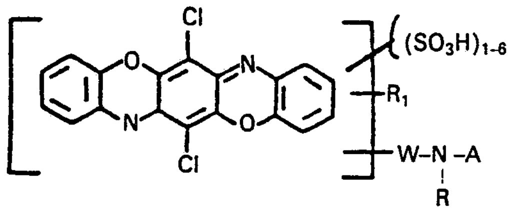

(XXV)

wherein

$R_7$ = hydrogen, $-NR_3-COR_8$ or $-NR_3-SO_2-R_8$, wherein

$R_3$ = hydrogen, alkyl, aryl, hetaryl or aralkyl and
$R_8$ = alkyl, aryl, hetaryl or aralkyl, and wherein
$R_1$ = hydrogen or alkyl and
$R'_1$ = alkyl.

5. Reactive dyestuffs according to Claim 1 to 4, characterised in that they are the following dyestuffs of the structural formula (I), wherein

W represents a direct bond,
n = 1 and
A has the meaning given in Claim 1:

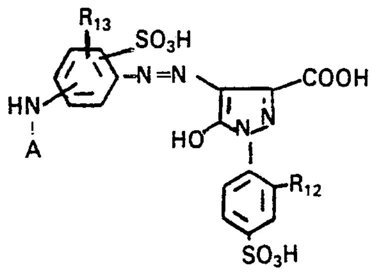

(XXVI)

wherein

$R_{12}$ = H, $CH_3$ or Cl and
$R_{13}$ = H, $CH_3$ or Cl;

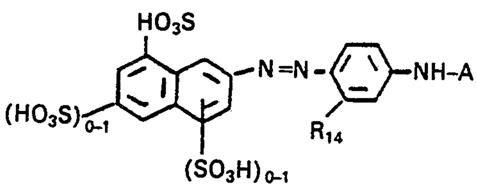

(XXVII)

wherein

$R_{14}$ = H, $CH_3$, $OCH_3$, $NHCOCH_3$ or $NH-CONH_2$

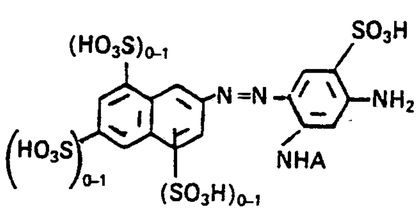

(XXVIII)

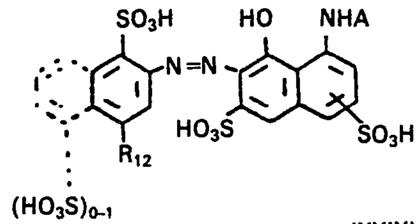

(XXIX)

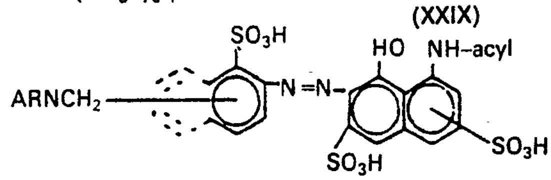

(XXX)

wherein

acyl = an acyl radical, in particular formyl, $C_1-C_4$-alkylcarbonyl, arylcarbonyl and, preferably, phenylcarbonyl which is optionally substituted by $C_1-C_4$-alkyl, OH, $SO_3H$ or COOH.

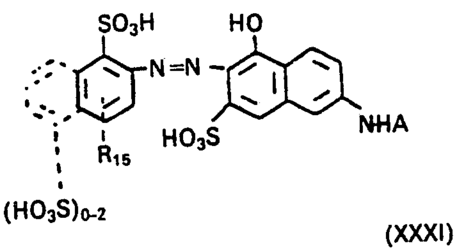

(XXXI)

$R_{15}$ = $R_{13}$, $CH_3$, $C_1-C_4$-alkoxy or acylamino

(XXXII)

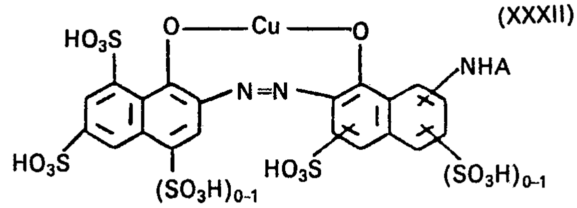

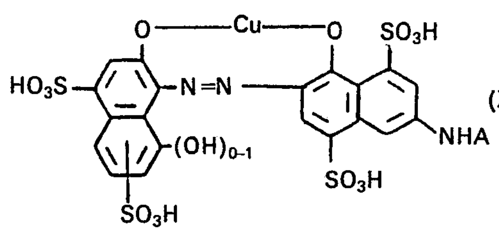

(XXXIII)

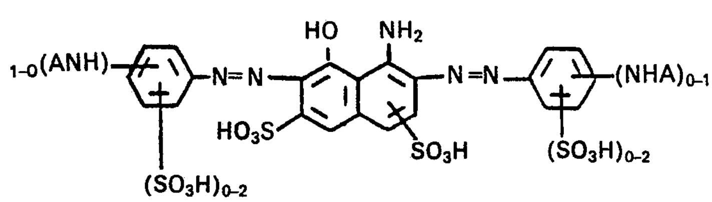

(XXXIV)

wherein
in formula (XXXIV) the radical A -should only
|
NH
be present once in the molecule,

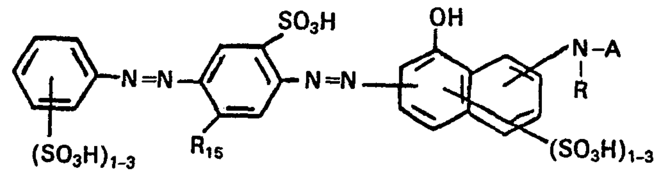

(XXXV)

6. Process for the preparation of reactive dyestuffs of the formula

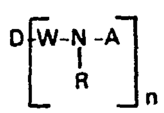

wherein
D = the radical of an organic dyestuff of the mono- or poly-azo, metal complexazo, phthalocyanine, formazan, azomethine, dioxazine, phenazine, stilbene, triphenylmethane, xanthene, thioxanthone or nitroaryl series,
W = a direct bond or a bridge member,
R = hydrogen or alkyl,
A = a radical of the formula

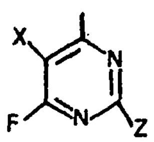

(II)

wherein
X = hydrogen or chlorine and
$Z = CCl_3$, $CHCl_2$ or $CH_2Cl$, and
n = 1 or 2, characterised in that
a) either dyestuffs of the formula

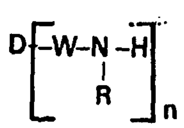

(IV)

wherein
D, W, R and n have the abovementioned meaning, are subjected to a condensation reaction with n moles of the halogenopyrimidine of the formula

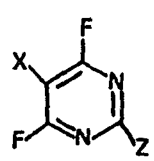

(V)

wherein
X and Z have the abovementioned meaning.
7. Compounds of the formula

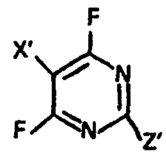

(IV)

wherein
X′ = hydrogen or chlorine and
Z′ = $CCl_3$, $CHCl_2$ or $CH_2Cl$, with the proviso that, if X′ represents chlorine, Z′ must represent $CHCl_2$ or $CH_2Cl$.
8. Process for the preparation of compounds of the formula

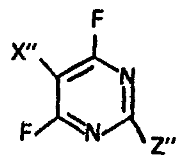

(IVa)

wherein
X″ = hydrogen or chlorine and
Z″ = $CCl_3$ or $CH_2Cl$, characterised in that chloropyrimidines of the formula

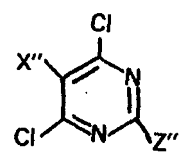

(V)

wherein
X″ and Z″ have the abovementioned meaning, are reacted with at least twice the molar amount of an alkali metal fluoride in an inert solvent, in particular in tetramethylene sulphone, at 140 to 210 °C, in particular at 160 to 200 °C, for 2 to 10 hours and the desired component is separated off.

9. Process for the preparation of 2-dichloromethyl-4,6-difluoro -5- chloropyrimidine, characterised in that 2-dichloromethyl-4,5,6-trichloropyrimidine is reacted with anhydrous hydrofluoric acid under increased pressure and at elevated temperature and the 2-dichloromethyl-4,6-difluoro -5- chloropyrimidine formed is separated off.
10. Use of dyestuffs according to Claim 1 to 5 for dyeing and printing substrates.